(19) Europäisches Patentamt
European Patent Office
Office européen des brevets

(11) EP 3 753 962 A1

(12) # EUROPEAN PATENT APPLICATION
published in accordance with Art. 153(4) EPC

(43) Date of publication:
**23.12.2020 Bulletin 2020/52**

(21) Application number: **19753701.2**

(22) Date of filing: **12.02.2019**

(51) Int Cl.:
***C08F 210/02*** *(2006.01)* ***C08F 8/24*** *(2006.01)*
***C08L 23/08*** *(2006.01)* ***C08L 23/28*** *(2006.01)*

(86) International application number:
**PCT/JP2019/004784**

(87) International publication number:
**WO 2019/159863 (22.08.2019 Gazette 2019/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2018 JP 2018022837**

(71) Applicant: **SUMITOMO CHEMICAL COMPANY LIMITED**
**Chuo-ku**
**Tokyo 104-8260 (JP)**

(72) Inventors:
- **ISHIWATA, Koji**
  **Osaka-shi, Osaka 554-8558 (JP)**
- **SAKURADA, Kenta**
  **Ichihara-shi, Chiba 299-0195 (JP)**

(74) Representative: **Vossius & Partner Patentanwälte Rechtsanwälte mbB**
**Siebertstrasse 3**
**81675 München (DE)**

(54) **POLYMER, RESIN COMPOSITION, MOLDED ARTICLE, AND PRODUCTION METHOD FOR POLYMER**

(57) There is provided a polymer which is excellent in the water-repellent property and the oil-repellent property and with which a resin composition with excellent water-repellent property and oil-repellent property can be obtained even in case where an amount of the polymer mixed with another resin is not large.

A polymer that comprises a structural unit (A) derived from ethylene, a structural unit (B) represented by a particular formula (1), and at least one kind of structural unit (C) selected from the group consisting of structural units represented by a particular formula (2) and a structural unit represented by a particular formula (3), in which the number of the structural unit (A) is not less than 70% but not more than 99%, and the total number of the structural unit (B) and the structural unit (C) is not less than 1% but not more than 30%, where the total number of the structural unit (A), the structural unit (B), and the structural unit (C) is 100%, and the number of the structural unit (B) is not less than 1% but not more than 99%, and the number of the structural unit (C) is not less than 1% but not more than 99%, where the total number of the structural unit (B) and the structural unit (C) is 100%.

EP 3 753 962 A1

[Fig. 1]

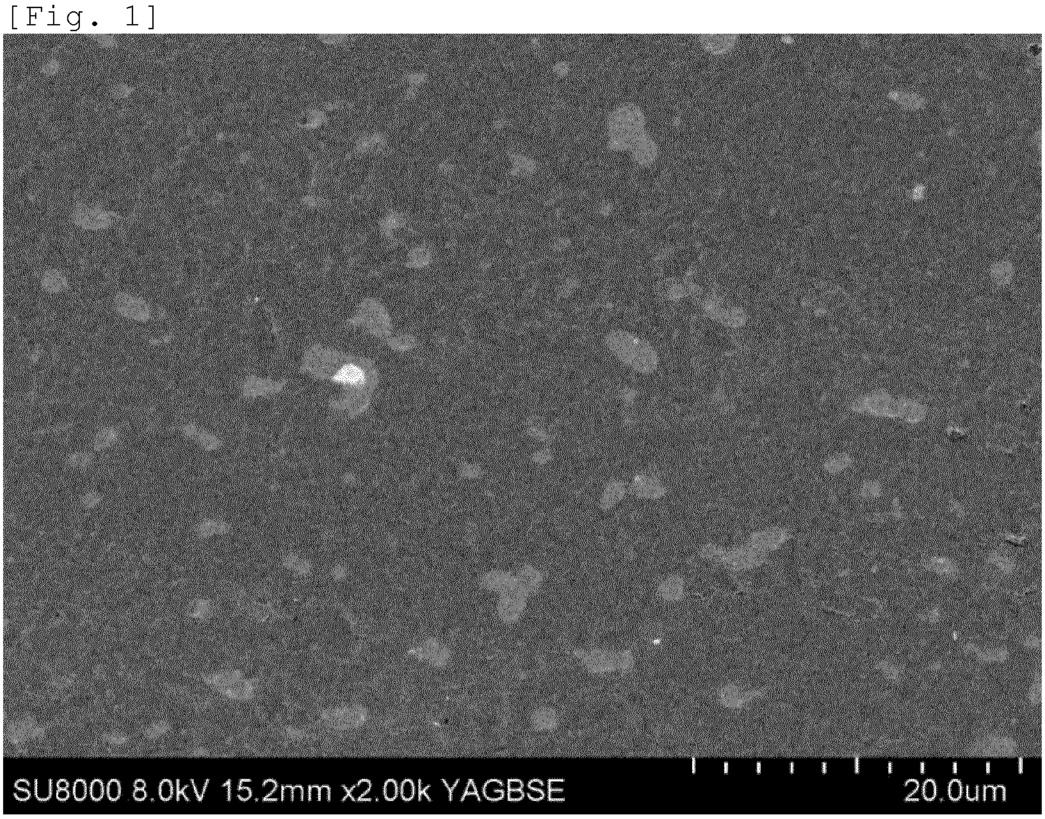

## Description

TECHNICAL FIELD

The present invention relates to a polymer, a resin composition, a molded article and a production method for the polymer.

BACKGROUND ART

Conventionally, it has been known that polytetrafluoroethylene exhibits a water-repellent property and an oil-repellent property (for example, see Patent Document 1).

PRIOR ART DOCUMENTS

PATENT DOCUMENT

Patent Document 1: JP A-6-25609

SUMMARY OF THE INVENTION

PROBLEMS TO BE SOLVED BY THE INVENTION

Recently, there has been a demand for further improvement of the water-repellent property and the oil-repellent property.

In view of this, an object of the present invention is to provide a polymer which is excellent in the water-repellent property and the oil-repellent property and with which a resin composition with excellent water-repellent property and oil-repellent property can be obtained even in case where an amount of the polymer mixed with another resin is not large.

MEANS FOR SOLVING THE PROBLEMS

To solve the above problems, the present invention provides the following [1] to [11].

[1] A polymer including a structural unit (A) derived from ethylene, a structural unit (B) represented by Formula (1) below, and at least one kind of structural unit (C) selected from the group consisting of structural units represented by Formula (2) below and a structural unit represented by Formula (3) below,
in which the number of the structural unit (A) is not less than 70% but not more than 99%, and the total number of the structural unit (B) and the structural unit (C) is not less than 1% but not more than 30%, where the total number of the structural unit (A), the structural unit (B), and the structural unit (C) is 100%, and
in which the number of the structural unit (B) is not less than 1% but not more than 99%, and the number of the structural unit (C) is not less than 1% but not more than 99%, where the total number of the structural unit (B) and the structural unit (C) is 100%.

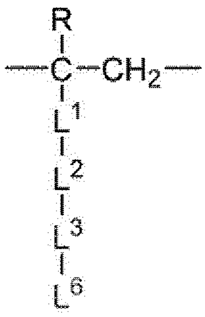

Formula (1)

(In Formula (1),

R is a hydrogen atom or a methyl group,
$L^1$ is -CO-O-, -O-CO-, or -O-,

$L^2$ is a single bond, $-CH_2-$, $-CH_2-CH_2-$, $-CH_2-CH_2-CH_2-$, - $CH_2-CH(OH)-CH_2-$, or $-CH_2-CH(CH_2OH)-$,
$L^3$ is a single bond, -CO-O-, -O-CO-, -O-,-CO-NH-, - NH-CO-, -CO-NH-CO-, -NH-CO-NH-, -NH-, or $-N(CH_3)-$,
$L^6$ is - $(CH_2)_n-(R^{f2}O)_p-R^{f1}$,
$R^{f1}$ is a $C_1$ to $C_{15}$ alkyl group in which one or more hydrogen atoms are substituted with one or more fluorine atoms,
$R^{f2}$ is a $C_1$ to $C_{15}$ alkylene group in which one or more hydrogen atoms are substituted with one or more fluorine atoms,
n is an integer not less than 0 but not more than 10, and p is an integer not less than 0 but not more than 15.
If p is an integer equal to or more than 2, the plurality of $-(R^{f2}O)-$ may be identical with each other or different from each other.
Each of the chemical formulae listed in $L^1$, $L^2$, and $L^3$ is such that the left side of the chemical formula corresponds to the upper side of Formula (1) and the right side of the chemical formula corresponds to the lower side of Formula (1).)

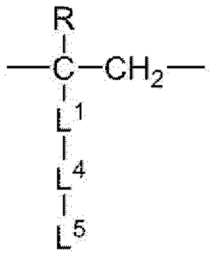

Formula (2)

(In Formula (2),

R is a hydrogen atom or a methyl group,
$L^1$ is -CO-O-, -O-CO-, or -O-,
$L^4$ is a single bond or a $C_1$ to $C_8$ alkylene group,
$L^5$ is a hydrogen atom, an epoxy group, $-CH(OH)-CH_2OH$, a carboxy group, a hydroxy group, an amino group, or a $C_1$ to $C_4$ alkyl amino group.
Each of the chemical formulae listed in $L^1$ is such that the left side of the chemical formula corresponds to the upper side of Formula (2) and the right side of the chemical formula corresponds to the lower side of Formula (2).)

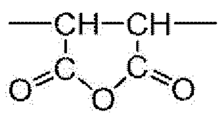

Formula (3)

[2] The polymer according to [1], in which a content of the structural unit (B) is 30 wt% or more where the total amount of the structural unit (A), the structural unit (B), and the structural unit (C) is 100 wt%.
[3] The polymer according to [1] or [2], in which $R^{f1}$ constituting $L^6$ in structural unit (B) represented by Formula (1) is $CF_3(CF_2)_a-$ (where a is an integer not less than 3 but not more than 9).
[4] The polymer according to any one of [1] to [3], in which the polymer is cross-linked.
[5] The polymer according to any one of [1] to [4], in which the polymer has a gel fraction of 20% or more.
[6] The polymer according to any one of [1] to [5], in which the total number of the structural unit (A), the structural unit (B), and the structural unit (C) is 90% or more, where the total number of all structural units contained in the polymer is 100%.
[7] A molded article comprising the polymer according to any one of [1] to [6].
[8] A resin composition comprising:

a polymer (1) which is the polymer according to [1]; and
a polymer (2) which is a polymer whose melting peak temperature or glass transition temperature observed by differential scanning calorimetry is not less than 50°C but not higher than 180°C, wherein an excluding polymer defined below is excluded from the polymer (2),
in which a content of the polymer (1) is not less than 1 wt% but not more than 99 wt% and a content of the polymer (2) is not less than 1 wt% but not more than 99 wt%, where the total amount of the polymer (1) and the polymer (2) is 100 wt%,

the excluding polymer

being such a polymer that comprises a structural unit (A) derived from ethylene, a structural unit (B) represented by Formula (1) below, and at least one kind of structural unit (C) selected from the group consisting of structural units represented by Formula (2) below and a structural unit represented by Formula (3) below,

in which the number of the structural unit (A) is not less than 70% but not more than 99%, and the total number of the structural unit (B) and the structural unit (C) is not less than 1% but not more than 30%, where the total number of the structural unit (A), the structural unit (B), and the structural unit (C) is 100%, and

in which the number of the structural unit (B) is not less than 1% but not more than 99%, and the number of the structural unit (C) is not less than 1% but not more than 99%, where the total number of the structural unit (B) and the structural unit (C) is 100%,

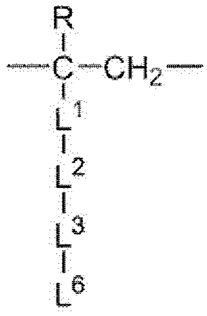

Formula (1)

(In Formula (1),

R is a hydrogen atom or a methyl group,
$L^1$ is -CO-O-, -O-CO-, or -O-,
$L^2$ is a single bond, $-CH_2-$, $-CH_2-CH_2-$, $-CH_2-CH_2-CH_2-$, - $CH_2-CH(OH)-CH_2-$, or $-CH_2-CH(CH_2OH)-$,
$L^3$ is a single bond, -CO-O-, -O-CO-, -O-,-CO-NH-, - NH-CO-, -CO-NH-CO-, -NH-CO-NH-, -NH-, or $-N(CH_3)-$,
$L^6$ is - $(CH_2)_n-(R^{f2}O)_p-R^{f1}$,
$R^{f1}$ is a $C_1$ to $C_{15}$ alkyl group in which one or more hydrogen atoms are substituted with one or more fluorine atoms,
$R^{f2}$ is a $C_1$ to $C_{15}$ alkylene group in which one or more hydrogen atoms are substituted with one or more fluorine atoms,
n is an integer not less than 0 but not more than 10, and p is an integer not less than 0 but not more than 15.
If p is an integer equal to or more than 2, the plurality of $-(R^{f2}O)-$ may be identical with each other or different from each other.
Each of the chemical formulae listed in $L^1$, $L^2$, and $L^3$ is such that the left side of the chemical formula corresponds to the upper side of Formula (1) and the right side of the chemical formula corresponds to the lower side of Formula (1).)

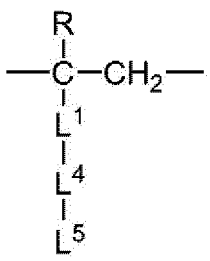

Formula (2)

(In Formula (2),

R is a hydrogen atom or a methyl group,
$L^1$ is -CO-O-, -O-CO-, or -O-,
$L^4$ is a single bond or a $C_1$ to $C_8$ alkylene group,
$L^5$ is a hydrogen atom, an epoxy group, $-CH(OH)-CH_2OH$, a carboxy group, a hydroxy group, an amino group, or a $C_1$ to $C_4$ alkyl amino group.
Each of the chemical formulae listed in $L^1$ is such that the left side of the chemical formula corresponds to the

upper side of Formula (2) and the right side of the chemical formula corresponds to the lower side of Formula (2).)

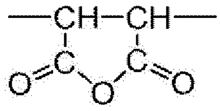

Formula (3)

[9] A production method for the polymer according to any one of [1] to [6], the method comprising:

a step of reacting a polymer with one or more kind of compound ($\alpha$),
the polymer being such a polymer that includes a structural unit (A) derived from ethylene, and at least one kind of structural unit (C) selected from the group consisting of structural units represented by Formula (2) below and a structural unit represented by Formula (3) below, in which the number of the structural unit (A) is not less than 70% but not more than 99%, where the total number of the structural unit (A) and the structural unit (C) is 100%, and
the one or more kind of compound ($\alpha$) being selected from the group consisting of a compound represented by Formula (11) below, a compound represented by Formula (12) below, a compound represented by Formula (13) below, a compound represented by Formula (14) below, a compound represented by Formula (15) below, a compound represented by Formula (16) below, a compound represented by Formula (17) below, and a compound represented by Formula (18) below.

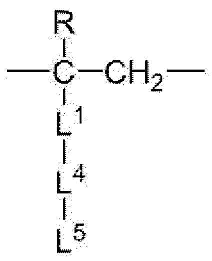

Formula (2)

(In Formula (2),

R is a hydrogen atom or a methyl group,
$L^1$ is -CO-O-, -O-CO-, or -O-,
$L^4$ is a single bond or a $C_1$ to $C_8$ alkylene group,
$L^5$ is a hydrogen atom, an epoxy group, $-CH(OH)-CH_2OH$, a carboxy group, a hydroxy group, an amino group, or a $C_1$ to $C_4$ alkyl amino group.
Each of the chemical formulae listed in $L^1$ is such that the left side of the chemical formula corresponds to the upper side of Formula (2) and the right side of the chemical formula corresponds to the lower side of Formula (2).)

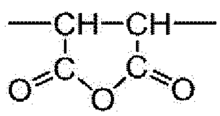

Formula (3)

$R^{f1}- (OR^{f2})_p- (CH_2)_n-OH$ Formula (11),

$R^{f1}-(OR^{f2})_p-(CH_2)_n-NH_3$ Formula (12),

$R^{f1}-(OR^{f2})_p-(CH_2)_n-X$ Formula (13),

$R^{f1}-(OR^{f2})_p-(CH_2)_n-COOH$ Formula (14),

$R^{f1}-(OR^{f2})_p-(CH_2)_n-CONH_2$ Formula (15),

$R^{f1}$-$(OR^{f2})_p$-$(CH_2)_n$-COX Formula (16),

$R^{f1}$-$(OR^{f2})_p$-$(CH_2)_n$-$NHCONH_2$ Formula (17),

and

$R^{f1}$-$(OR^{f2})_p$-$(CH_2)_n$-NCO Formula (18),

(In Formula (11) to (18),

$R^{f1}$ is a $C_1$ to $C_{15}$ alkyl group in which one or more hydrogen atoms are substituted with one or more fluorine atoms,
$R^{f2}$ is a $C_1$ to $C_{15}$ alkylene group in which one or more hydrogen atoms are substituted with one or more fluorine atoms,
n is an integer not less than 0 but not more than 10, and p is an integer not less than 0 but not more than 15,
X is a halogen atom.
If p is an integer equal to or more than 2, the plurality of -$(R^{f2}O)$- may be identical with each other or different from each other.)

[10] A molded article comprising an olefin polymer having a fluorine atom and a thermoplastic resin having no fluorine atom,
in which 10 or more dispersed phases of the olefin polymer having a fluorine atom are present on a cross-section of the molded article per 1000 $\mu m^2$, and
equivalent circle diameters of the dispersed phases meet Equation (11) below,

$$Ra^1 > Ra^2 > Ra^3 \quad (11),$$

where $Ra^1$ is a ratio of dispersed phases with equivalent circle diameters not less than 0.5 $\mu$m but less than 2.0 $\mu$m, $Ra^2$ is a ratio of dispersed phases with equivalent circle diameters not less than 2.0 $\mu$m but less than 3.0 $\mu$m, and $Ra^3$ is a ratio of dispersed phases with equivalent circle diameters not less than 3.0 $\mu$m.
[11] The molded article according to [10], in which a dispersion force component $\gamma^d$ of a surface free energy of the molded article is 25 mN/m or less.

EFFECT OF THE INVENTION

According to the present invention, it is possible to provide a polymer which is excellent in the water-repellent property and the oil-repellent property and with which a resin composition with excellent water-repellent property and oil-repellent property can be obtained even in case where an amount of the polymer mixed with another resin is not large.

BRIEF DESCRIPTION OF THE DRAWINGS

Fig. 1 is a reflective electronic image captured by scanning electron microscope, showing a cross section of a molded article (sheet) obtained in Example 7.
Fig. 2 is a reflective electronic image captured by scanning electron microscope, showing a cross section of a molded article (sheet) obtained in Comparative Example 4.

MODE FOR CARRYING OUT THE INVENTION

<Polymer (1)>

The polymer according to the present invention is a polymer (hereinafter, may be referred to as "polymer (1)") that includes a structural unit (A) derived from ethylene, a structural unit (B) represented by Formula (1) above, and at least one kind of structural unit (C) selected from the group consisting of structural units represented by Formula (2) above and a structural unit represented by Formula (3) above,
in which the number of the structural unit (A) is not less than 70% but not more than 99%, and the total number of the

structural unit (B) and the structural unit (C) is not less than 1% but not more than 30%, where the total number of the structural unit (A), the structural unit (B), and the structural unit (C) is 100%, and
in which the number of the structural unit (B) is not less than 1% but not more than 99%, and the number of the structural unit (C) is not less than 1% but not more than 99%, where the total number of the structural unit (B) and the structural unit (C) is 100%.

The polymer (1) has a structural unit (A) derived from ethylene. The structural unit (A) is a structural unit obtainable by polymerizing ethylene, and may be present in the form of a branch structure in the polymer.

- A structural unit (B) represented by Formula (1)

R is preferably a hydrogen atom.

$L^1$ is preferably -CO-O- or -O-CO-, and more preferably -CO-O-.

$L^2$ is preferably a single bond, $-CH_2-$, $-CH_2-CH_2-$, or - $CH_2-CH_2-CH_2-$, or more preferably a single bond.

$L^3$ is preferably a single bond, -O-CO-, -O-,-NH-, or $-N(CH_3)-$, or more preferably a single bond.

Examples of $R^{f1}$ constituting $L^6$ include $CF_3(CF_2)_a$-(where a is an integer not less than 0 but not more than 14), $CF_2H(CHF)_b(CF_2)_c$- (where b and c are independently an integer equal to or more than 0, and a sum of b and c is an integer not less than 0 but not more than 14).

$R^{f1}$ constituting $L^6$ is preferably $CF_3(CF_2)_a$- (where a is an integer not less than 0 but not more than 14), more preferably $CF_3(CF_2)_a$- (where a is an integer not less than 3 but not more than 9), or further preferably $CF_3(CF_2)_a$-(where a is an integer not less than 5 but not more than 7).

In case where p constituting $L^6$ is an integer not less than 1 but not more than 15, examples of $-(R^{f2}O)_p-R^{f1}$ include $-(C_3F_6O)_f(C_2F_4O)_e(CF_2O)_dCF_3$ (where d, e, and f are independently an integer equal to or more than 0, and a sum of d, e, and f is an integer not less than 1 but not more than 15), and $-(C_3H_3F_3O)_i(C_2H_2F_2O)_h(CHFO)_gCHF_2$ (where g, h, and i are independently an integer equal to or more than 0, and a sum of g, h, and i is an integer not less than 1 but not more than 15).

In case where p constituting $L^6$ is an integer not less than 1 but not more than 15, $-(R^{f2}O)_p-R^{f1}$ is preferably $-(C_3F_6O)_f(C_2F_4O)_e(CF_2O)_dCF_3$ (where d, e, and f are independently an integer equal to or more than 0, and a sum of d, e, and f is an integer not less than 1 but not more than 15), and more preferably, $-(C_2F_4O)_e(CF_2O)_dCF_3$ (where d and e are independently an integer equal to or more than 0, and a sum of d and e is an integer not less than 1 but not more than 15).

p constituting $L^6$ is preferably an integer not less than 0 but not more than 10, more preferably an integer not less than 0 but not more than 5, or further preferably 0.

n constituting $L^6$ is preferably an integer not less than 0 but not more than 4, more preferably 1 or 2, or further preferably 2.

Examples of the structural unit (B) represented by Formula (1) include structural units listed below.

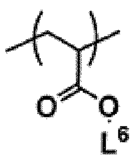
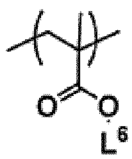
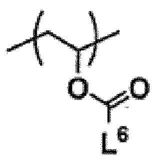
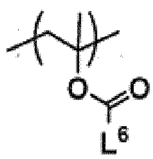
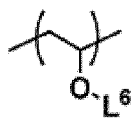
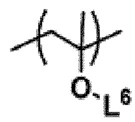

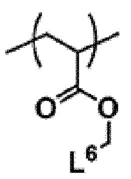
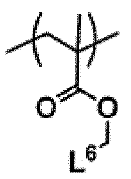
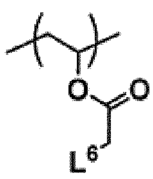
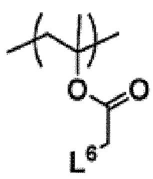
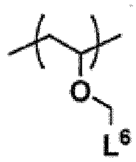
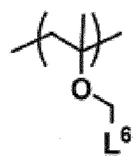

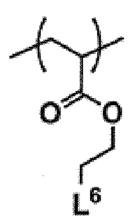
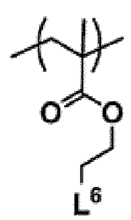
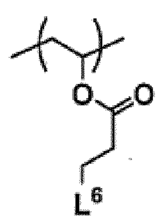
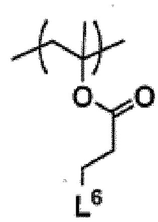
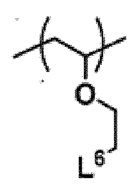
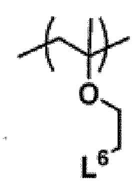

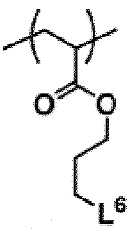
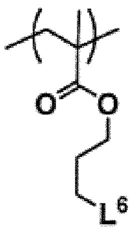
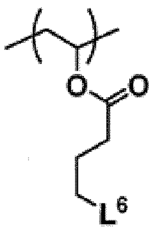
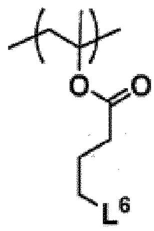
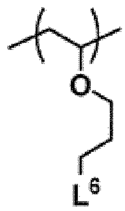
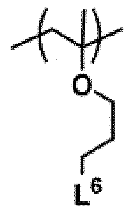

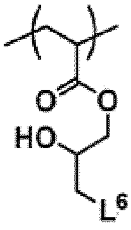
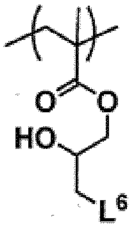
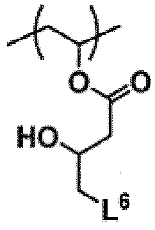
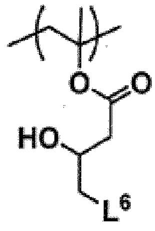
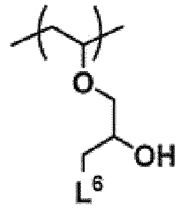
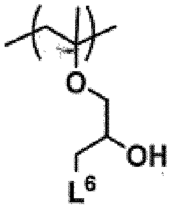

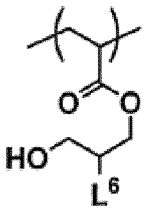
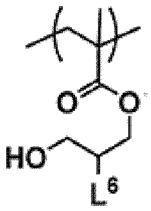
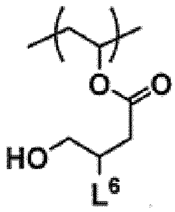
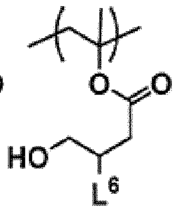
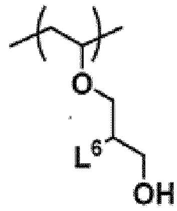
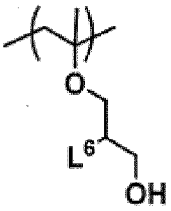

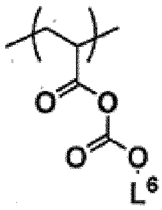
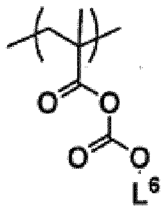
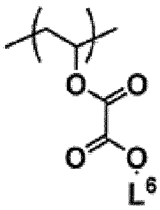
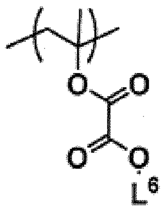
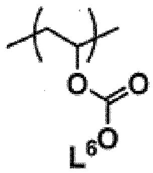
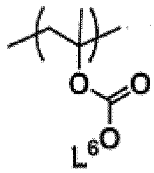

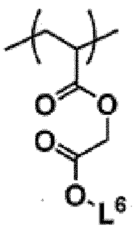
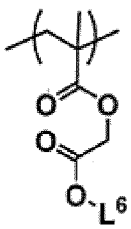
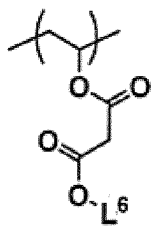
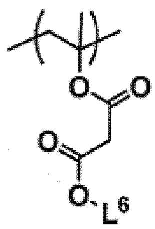
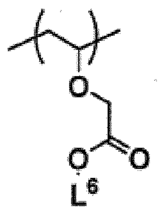
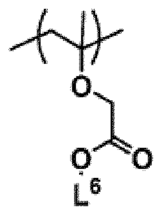

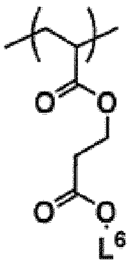
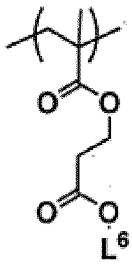
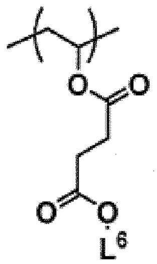
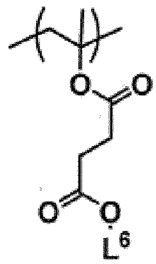
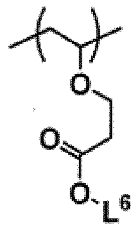
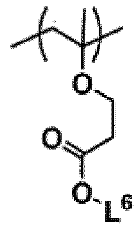

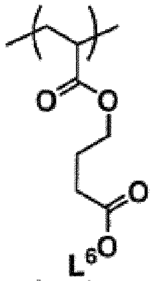 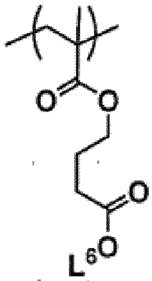 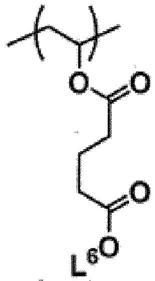 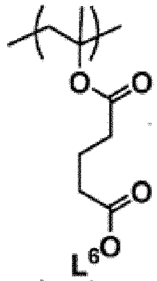 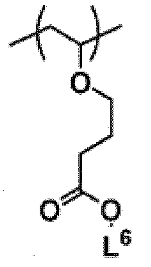 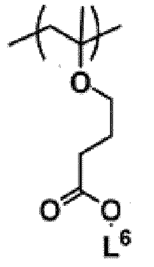

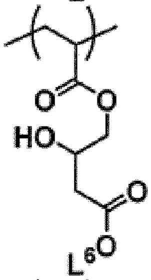 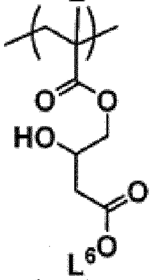 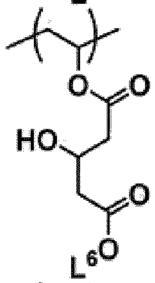 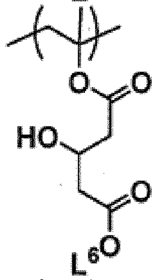 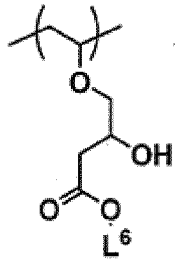 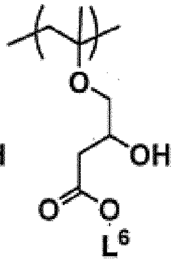

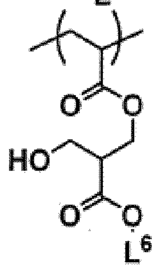 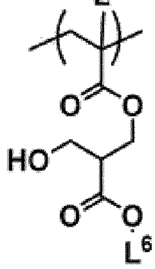 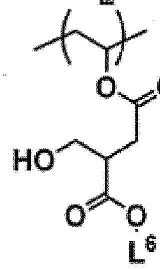 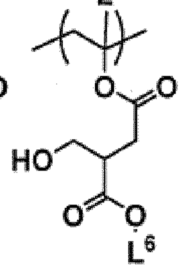 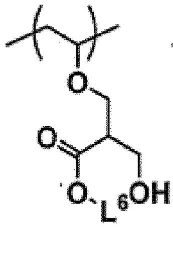 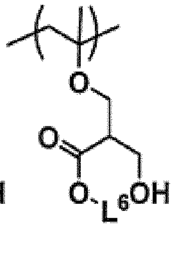

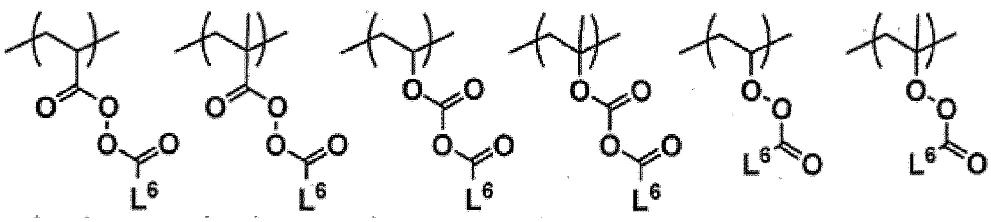

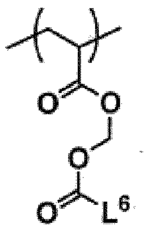 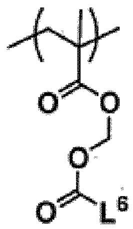 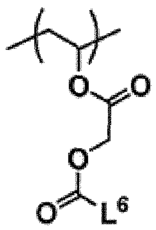 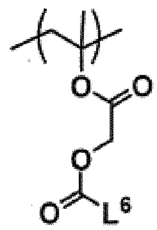 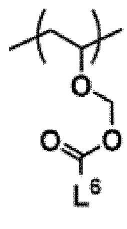 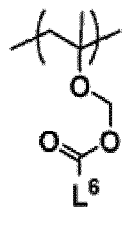

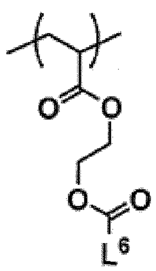 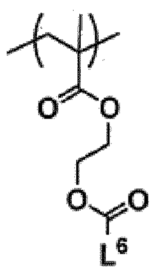 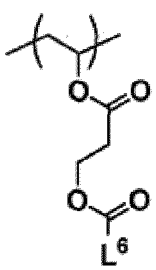 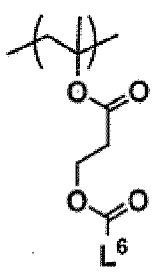 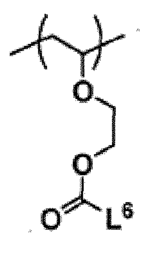 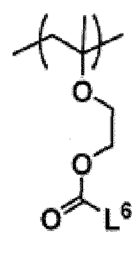

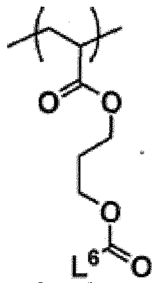 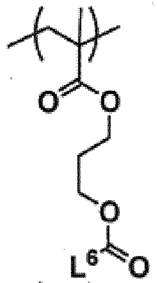 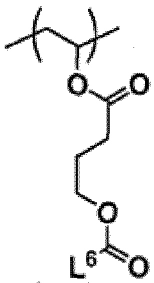 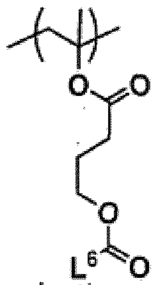 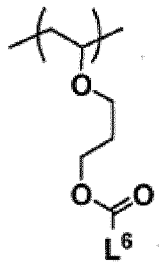 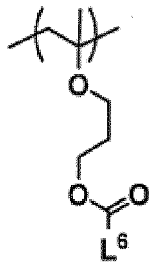

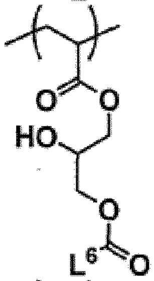 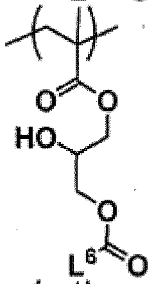 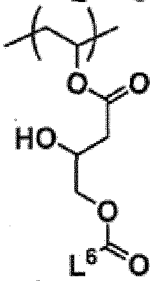 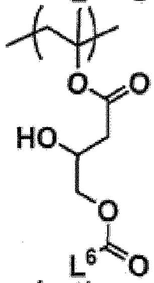 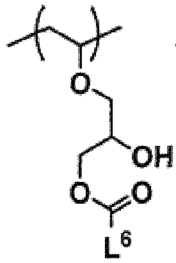 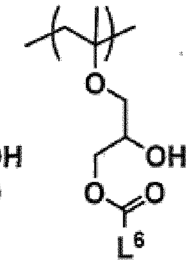

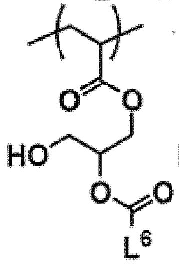 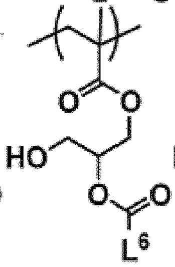 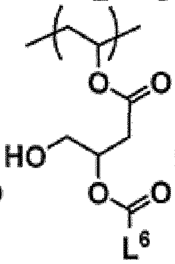 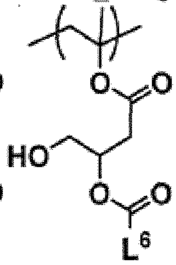 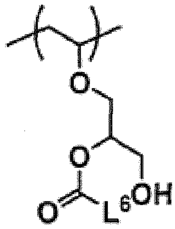 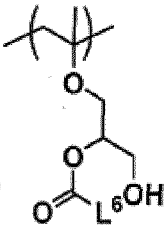

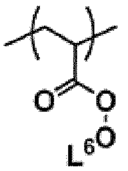 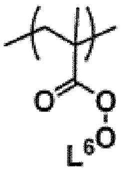 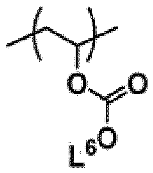 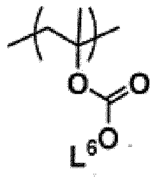 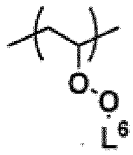 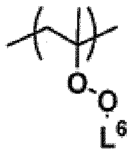

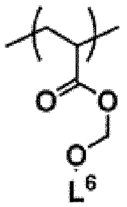 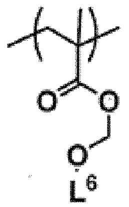 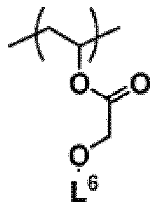 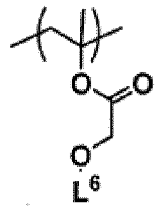 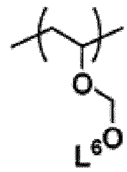 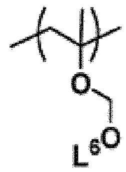

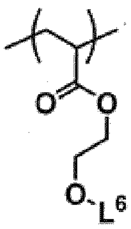 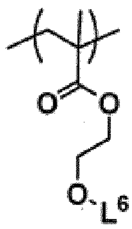 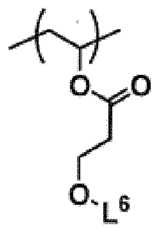 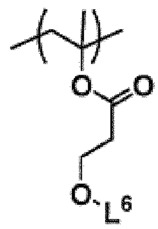 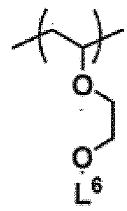 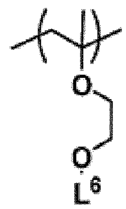

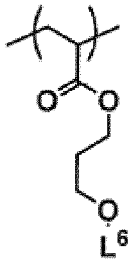 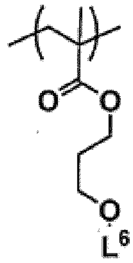 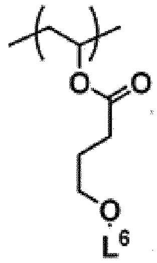 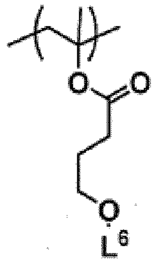 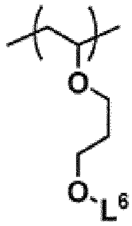 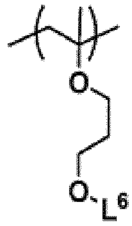

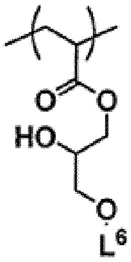 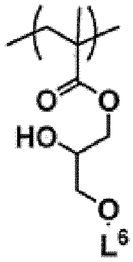 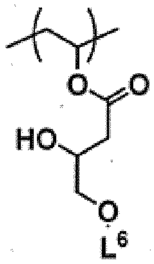 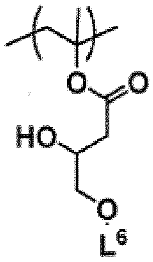 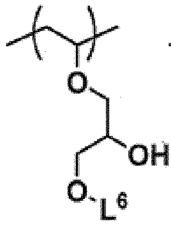 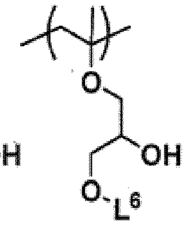

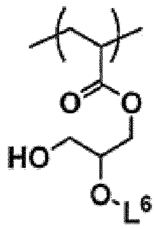 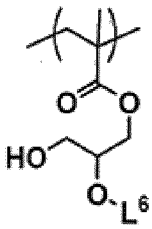 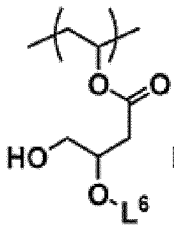 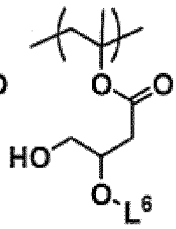 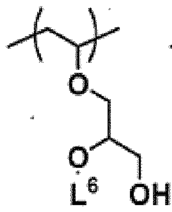 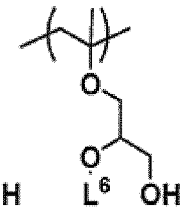

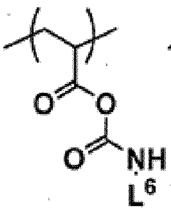 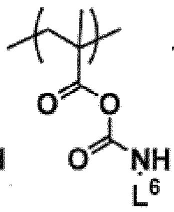 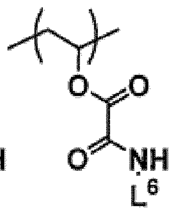 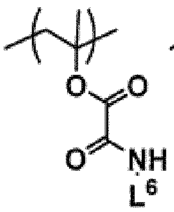 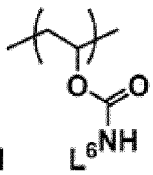 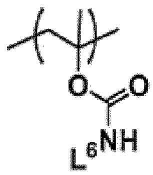

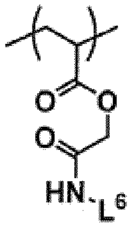 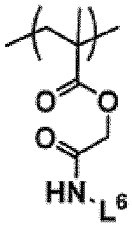 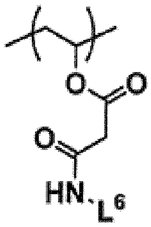 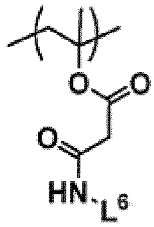 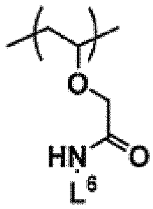 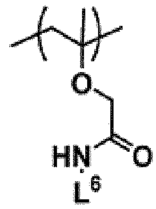

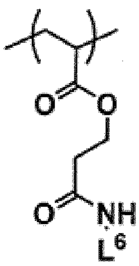 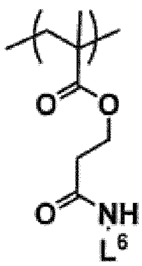 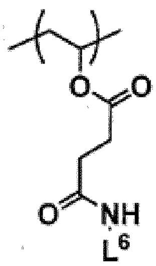 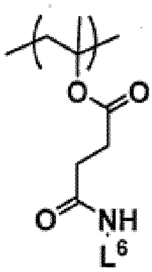 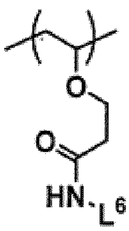 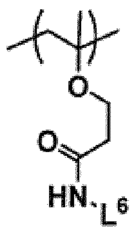

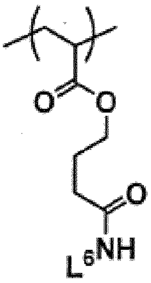 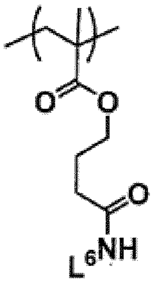 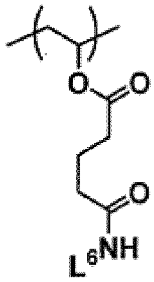 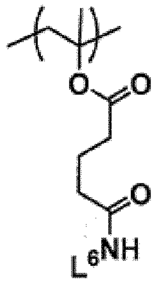 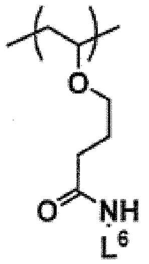 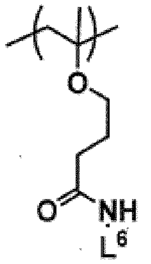

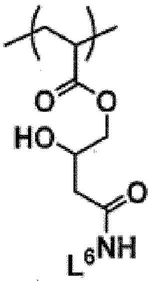 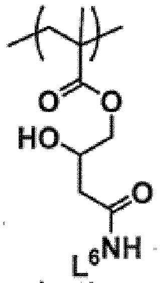 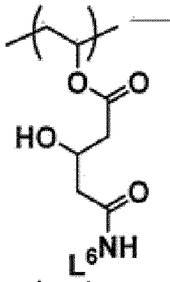 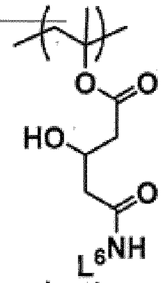 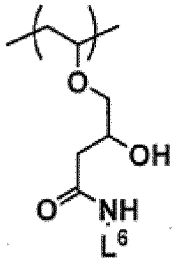 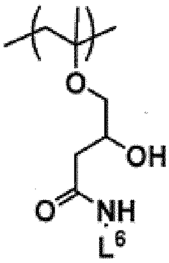

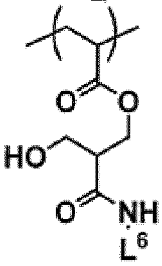 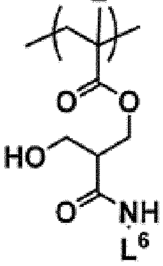 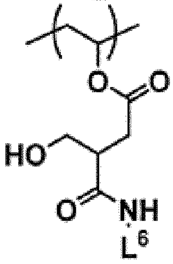 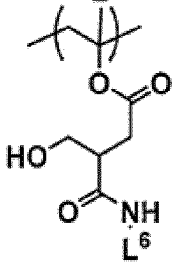 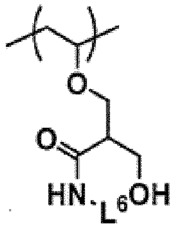 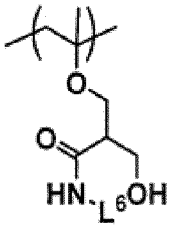

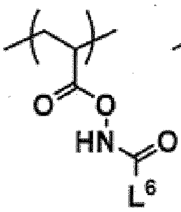 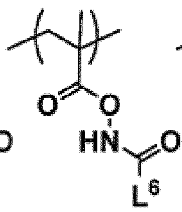 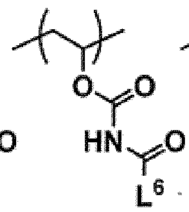 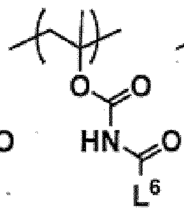 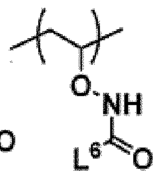 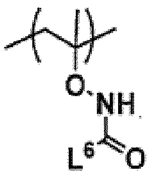

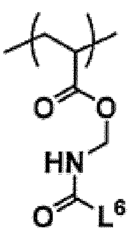 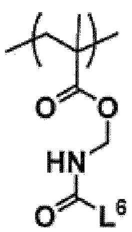 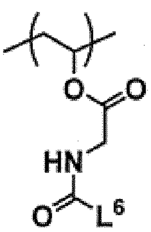 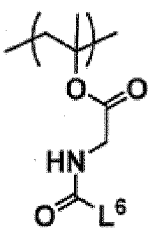 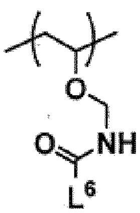 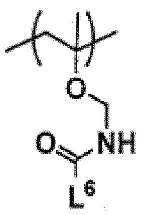

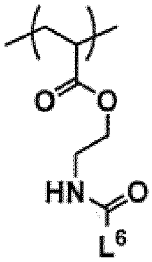 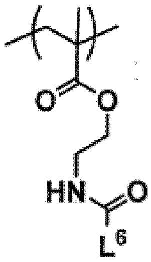 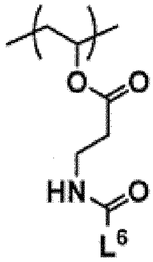 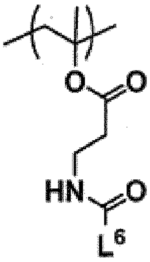 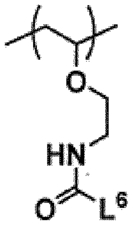 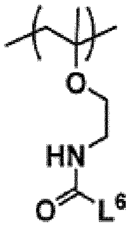

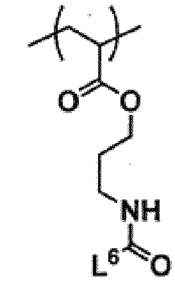 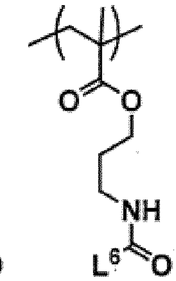 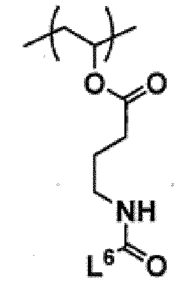 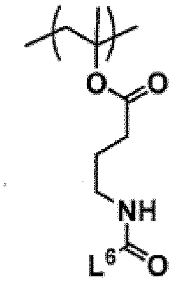 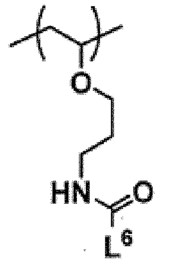 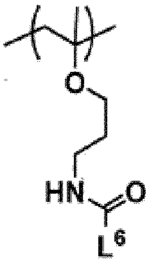

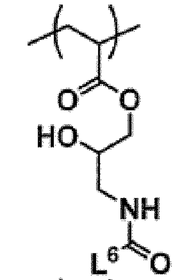 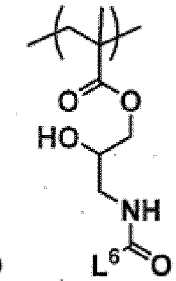 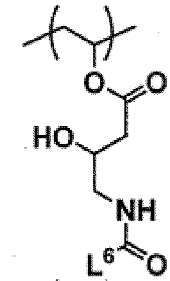 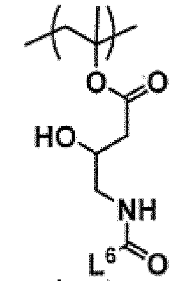 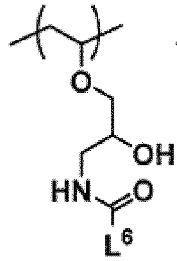 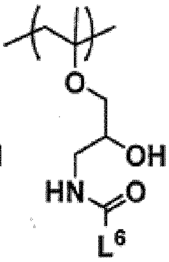

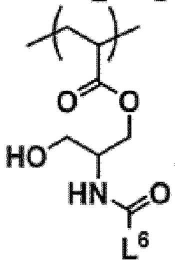 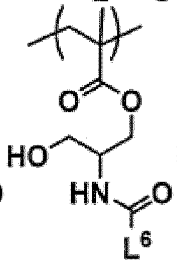 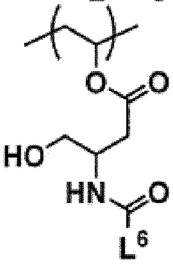 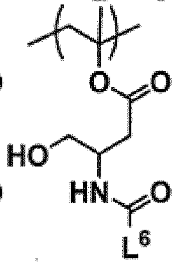 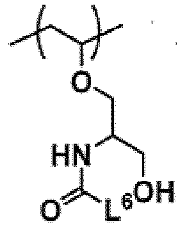 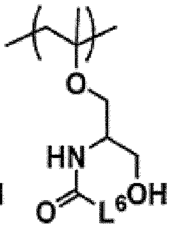

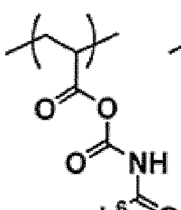 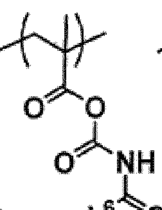 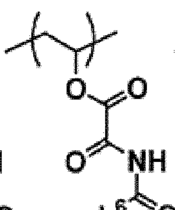 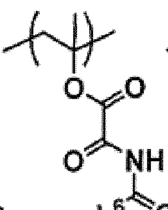 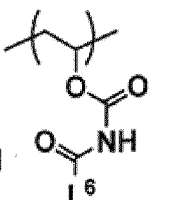 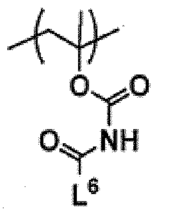

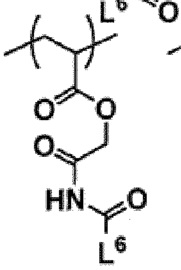 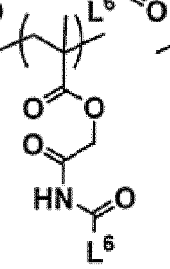 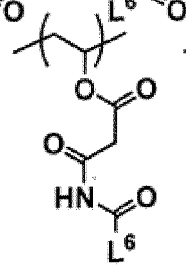 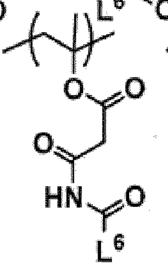 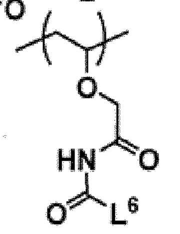 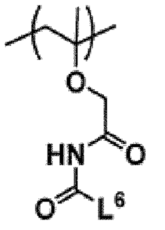

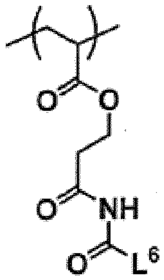 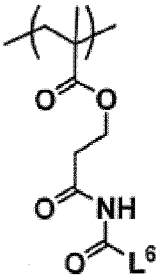 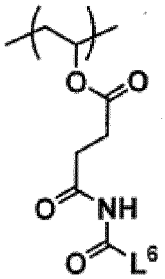 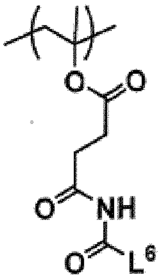 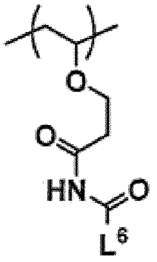 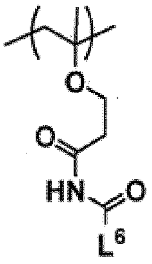

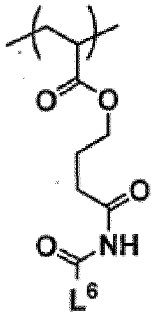 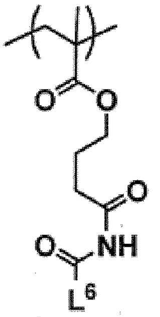 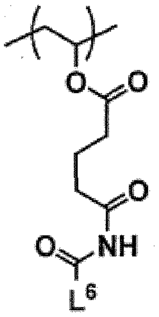 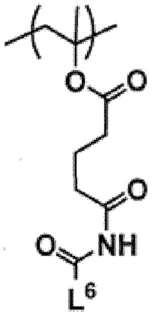 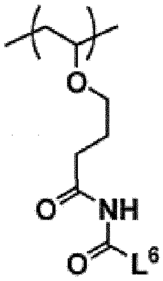 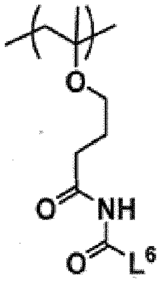

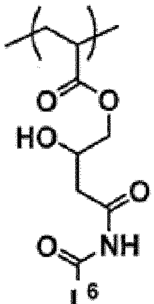 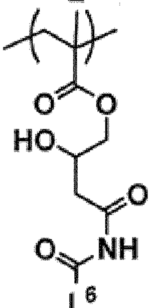 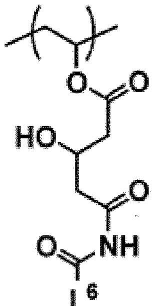 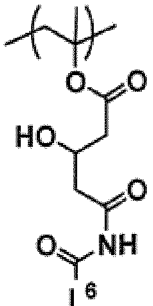 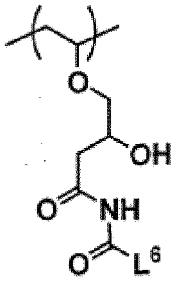 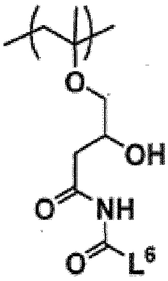

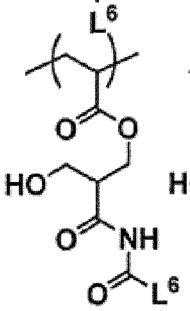 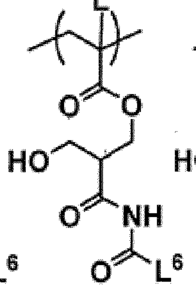 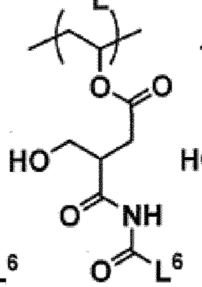 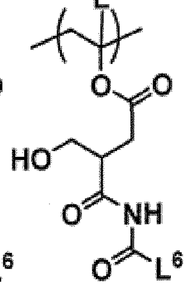 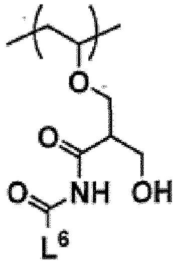 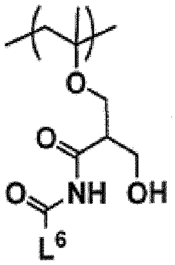

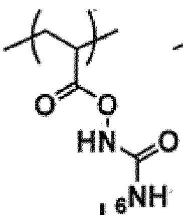 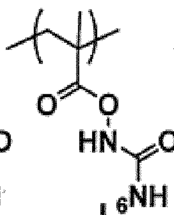 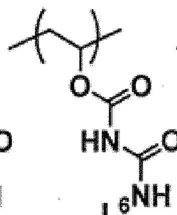 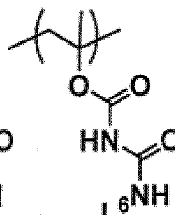 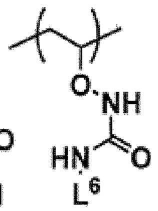 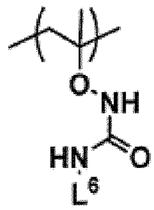

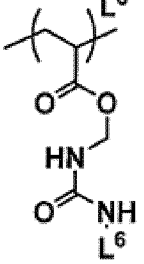 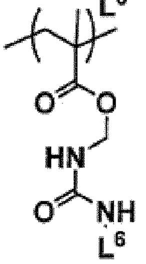 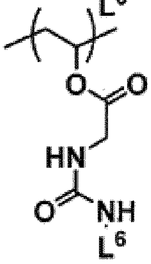 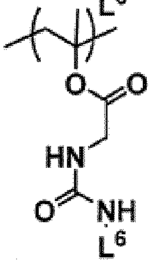 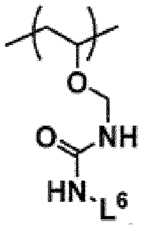 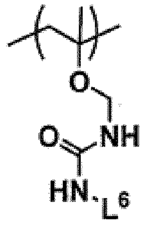

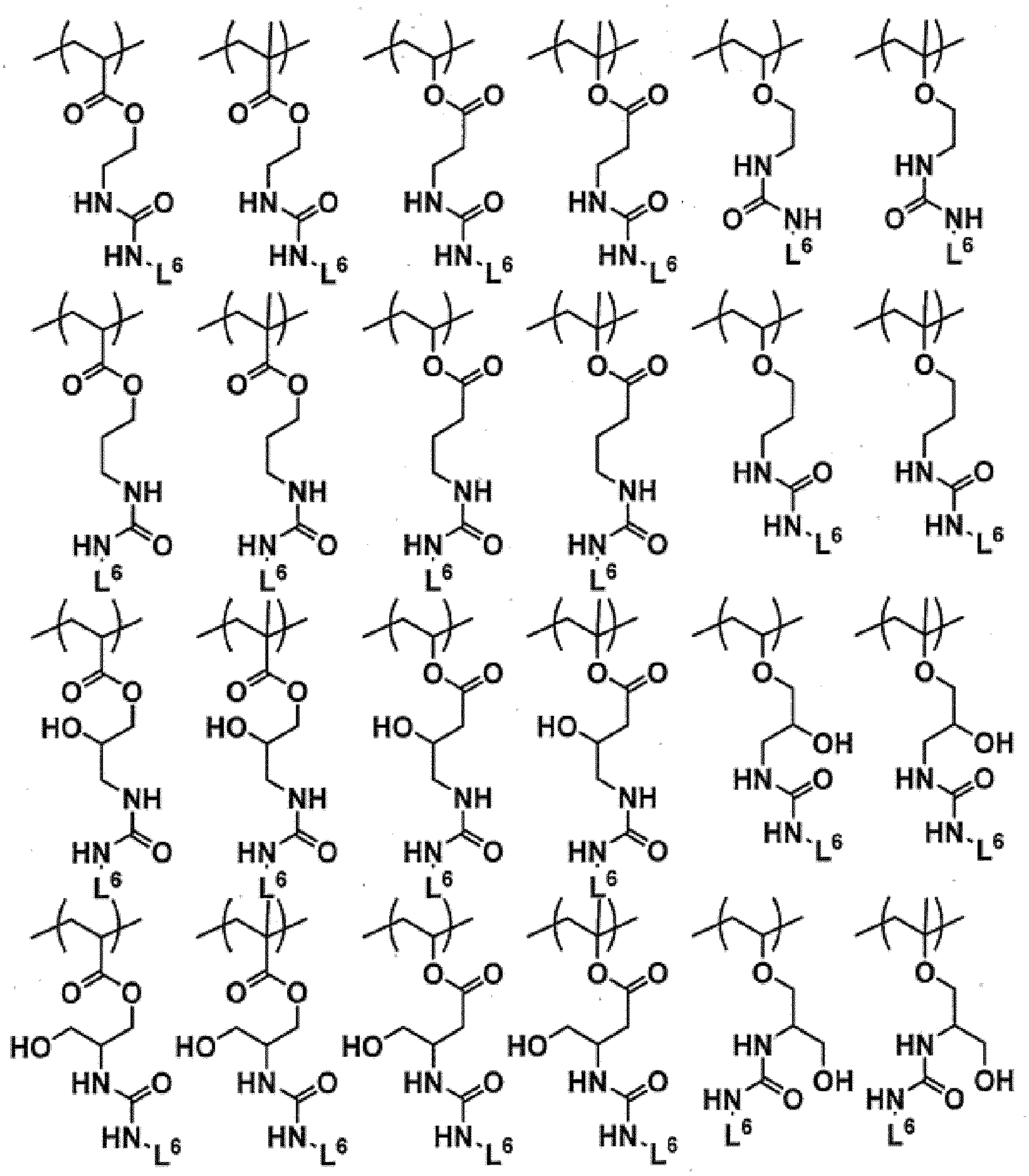

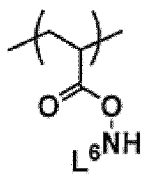
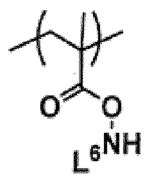
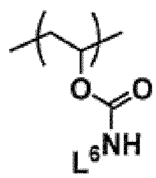
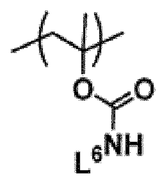
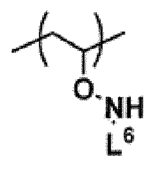
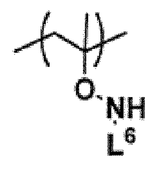

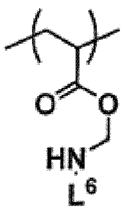
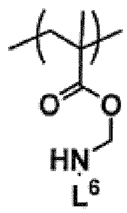
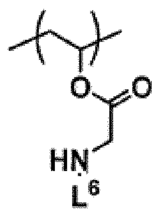
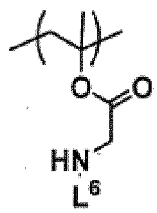
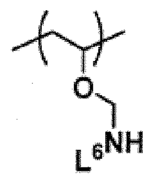
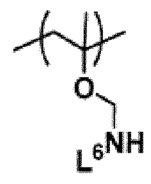

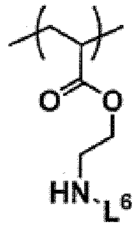 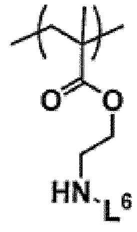 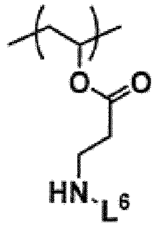 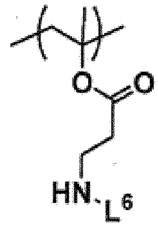 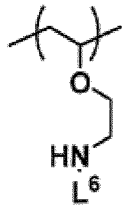 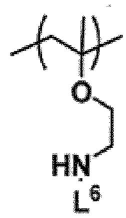

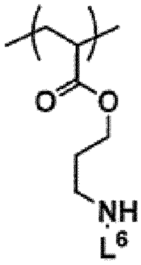 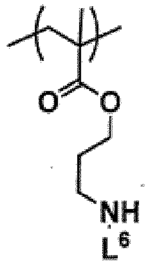 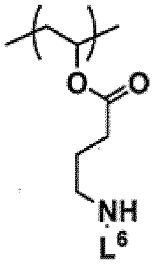 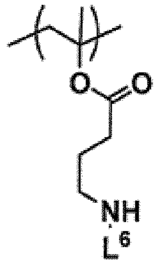 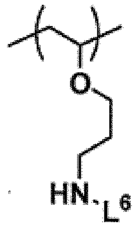 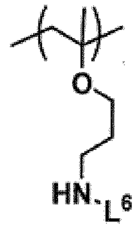

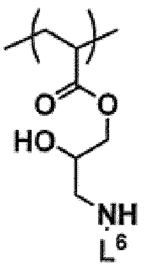 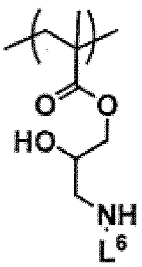 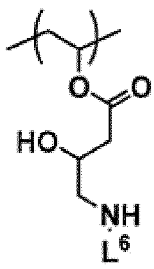 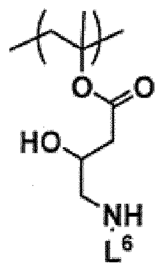 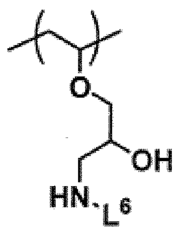 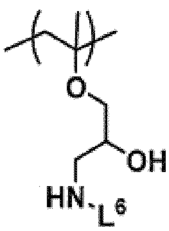

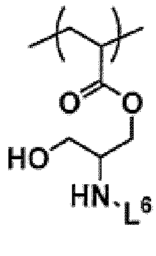 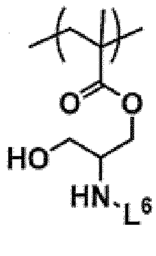 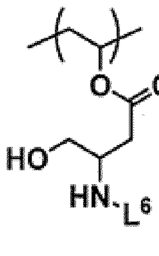 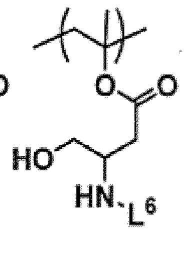 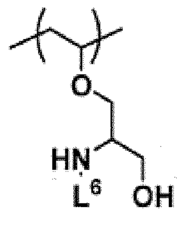 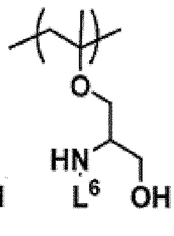

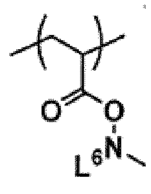 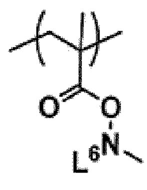 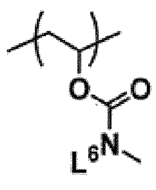 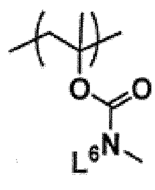 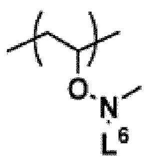 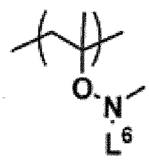

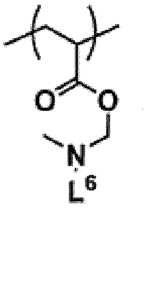 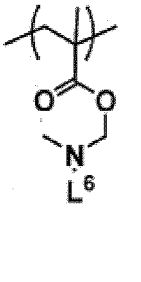 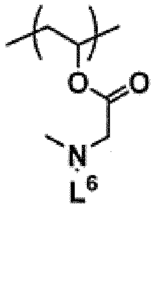 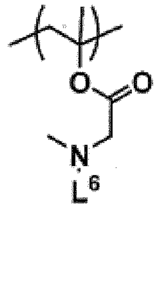 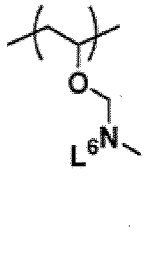 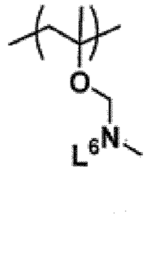

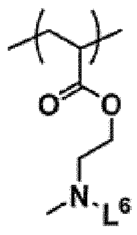 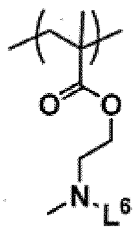 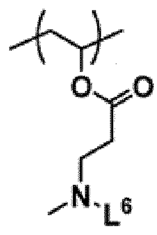 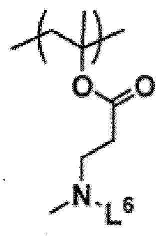 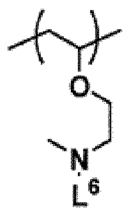 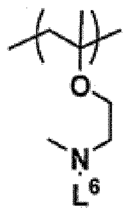

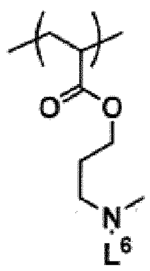 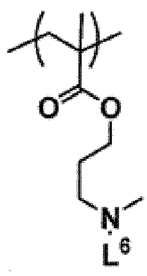 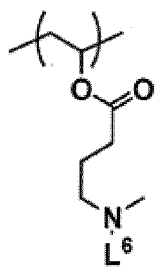 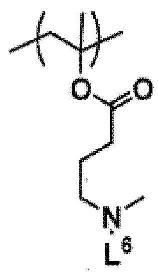 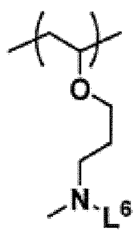 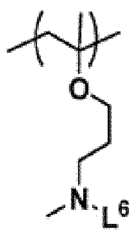

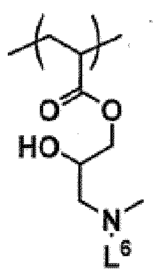 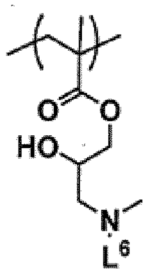 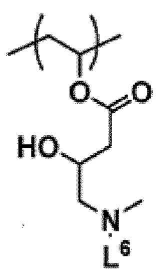 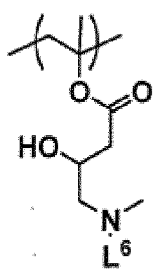 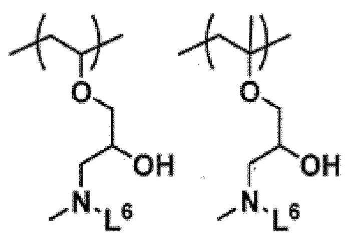

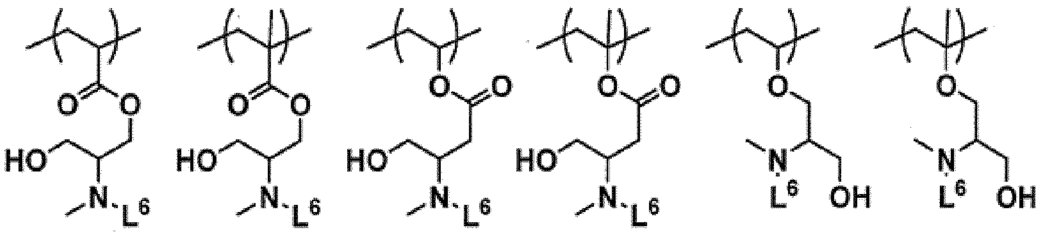

The structural unit (B) represented by Formula (1) is preferably a structural unit represented by any one of the followings.

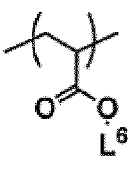 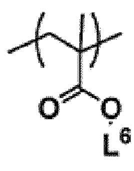 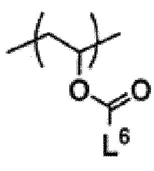 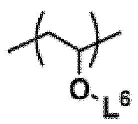

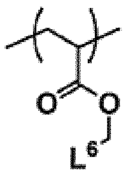
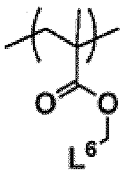
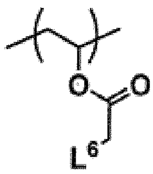
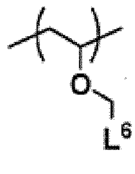
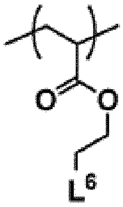
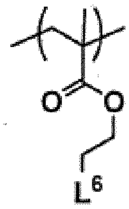
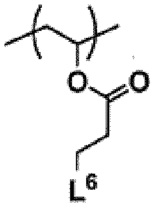
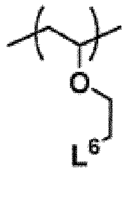
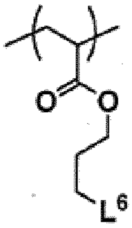
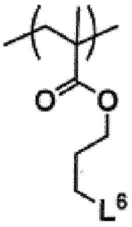
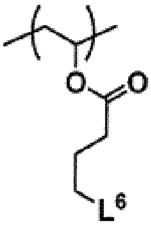
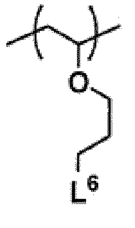
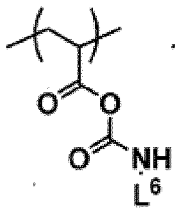
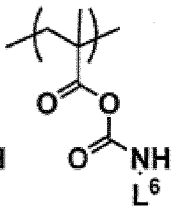
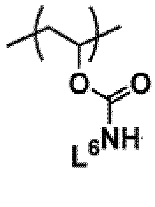
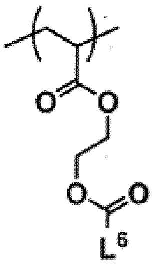
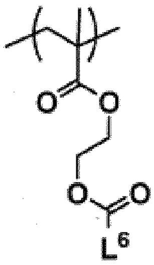
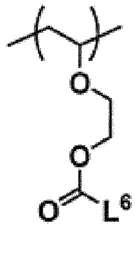
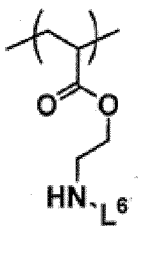
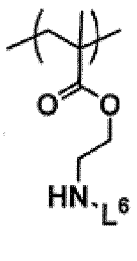
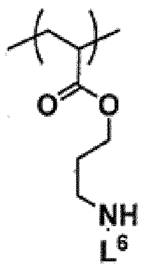
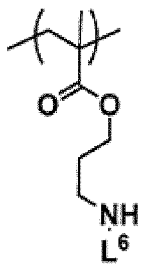
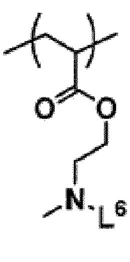
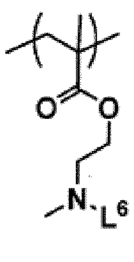
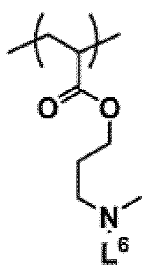
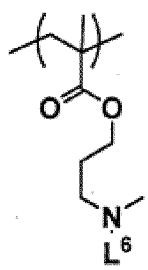

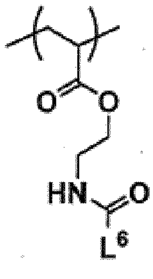
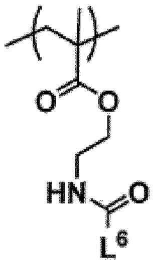
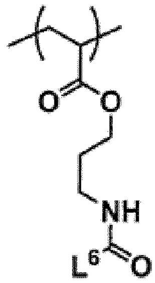
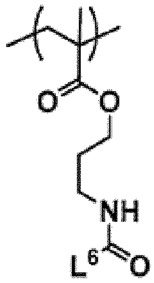
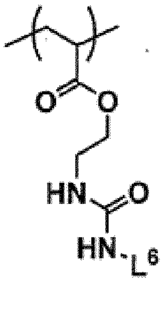
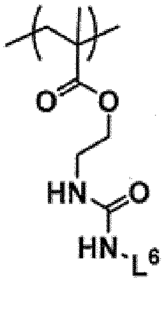
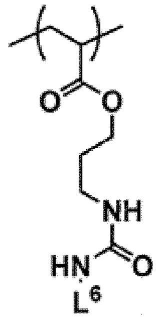
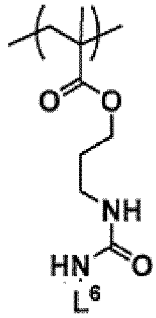
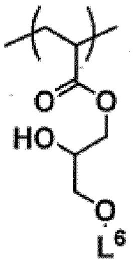
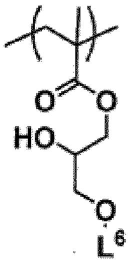
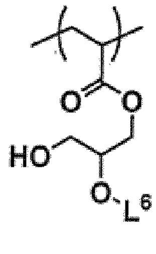
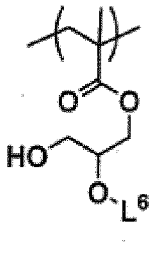
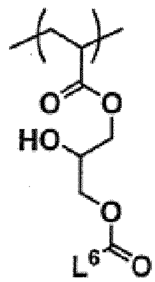
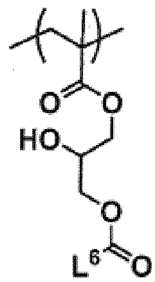
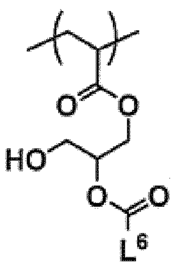
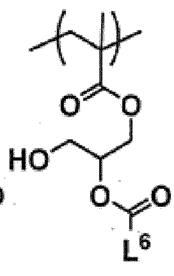
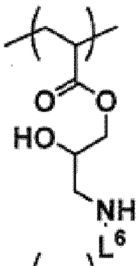
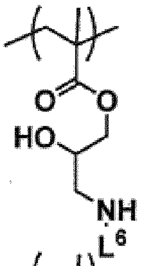
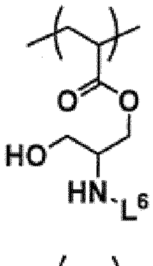
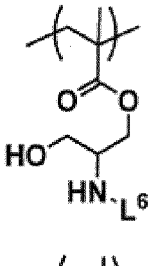
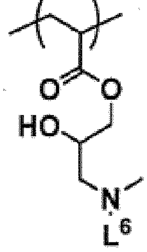
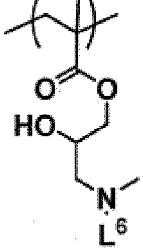
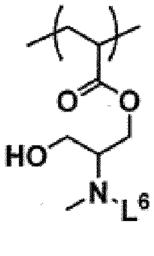
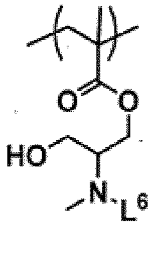

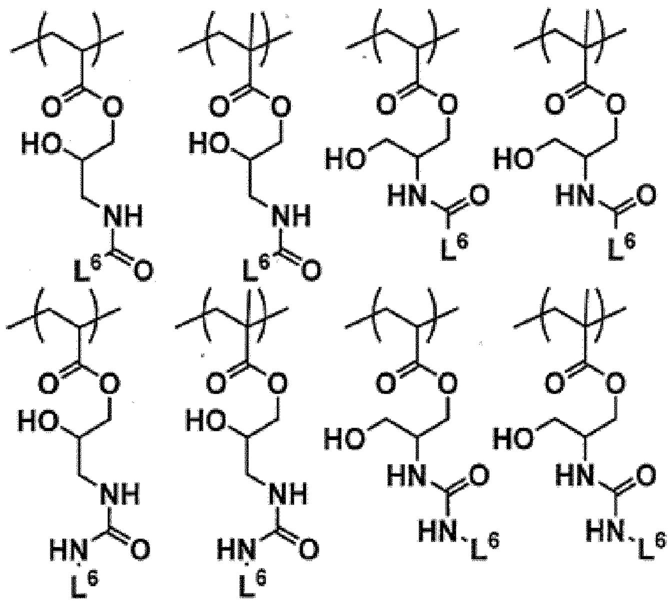

The structural unit (B) represented by Formula (1) is more preferably a structural unit represented by any one of the followings.

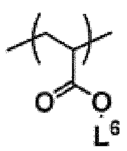 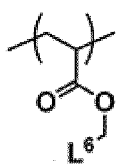 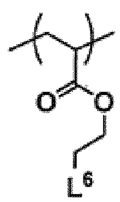 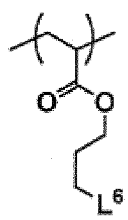

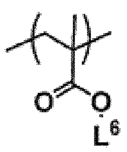 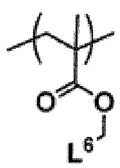 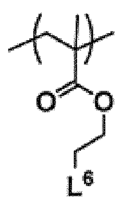 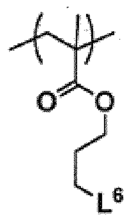

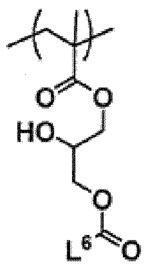 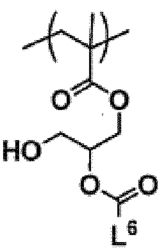

The structural unit (B) represented by Formula (1) is further preferably a structural unit represented as below.

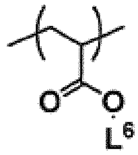

The structural unit (B) is:

preferably a structural unit derived from 1H,1H,2H,2H-tridecafluoro-1-octylacrylate, a structural unit derived from 1H,1H,2H,2H-heptadecafluoro-1-decylacrylate, a structural unit derived from 1H,1H,2H,2H-tridecafluoro-1-octylmethacrylate, a structural unit derived from 1H,1H,2H,2H-heptadecafluoro-1-decylmethacrylate, a structural unit derived from 1H,1H,2H,2H-tridecafluoro-1-vinyloctanoate, a structural unit derived from 1H,1H,2H,2H-heptadecafluoro-1-vinyldecanoate, a structural unit derived from 1H,1H,2H,2H-tridecafluoro-1-octylvinylether, a structural unit derived from 1H,1H,2H,2H-heptadecafluoro-1-decylvinylether;
more preferably a structural unit derived from a 1H,1H,2H,2H-tridecafluoro-1-octylacrylate, a structural unit derived from 1H,1H,2H,2H-heptadecafluoro-1-decylacrylate, a structural unit derived from 1H,1H,2H,2H-tridecafluoro-1-octylmethacrylate, or a structural unit derived from 1H,1H,2H,2H-heptadecafluoro-1-decylmethacrylate; or
further preferably, a structural unit derived from a 1H,1H,2H,2H-tridecafluoro-1-octylacrylate, or a structural unit derived from 1H,1H,2H,2H-heptadecafluoro-1-decylacrylate.

The polymer (1) according to the present invention may contain two or more kinds of the structural unit (B), and may be a polymer containing a structural unit derived from a 1H,1H,2H,2H-tridecafluoro-1-octylacrylate, and a structural unit derived from 1H,1H,2H,2H-heptadecafluoro-1-decylacrylate.
The polymer (1) according to the present invention includes at least one kind of structural unit (C) selected from the group consisting of structural units represented by Formula (2) above and a structural unit represented by Formula (3) above.

- Structural unit represented by Formula (2)

R is preferably a hydrogen atom.
$L^1$ is preferably -CO-O-, -O-CO- or -O-,more preferably -CO-O- or -O-CO-, and further preferably -CO-O-.
Examples of the $C_1$ to $C_8$ alkylene group represented by $L^4$ include a methylene group, an ethylene group, an n-propylene group, a 1-methylethylene group, an n-butylene group, a 1,2-dimethylethylene group, a 1,1-dimethylethylene group, a 2,2-dimethylethylene group, an n-pentylene group, an n-hexylene group, an n-heptalene group, an n-octylene group, and a 2-ethyl-n-hexylene group.
$L^4$ is preferably a single bond, a methylene group, an ethylene group, or an n-propylene group, and more preferably a methylene group.
Examples of the $C_1$ to $C_4$ alkylamino group represented by $L^5$ include a methylamino group, an ethylamino group, a propylamino group, a butylamino group, a dimethylamino group, and a diethylamino group.
$L^5$ is preferably a hydrogen atom, an epoxy group, or $-CH(OH)-CH_2OH$, and more preferably a hydrogen atom.
Examples of the structural unit represented by Formula (2) include structural units listed below.

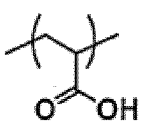 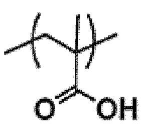 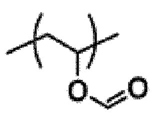 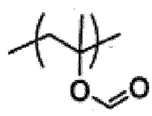 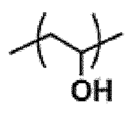 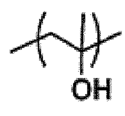

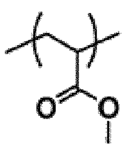 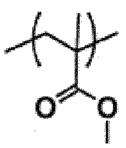 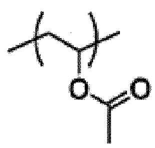 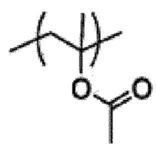 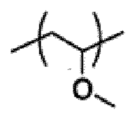 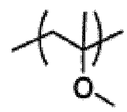

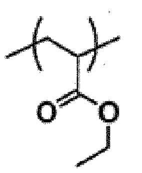 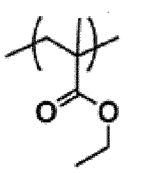 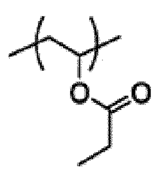 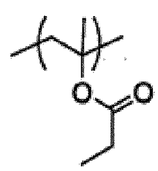 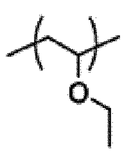 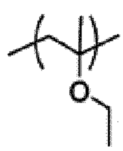

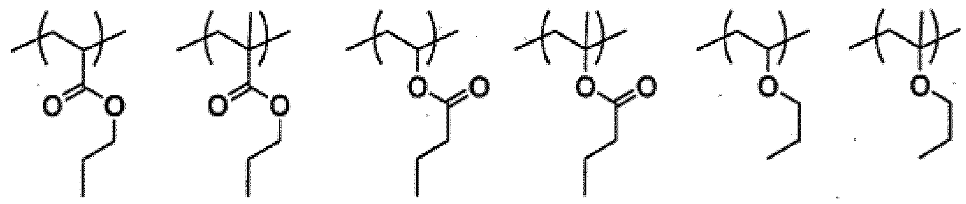

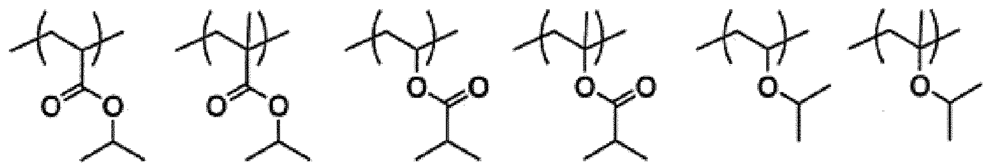

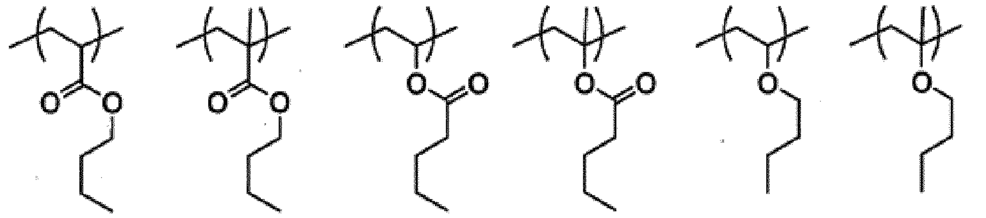

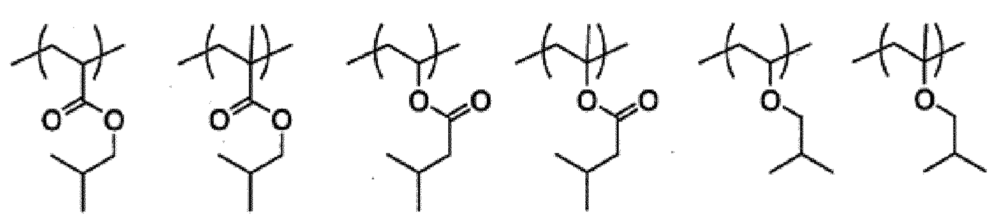

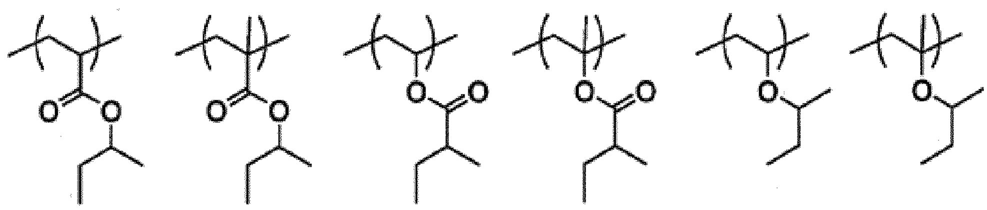

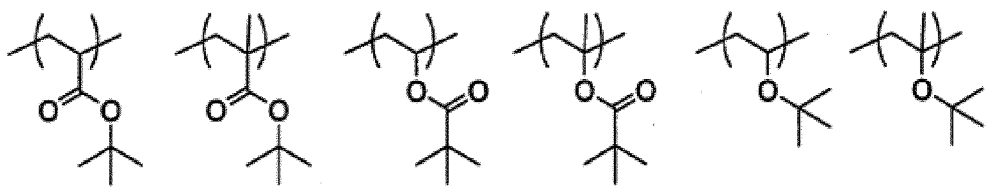

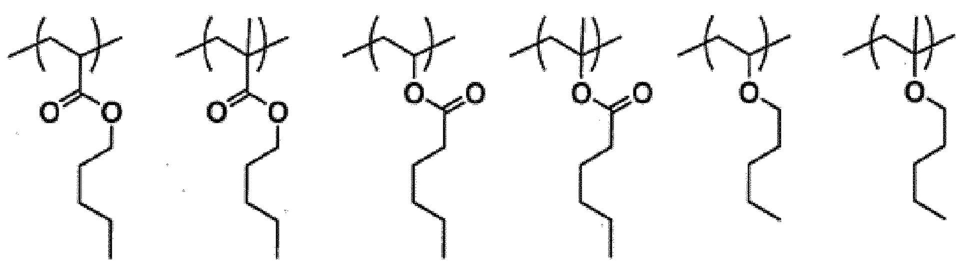

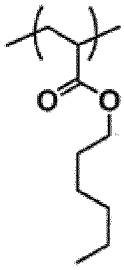 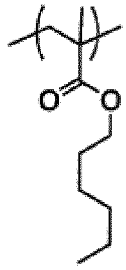 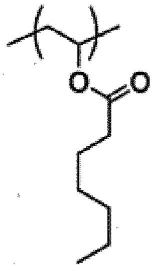 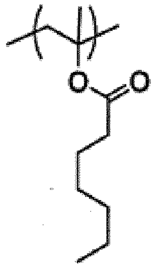 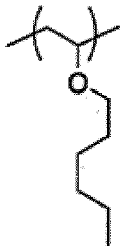 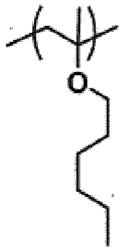

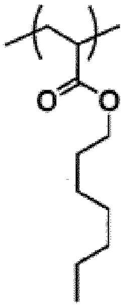 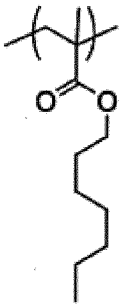 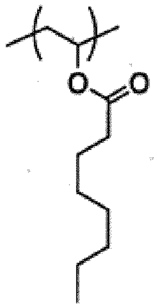 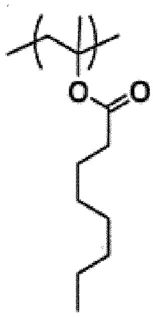 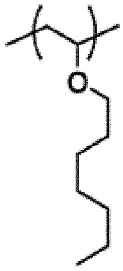 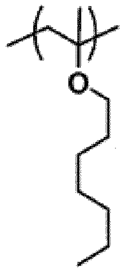

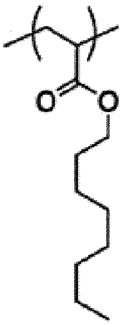 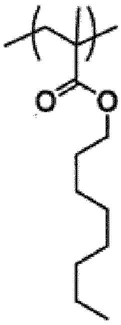 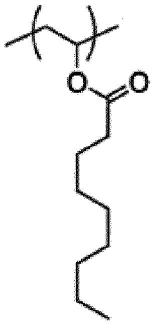 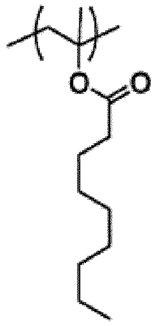 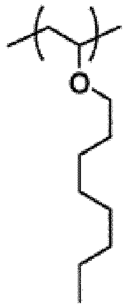 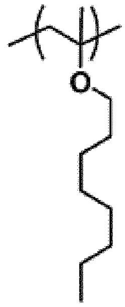

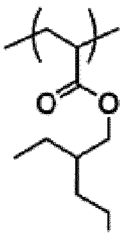 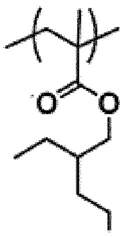 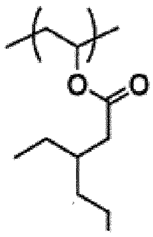 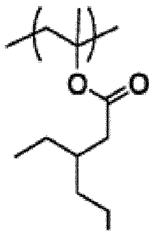 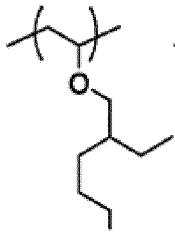 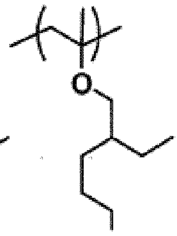

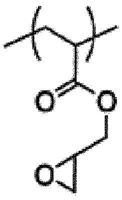 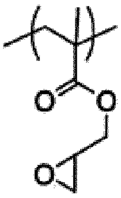 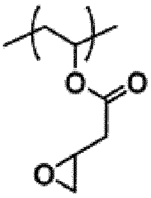 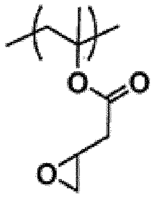 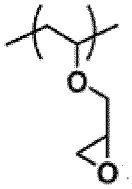 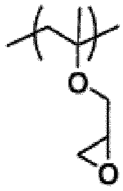

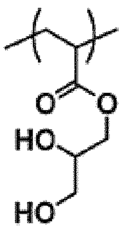
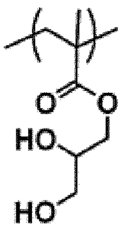
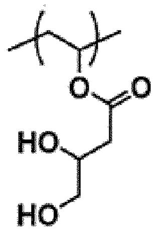
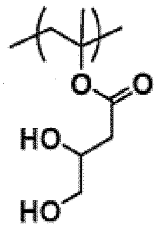
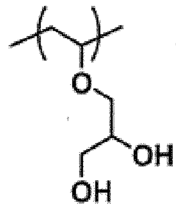
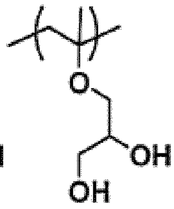

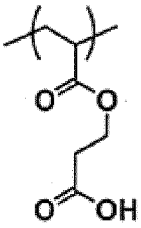
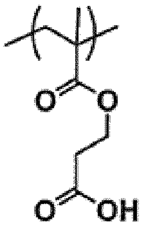
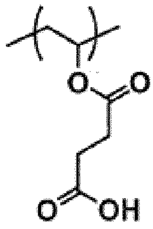
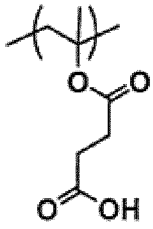
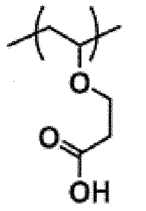
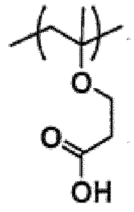

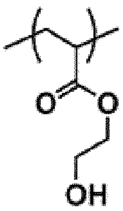
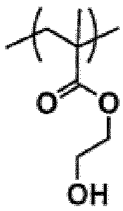
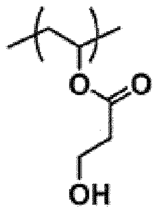
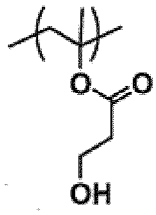
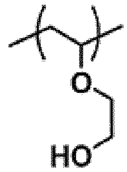
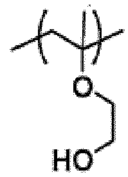

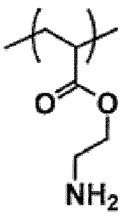
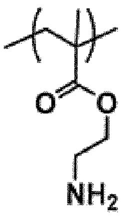
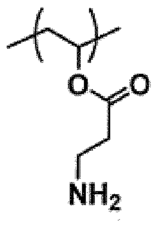
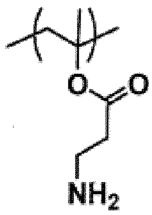
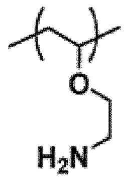
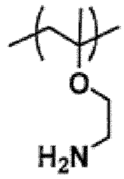

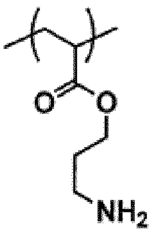
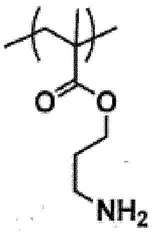
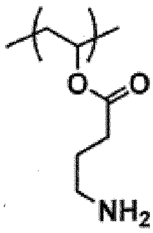
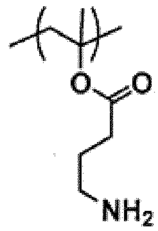
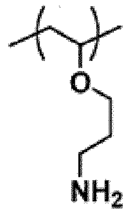
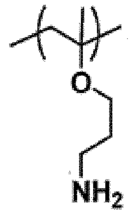

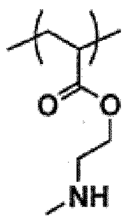
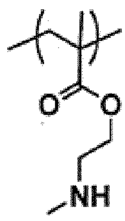
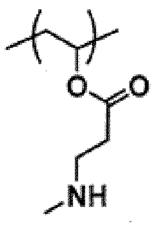
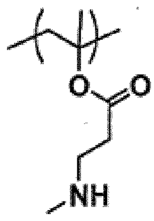
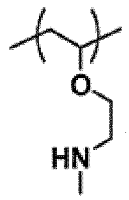
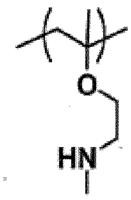

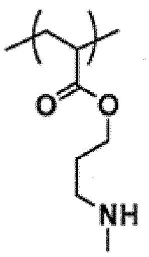 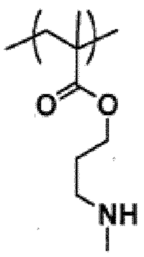 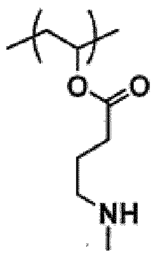 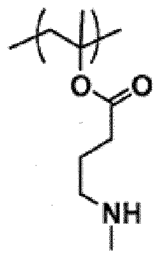 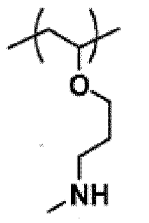 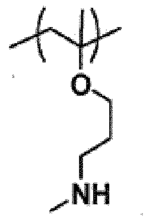

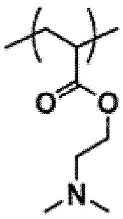 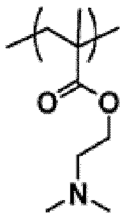 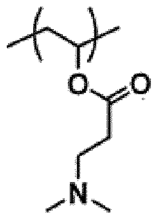 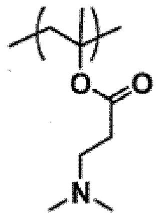 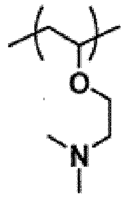 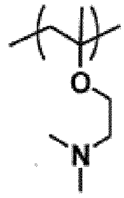

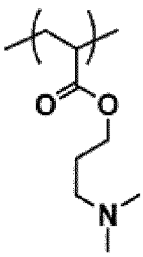 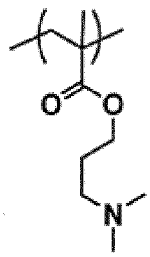 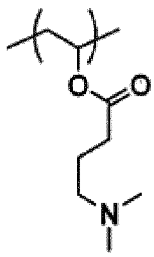 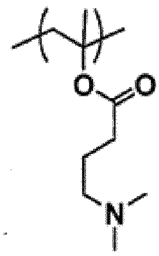 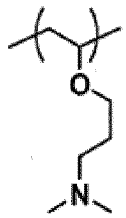 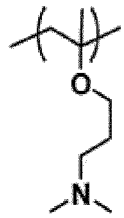

The structural unit represented by Formula (2) is preferably a structural unit represented by any one of the followings.

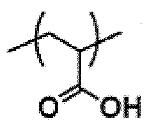 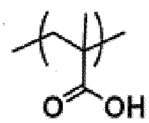 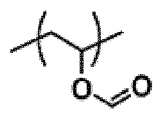 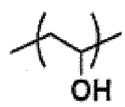

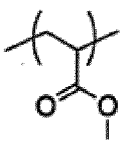 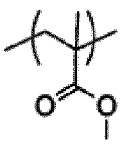 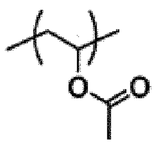 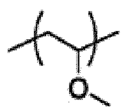

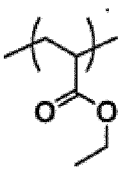 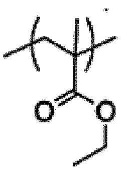 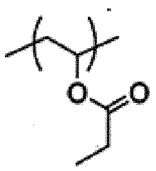 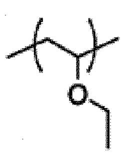

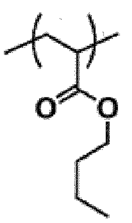 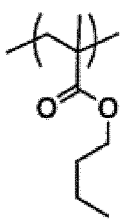 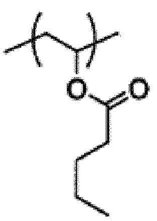 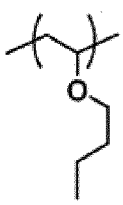

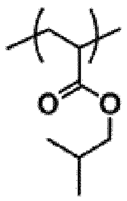 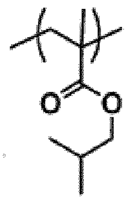 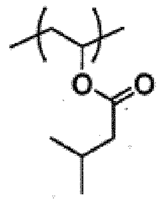 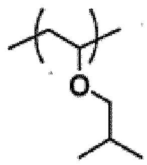

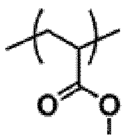 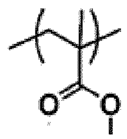 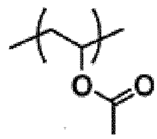 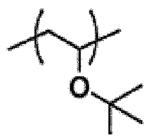

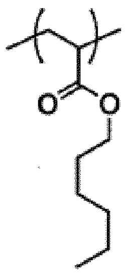 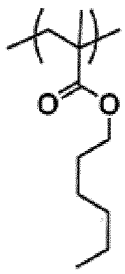 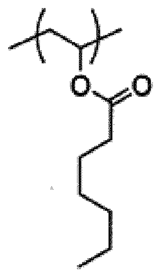 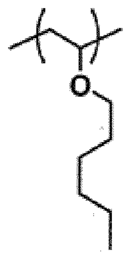

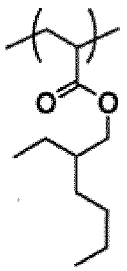 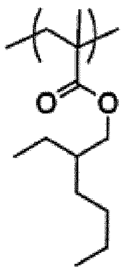 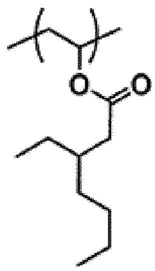 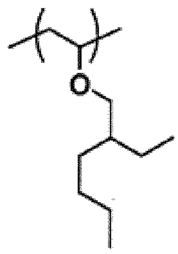

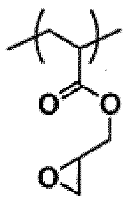 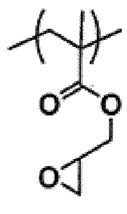 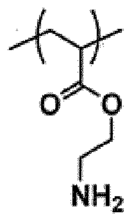 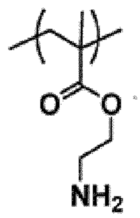

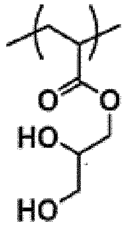 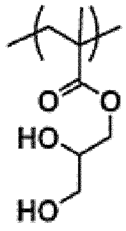 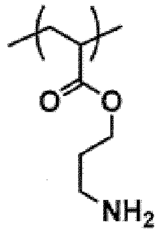 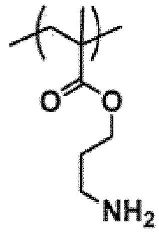

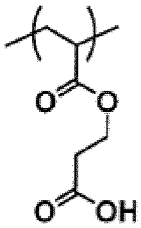
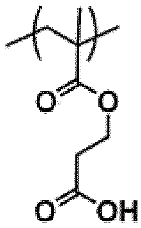
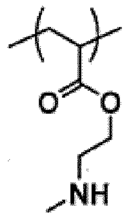
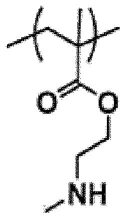

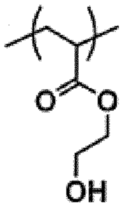
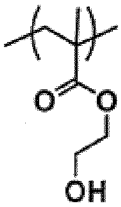
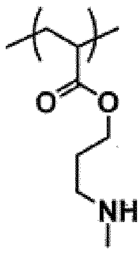
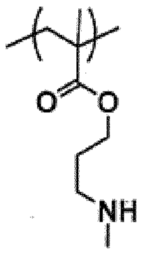
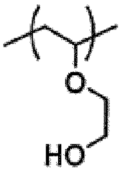
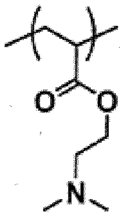
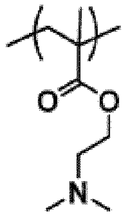

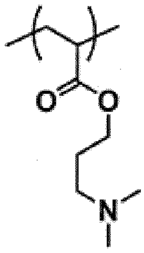
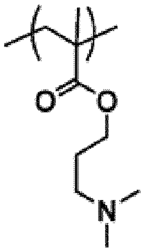

The structural unit represented by Formula (2) is more preferably a structural unit represented by any one of the followings.

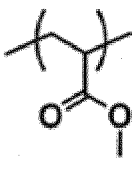
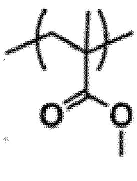
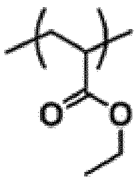
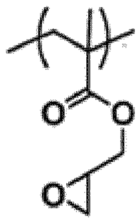
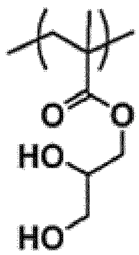

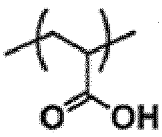
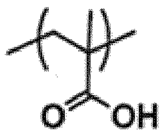

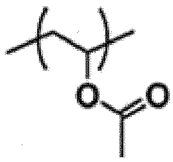

The structural unit represented by Formula (2) is further preferably a structural unit represented as below.

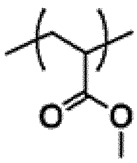

Examples of the structural unit represented by the formula (2) include a structural unit derived from acrylic acid, a structural unit derived from methacrylic acid, a structural unit derived from vinyl alcohol, a structural unit derived from methyl acrylate, a structural unit derived from ethyl acrylate, a structural unit derived from n-propyl acrylate, a structural unit derived from isopropyl acrylate, a structural unit derived from n-butyl acrylate, a structural unit derived from isobutyl acrylate, a structural unit derived from sec-butyl acrylate, a structural unit derived from tert-butyl acrylate, a structural unit derived from methyl methacrylate, a structural unit derived from ethyl methacrylate, a structural unit derived from n-propyl methacrylate, a structural unit derived from isopropyl methacrylate, a structural unit derived from n-butyl methacrylate, a structural unit derived from isobutyl methacrylate, a structural unit derived from sec-butyl methacrylate, a structural unit derived from tert-butyl methacrylate, a structural unit derived from vinyl formate, a structural unit derived from vinyl acetate, a structural unit derived from vinyl propionate, a structural unit derived from vinyl(n-butyrate), a structural unit derived from vinyl(isobutyrate), a structural unit derived from methyl vinyl ether, a structural unit derived from ethyl vinyl ether, a structural unit derived from n-propyl vinyl ether, a structural unit derived from isopropyl vinyl ether, a structural unit derived from n-butyl vinyl ether, a structural unit derived from isobutyl vinyl ether, a structural unit derived from sec-butyl vinyl ether, a structural unit derived from tert-butyl vinyl ether, a structural unit derived from glycidyl acrylate, a structural unit derived from glycidyl methacrylate, a structural unit derived from 2,3-dihydroxypropyl acrylate, a structural unit derived from 2,3-dihydroxypropyl methacrylate, a structural unit derived from 3-(dimethylamino)propyl acrylate, and a structural unit derived from 3-(dimethylamino)propyl methacrylate,
more preferably, a structural unit derived from acrylic acid, a structural unit derived from methacrylic acid, a structural unit derived from vinyl alcohol, a structural unit derived from methyl acrylate, a structural unit derived from ethyl acrylate, a structural unit derived from isopropyl acrylate, a structural unit derived from methyl methacrylate, a structural unit derived from ethyl methacrylate, a structural unit derived from isopropyl methacrylate, a structural unit derived from vinyl formate, a structural unit derived from vinyl acetate, a structural unit derived from glycidyl acrylate, a structural unit derived from glycidyl methacrylate, a structural unit derived from 2,3-dihydroxypropyl acrylate, a structural unit derived from 2,3-dihydroxypropyl methacrylate, a structural unit derived from 3-(dimethylamino)propyl acrylate, or a structural unit derived from 3-(dimethylamino)propyl methacrylate, or
further preferably a structural unit derived from acrylic acid, a structural unit derived from methacrylic acid, a structural unit derived from methyl acrylate, a structural unit derived from ethyl acrylate, a structural unit derived from methyl methacrylate, a structural unit derived from vinyl acetate, a structural unit derived from glycidyl methacrylate, or a structural unit derived from 2,3-dihydroxy propyl methacrylate, or
still more preferably a structural unit derived from methyl acrylate.

- The structural unit represented by Formula (3)

The structural unit represented by Formula (3) is a structural unit derived from maleic anhydride.
The polymer (1) according to the present invention may include two or more types of the structural unit (C), and, for example, may be a polymer including a structural unit derived from methyl acrylate, a structural unit derived from ethyl acrylate, and a structural unit derived from glycidyl methacrylate.
An example of the polymer (1) according to the present invention is a polymer including:

a structural unit (A),
a structural unit (B) represented by Formula (1) where R is a hydrogen atom or a methyl group, $L^1$ is -CO-O-, $L^2$ and $L^3$ are a single bond, and $L^6$ is $-(CH_2)_n-R^{f1}$, and

a structural unit (C) represented by Formula (2) where R is a hydrogen atom or a methyl group, $L^1$ is -CO-O-, $L^4$ is a $C_1$ alkylene group, and $L^5$ is a hydrogen atom,
where the total number of the structural unit (A), the structural unit (B), and the structural unit (C) is 90% or more where the total number of all structural units contained in the polymer is 100%.

The number of the structural unit (A) in the polymer (1) according to the present invention is not less than 70% but not more than 99%, where the total number of the structural unit (A), the structural unit (B), and the structural unit (C) is 100%, and the number of the structural unit (A) in the polymer (1) according to the present invention is preferably not less than 75% but not more than 99%, or more preferably not less than 80% but not more than 99%, for the sake of better moldability for the molded article including the polymer (1).

The total number of the structural unit (B) and the structural unit (C) in the polymer (1) according to the present invention is not less than 1% but not more than 30%, where the total number of the structural unit (A), the structural unit (B), and the structural unit (C) is 100%, and the number of the structural unit (B) and the structural unit (C) in the polymer (1) according to the present invention is preferably not less than 5% but not more than 30%, or more preferably not less than 10% but not more than 30%, for the sake of further better water-repellent property and oil-repellent property for the molded article including the polymer (1).

The number of the structural unit (B) in the polymer (1) according to the present invention is not less than 1% but not more than 99%, where the total number of the structural unit (B) and the structural unit (C) is 100%, and the number of the structural unit (B) in the polymer (1) according to the present invention is preferably not less than 10% but not more than 99%, more preferably not less than 20% but not more than 99%, or further preferably not less than 50% but not more than 99%, for the sake of further better water-repellent property and oil-repellent property for the molded article including the polymer (1).

The number of the structural unit (C) in the polymer (1) according to the present invention is not less than 1% but not more than 99%, where the total number of the structural unit (B) and the structural unit (C) is 100%, and the number of the structural unit (C) in the polymer (1) according to the present invention is preferably not less than 5% but not more than 99%, more preferably not less than 10% but not more than 99%, or further preferably not less than 20% but not more than 99%, for the sake of better moldability for the molded article including the polymer (1).

The number of the structural unit (A), the number of the structural unit (B), and the number of the structural unit (C) contained in the polymer (1) according to the present invention can be worked out, for example, from integrated values of signals attributed to the respective structural units in $^{13}C$ nuclear magnetic resonance spectrum (hereinafter, referred to as $^{13}C$-NMR spectrum) or in $^1H$ nuclear magnetic resonance spectrum (hereinafter, referred to as $^1H$-NMR spectrum) .

In case where the polymer (1) according to the present invention is a polymer produced by a production method comprising a step of reacting a polymer (hereinafter, may be referred to as a precursor polymer (1)) with the compound ($\alpha$), the polymer containing a structural unit (A) derived from ethylene and at least one kind of structural unit (C) in such a way that the number of the structural unit (A) is not less than 70% but not more than 99%, where the total number of the structural unit (A) and the structural unit (C) is 100%, the at least one kind of structural unit (C) being selected from the group consisting of structural units represented by Formula (2) above and a structural unit represented by Formula (3) above,
the number of the structural unit (A), the number of the structural unit (B) and the number of the structural unit (C) can be worked out by the following method, for example.

To begin with, the numbers of the structural unit (A) and the structural unit (C) contained in the precursor polymer (1) are worked out. In case where these numbers are worked out from $^{13}C$-NMR spectrum, fractions of dyads (AA, AC, and CC) between the structural unit (A) and the structural unit (C) are worked out from the spectrum, and substituted in equations below, thereby working out the numbers of the structural unit (A) and the structural unit (C). Here, AA stands for a structural unit (A)- structural unit (A) dyad, AC stands for a structural unit (A)-structural unit (C) dyad, and CC stands for a structural unit (C)- structural unit (C) dyad.

The number of the structural unit (A) = 100 - the number of the structural unit (C)

$$\text{The number of the structural unit (C)} = 100\,(AC/2 + CC)/(AA + AC + CC)$$

Next, because the structural unit (B) contained in the polymer (1) according to the present invention is formed as a result of the reaction between the structural unit (C) contained in the precursor polymer (1) and the compound ($\alpha$), an inversion rate of the structural unit (C) due to the reaction is worked out by a method described below.

The inversion rate is worked out by substituting, into the equation below, an integrated value of a signal attributed

to a particular carbon atom (for example, a carbonyl carbon atom) contained in a side chain of the structural unit (C) contained in the precursor polymer (1) (hereinafter, referred to as the integrated value Y) and an integrated value of a signal attributed to a particular carbon atom (for example, a carbonyl carbon atom) contained in a side chain of the structural unit (B) contained in the polymer (1) (hereinafter, referred to as the integrated value Z):

$$\text{Inversion rate} = Z/(Y + Z)$$

The reaction between the precursor polymer (1) and the compound (α) does not change the structural unit (A) contained the precursor polymer (1). Therefore, it is assumed that the number of the structural unit (A) in the polymer (1) and the number of the structural unit (A) in the precursor polymer (1) are equal.

The number of the structural unit (B) contained in the polymer (1) according to the present invention can be worked out as a product of multiplication of the number of the structural unit (C) in the precursor polymer (1) by the inversion rate. Therefore, the number of the structural unit (C) contained in the polymer (1) according to the present invention can be worked out as a difference between the number of the structural unit (C) contained in the precursor polymer (1) and the number of the structural unit (B) contained in the polymer (1).

The total amount of the structural unit (A) and the structural unit (C) contained in the polymer (1) according to the present invention is preferably 10 wt% or more, more preferably 20 wt% or more, or further preferably 30 wt% or more for the sake of better moldability for the molded article containing the polymer (1), where the total amount of the structural unit (A), the structural unit (B), and the structural unit (C) is 100 wt%.

The contents of the structural unit (B) contained in the polymer (1) according to the present invention is preferably 10 wt% or more, more preferably 30 wt% or more, or further preferably 50 wt% or more for the sake of further better water-repellent property and oil-repellent property for the molded article containing the polymer (1), where the total amount of the structural unit (A), the structural unit (B), and the structural unit (C) is 100 wt%.

Contents (wt%) of the structural unit (A), the structural unit (B), and the structural unit (C) contained in the polymer (1) according to the present invention can be worked out respectively by equations below.

wt% of the structural unit (A) = (the number of the structural unit (A) × the molecular weight of the structural unit (A))/(the number of the structural unit (A) × the molecular weight of the structural unit (A) + the number of the structural unit (B) × the molecular weight of the structural unit (B) + the number of the structural unit (C) × the molecular weight of the structural unit (C))

wt% of the structural unit (B) = (the number of the structural unit (B) × the molecular weight of the structural unit (B))/(the number of the structural unit (A) × the molecular weight of the structural unit (A) + the number of the structural unit (B) × the molecular weight of the structural unit (B) + the number of the structural unit (C) × the molecular weight of the structural unit (C))

wt% of the structural unit (C) = (the number of the structural unit (C) × the molecular weight of the structural unit (C))/(the number of the structural unit (A) × the molecular weight of the structural unit (A) + the number of the structural unit (B) × the molecular weight of the structural unit (B) + the number of the structural unit (C) × the molecular weight of the structural unit (C))

Examples of the production method for the polymer (1) according to the present invention include:

a polymer production method comprising a step of reacting
the precursor polymer (1)
with one or more kind of the compound (α) selected from the group consisting of the compound represented by Formula (11) above, the compound represented by Formula (12) above, the compound represented by Formula (13) above, the compound represented by Formula (14) above, the compound represented by Formula (15) above, the compound represented by Formula (16) above, the compound represented by Formula (17) above, and the compound represented by Formula (18) above; and
a method comprising copolymerizing ethylene, a monomer serving as a raw material of the structural unit (B) and a monomer serving as a raw material of the structural unit (C).

The precursor polymer (1) is a raw material for producing the polymer (1) according to the present invention, and does not contain the structural unit (B) represented by Formula (1). The precursor polymer (1) may contain a structural unit other than the structural unit (A), the structural unit (B), and the structural unit (C).

The number of the structural unit (A) included in the precursor polymer (1) is not less than 70% but not more than 99%, where the total number of the structural unit (A) and the structural unit (C) is 100%, and the number of the structural unit (A) in the polymer (1) is preferably not less than 75% but not more than 99%, or more preferably not less than 80% but not more than 99%, for the sake of better moldability for the molded article including the polymer (1) according to the present invention thus produced.

The number of the structural unit (C) included in the precursor polymer (1) is not less than 1% but not more than 30%, where the total number of the structural unit (A) and the structural unit (C) is 100%, and the number of the structural unit (A) in the polymer (1) is preferably not less than 5% but not more than 30%, or more preferably not less than 10% but not more than 30%, for the sake of further better water-repellent property and oil-repellent property for the molded article including the polymer (1) according to the present invention thus produced.

Examples of a method for forming the structural unit (B) contained in the polymer (1) according to the present

invention include: a method including reacting the structural unit (C) contained in the precursor polymer (1) with the compound (α); and a method including polymerizing a monomer serving as a raw material of the structural unit (B) .

Examples of the method including reacting the structural unit (C) contained in the precursor polymer (1) with the compound (α) include:

a method including reacting the structural unit (C) contained in the precursor polymer (1) with the compound represented by Formula (11), Formula (12), or Formula (14) above, where the structural unit (C) has an ester group as a functional group;

a method including reacting the structural unit (C) contained in the precursor polymer (1) with the compound represented by Formula (11), Formula (12), Formula (13), Formula (15), Formula (16), Formula (17), or Formula (18) above, where the structural unit (C) has a carboxy group as a functional group;

a method including reacting the structural unit (C) contained in the precursor polymer (1) with the compound represented by Formula (13), Formula (14), Formula (16), or Formula (18) above, where the structural unit (C) has a hydroxy group as a functional group;

a method including reacting the structural unit (C) contained in the precursor polymer (1) with the compound represented by Formula (13), Formula (14), Formula (15), Formula (16), Formula (17), or Formula (18) above, where the structural unit (C) has an amino group as a functional group;

a method including reacting the structural unit (C) contained in the precursor polymer (1) with the compound represented by Formula (11), Formula (12), Formula (14), Formula (15), or Formula (17) above, where the structural unit (C) has an epoxy group as a functional group.

A method including reacting the structural unit (C) contained in the precursor polymer (1) with the compound (α) preferably is: a method including reacting the structural unit (C) contained in the precursor polymer (1) with the compound represented by Formula (11), Formula (12), or Formula (14) above, where the structural unit (C) has an ester group as a functional group; or a method including reacting the structural unit (C) contained in the precursor polymer (1) with the compound represented by Formula (11), Formula (12), Formula (14), Formula (15), or Formula (17) above, where the structural unit (C) has an epoxy group as a functional group.

A method including reacting the structural unit (C) contained in the precursor polymer (1) with the compound (α) more preferably is: a method including reacting the structural unit (C) contained in the precursor polymer (1) with the compound represented by Formula (11), Formula (12), or Formula (14) above, where the structural unit (C) has an ester group as a functional group.

A method including reacting the structural unit (C) contained in the precursor polymer (1) with the compound (α) further preferably is: a method including reacting the structural unit (C) contained in the precursor polymer (1) with the compound represented by Formula (11) above, where the structural unit (C) has an ester group as a functional group.

Examples of a method for polymerizing ethylene and a monomer serving as a raw material of the structural unit (B) include a method including polymerizing:

ethylene; and

a monomer serving as a raw material of the structural unit (B) such as 1H,1H,2H,2H-tridecafluoro-1-octylacrylate, 1H,1H,2H,2H-heptadecafluoro-1-decylacrylate, 1H,1H,2H,2H-tridecafluoro-1-octylmethacrylate, 1H,1H,2H,2H-heptadecafluoro-1-decylmethacrylate, 1H,1H,2H,2H-tridecafluoro-1-vinyloctanoate, 1H,1H,2H,2H-heptadecafluoro-1-vinyldecanoate, 1H,1H,2H,2H-tridecafluoro-1-octylvinylether, or 1H,1H,2H,2H-heptadecafluoro-1-decylvinylether,

with an organic peroxide such as tert-butyl peroxypivalate, or an azo compound such as azobisisobutyronitrile as a polymerization initiator.

Examples of the precursor polymer (1) include ethylene-acrylic acid copolymer, ethylene-methacrylic acid copolymer, ethylene-vinyl alcohol copolymer, ethylene-methyl acrylate copolymer, ethylene-ethyl acrylate copolymer, ethylene-n-propyl acrylate copolymer, ethylene-n-butyl acrylate copolymer, ethylene-methyl methacrylate copolymer, ethylene-ethyl methacrylate copolymer, ethylene-n-propyl methacrylate copolymer, ethylene-n-butyl methacrylate copolymer, ethylene-vinyl formate copolymer, ethylene-vinyl acetate copolymer, ethylene-vinyl propionate copolymer, ethylene-vinyl(n-butyrate) copolymer, ethylene-methyl vinyl ether copolymer, ethylene-ethyl vinyl ether copolymer, ethylene-n-propyl vinyl ether copolymer, ethylene-n-butyl vinyl ether copolymer, ethylene-maleic anhydride copolymer, ethylene-glycidyl acrylate copolymer, ethylene-glycidyl methacrylate copolymer, ethylene-3-(dimethylamino)propyl acrylate copolymer, and ethylene-3-(dimethylamino)propyl methacrylate copolymer.

In the case where the polymer (1) according to the present invention is produced by the production method comprising a step of reacting the precursor polymer (1) with the compound (α), the compound (α) used is a compound (α) corresponding to $L^6$ (that is, $R^{f1}$- $(OR^{f2})_p$-$(CH_2)_n$-) constituting the targeted structural unit (B) contained in the polymer

(1).

In Formula (11) to Formula (18), examples and preferable ranges of $R^{f1}$, $R^{f2}$, n and p are equal to the examples and preferable ranges of $R^{f1}$, $R^{f2}$, n and p in Formula (1).

In Formula (11) to Formula (18), the halogen atom represented as X may be a chlorine atom, a bromine atom, or an iodine atom, for example.

Examples of the compound represented by Formula (11) include 1H,1H,2H,2H-tridecafluoro-1-octanol and 1H,1H,2H,2H-heptadecafluoro-1-decanol.

Examples of the compound represented by Formula (12) include 1H,1H,2H,2H-tridecafluoro-1-aminooctane and 1H,1H,2H,2H-heptadecafluoro-1-aminodecane.

Examples of the compound represented by Formula (13) include 1H,1H,2H,2H-tridecafluoro-1-chlorooctane and 1H,1H,2H,2H-heptadecafluoro-1-chlorodecane.

Examples of the compound represented by Formula (14) include 1H,1H,2H,2H-tridecafluoro-1-octanoate and 1H,1H,2H,2H-heptadecafluoro-1-decanoate.

Examples of the compound represented by Formula (15) include 1H,1H,2H,2H-tridecafluoro-1-octanamide and 1H,1H,2H,2H-heptadecafluoro-1-decanamide.

Examples of the compound represented by Formula (16) include 1H,1H,2H,2H-tridecafluoro-1-octanoic acid chloride and 1H,1H,2H,2H-heptadecafluoro-1-decanoic acid chloride.

Examples of the compound represented by Formula (17) include 1H,1H,2H,2H-tridecafluoro-1-octylurea and 1H,1H,2H,2H-heptadecafluoro-1-decylurea.

Examples of the compound represented by Formula (18) include 1H,1H,2H,2H-tridecafluoro-1-octylisocyanate and 1H,1H,2H,2H-heptadecafluoro-1-decylisocyanate.

A product of reactivity ratios, r1 $\times$ r2, is preferably not less than 0.5 but not more than 5.0, or more preferably not less than 0.5 but not more than 3.0, where r1 is a reactivity ratio of ethylene used as a raw material in producing the precursor polymer (1), and r2 is a reactivity ratio of a monomer forming the structural unit (C), because the molded article including the polymer (1) according to the present invention thus produced as such would attain a better shape retaining property.

The reactivity ratio of ethylene, r1, is a value defined as r1=k11/k12 in copolymerizing ethylene and a monomer to form the structural unit (C), where k11 represents the reaction rate of ethylene to bond to a polymer including the structural unit (A) at an end, and k12 represents the reaction rate of the monomer to form the structural unit (C) to bond to the polymer including the structural unit (A) at an end. The reactivity ratio, r1, is an index indicative of which of ethylene and a monomer to form the structural unit (C) a polymer including the structural unit (A) at an end is more reactive with in copolymerizing ethylene and a monomer to form the structural unit (C). Higher r1 indicates that the polymer including the structural unit (A) at an end is more reactive with ethylene, and a chain of the structural unit (A) is likely to be generated.

The reactivity ratio of a monomer to form the structural unit (C), r2, is a value defined as r2=k22/k21 in copolymerizing ethylene and a monomer to form the structural unit (C), where k21 represents the reaction rate of ethylene to bond to a polymer including the structural unit (C) at an end, and k22 represents the reaction rate of the monomer to form the structural unit (C) to bond to the polymer including the structural unit (C) at an end. The reactivity ratio, r2, is an index indicative of which of ethylene and a monomer to form the structural unit (C) a polymer including the structural unit (C) at an end is more reactive with in copolymerizing ethylene and a monomer to form the structural unit (C). Higher r2 indicates that the polymer including the structural unit (C) at an end is more reactive with the monomer to form the structural unit (C), and a chain of the structural unit (C) is likely to be generated.

The product of the reactivity ratios, rlr2, is calculated by using a method described in the literature "Kakugo, M.; Naito, Y; Mizunuma, K.; Miyatake, T. Macromolecules, 1982, 15, 1150". In the present invention, the product of the reactivity ratios, rlr2, is obtained by substituting the proportions of the fraction of dyads of the structural unit (A) and the structural unit (C), namely, AA, AC, and CC, calculated from a $^{13}C$ nuclear magnetic resonance spectrum for the precursor polymer (1) into the following formula.

$$r1r2 = AA[CC/(AC/2)^2]$$

The product of the reactivity ratios, rlr2, is an index indicative of the monomer chain distribution of a copolymer. The monomer chain distribution of a copolymer has higher randomness as the product of the reactivity ratios, rlr2 is closer to 1, and the monomer chain distribution of a copolymer has a higher degree of alternating copolymerization character as the product of the reactivity ratios, r1r2 is closer to 0, and the monomer chain distribution of a copolymer has a higher degree of block copolymerization character as the product of the reactivity ratios, r1r2 is larger beyond 1.

The melt flow rate (MFR) of the precursor polymer (1) as measured in accordance with JIS K7210 at a temperature of 190°C with a load of 21 N is preferably 0.1 g/10 min or higher and 500 g/10 min or lower, more preferably 1

g/10 min or higher and 100 g/10 min or lower, and even more preferably 5 g/10 min or higher and 50 g/10 min or lower.

Examples of methods for producing the precursor polymer (1) include a coordination polymerization method, a cationic polymerization method, an anionic polymerization method, and a radical polymerization method, and a radical polymerization method is preferred, and a radical polymerization method under high pressure is more preferred.

The reaction temperature for reacting the precursor polymer (1) and the compound ($\alpha$) is typically 40°C or higher and 250°C or lower. This reaction may be performed in the presence of a solvent. Examples of the solvent include hexane, heptane, octane, nonane, decane, toluene, and xylene. If any byproduct is generated in this reaction, the reaction may be performed while the byproduct is distilled off under reduced pressure to promote the reaction, or performed while the byproduct is azeotroped with the solvent, the volatilized byproduct and the solvent are cooled, the distillate containing the byproduct and the solvent is separated into a byproduct layer and a solvent layer, and only the recovered solvent layer is returned as a reflux solution into the reaction system.

The reaction between the precursor polymer (1) and the at least two compound ($\alpha$) may be performed while the precursor polymer (1) and the at least two compound ($\alpha$) are melt-kneaded together. If any byproduct is generated in reacting the precursor polymer (1) and the at least two compound ($\alpha$) with melt-kneading, the reaction may be performed while the byproduct is distilled off under reduced pressure to promote the reaction. Examples of the melt-kneading apparatus for the melt-kneading include a single-screw extruder, a twin-screw extruder, and a Banbury mixer. The temperature of the melt-kneading is preferably 100°C or higher and 250°C or lower.

In reacting the precursor polymer (1) and the compound ($\alpha$), a catalyst may be added to promote the reaction. Examples of the catalyst include alkali metal salts and group 4 metal complexes. Examples of alkali metal salts include alkali metal hydroxides such as lithium hydroxide, sodium hydroxide, and potassium hydoroxide; and alkali metal alkoxides such as lithium methoxide and sodium methoxide. Examples of group 4 metal complexes include tetra(isopropyl) orthotitanate, tetra(n-butyl) orthotitanate, and tetraoctadecyl orthotitanate. It is preferable that the loading of the catalyst be 0.01 parts by weight or more and 50 parts by weight or less with respect to 100 parts by weight of the total amount of the precursor polymer (1) and the compound ($\alpha$) to be used for the reaction, and the loading is more preferably 0.01 parts by weight or more and 5 parts by weight or less.

A polystyrene-based weight average molecular weight Mw of the polymer (1) according to the present invention is measured by gel permeation chromatography (GPC), and is preferably in a range of 10,000 to 5,000,000, more preferably in a range of 50,000 to 1,000,000, or further preferably in a range of 100,000 to 500,000.

The measurement of the polystyrene-based weight average molecular weight Mw of the polymer (1) according to the present invention by the gel permeation chromatography is generally carried out in such a way that a mobile phase is o-dichlorobenzene and a measuring temperature is 140°C.

The polymer (1) according to the present invention contains the structural unit (A) derived from ethylene, for the sake of a better moldability of the polymer (1). For the sake of a better blow moldability or a better foam moldability of the polymer (1) according to the present invention, it is preferable that the structural unit (A) derived from ethylene be present in the form of a branched structure in the polymer, and it is more preferable that the branched structure be a long-chain branched structure with a branch long enough to enable tangling of polymer chains.

The polymer (1) according to the present invention is configured such that a ratio A defined by Equation (I) below is preferably 0.95 or less, more preferably 0.90 or less, or further preferably 0.80 or less.

$$A = \alpha_1/\alpha_0 \quad (I)$$

[where $\alpha_1$ is a value obtained by working out a straight-line gradient $\alpha_1$ approximated to Equation (I-I) by least squares method and represented by Equation (I-I) within a range in which a logarithm of an absolute molecular weight and a logarithm of an intrinsic viscosity are equal to or greater than the weight average molecular weight of the polymer and equal to or less than a logarithm of z average molecular weight in terms of the horizontal axis,

where the absolute molecular weight and intrinsic viscosity of the polymer are measured by gel permeation chromatography using a device equipped with a light scattering photometer and a viscosity detector, and measured data is plotted against the logarithm of the absolute molecular weight as the horizontal axis and the logarithm of the intrinsic viscosity as the vertical axis,

$$\log[\eta_1] = \alpha_1 \log M_1 + \log K_1 \quad (I\text{-}I)$$

(where $[\eta_1]$ is the intrinsic viscosity of the polymer (unit: dl/g), $M_1$ is the absolute molecular weight of the polymer, and $K_1$ is a constant)

where $\alpha_0$ is a value obtained by working out a straight-line gradient $\alpha_0$ approximated to Equation (I-II) by least

squares method and represented by Equation (I-II) within a range in which a logarithm of absolute molecular weight and a logarithm of an intrinsic viscosity are equal to or greater than the weight average molecular weight of polyethylene control material 1475a (made by National Institute of Standards and Technology in USA) and equal to or less than a logarithm of z average molecular weight in terms of the horizontal axis,
where the absolute molecular weight and intrinsic viscosity of the polyethylene control material 1475a are measured by gel permeation chromatography using a device equipped with a light scattering photometer and a viscosity detector, and measured data is plotted against the logarithm of the absolute molecular weight as the horizontal axis and the logarithm of the intrinsic viscosity as the vertical axis,

$$\log[\eta_0] = \alpha_0 \log M_0 + \log K_0 \quad \text{(I-II)}$$

(where $[\eta_0]$ is the intrinsic viscosity of the polyethylene control material 1475a (unit: dl/g), Mo is the absolute molecular weight of the polyethylene control material 1475a, and $K_0$ is a constant)]

In the measurement of the absolute molecular weight and the intrinsic viscosity of each of the polymer and the polyethylene control material 1475a by using gel permeation chromatography, a mobile phase is generally ortho-dichlorobenzene and the measurement temperature is 155°C.

In determining the absolute molecular weight from data acquired with the light scattering detector and determining the intrinsic viscosity ($[\eta]$) with the viscosity detector, calculation is made by using the data processing software OmniSEC (version 4.7) from Malvern Instruments Limited on the basis of the literature "Size Exclusion Chromatography, Springer (1999)".

The polyethylene control material 1475a (produced by National Institute of Standards and Technology) is an unbranched high-density polyethylene.

Each of the formula (I-I) and the formula (I-II), which is called "Mark-Hauwink-Sakurada equation", represents the correlation between the intrinsic viscosity and molecular weight of a polymer, and the smaller the $\alpha_1$, the larger the number of tangling polymer chains in a branched structure. Since no branched structure is formed in the polyethylene control material 1475a, tangling of polymer chains in a branched structure is not generated. The smaller A, which is the ratio of $\alpha_1$ to $\alpha_0$ of the polyethylene control material 1475a, the larger the fraction of a long chain branched structure formed by the structural unit (A) in a polymer.

The polymer (1) according to the present invention may be forming a mixture with the compound ($\alpha$) left unreacted, or with a catalyst added to promote the reaction. It is preferable that the content of the compound ($\alpha$) left unreacted in the mixture be less than 3 parts by weight with respect to 100 parts by weight of the polymer.

The polymer (1) according to the present invention may be a crosslinked polymer, or an uncrosslinked polymer.

In one mode according to the present invention, the polymer (1) is an uncrosslinked polymer (hereinafter, may be referred to as "polymer ($\alpha$)").

The polymer ($\alpha$) has a gel fraction, which is described later, of less than 20 wt%.

It is preferable that the proportion of the number of the structural unit (A), the structural unit (B), and the structural unit (C) in total in the polymer ($\alpha$) be 90% or more with respect to 100% of the total number of all structural units contained in the polymer, and the proportion of the number is more preferably 95% or more, and even more preferably 100%.

<Crosslinked Polymer>

In one mode according to the present invention, the polymer (1) is crosslinked. Specifically, at least a part of molecules of the polymer (1) are linked together via intermolecular covalent bonding.

Examples of methods for crosslinking the polymer ($\alpha$) include a method of crosslinking through irradiation with ionizing radiation and a method of crosslinking with an organic peroxide.

In crosslinking through irradiating the polymer ($\alpha$) with ionizing radiation, the polymer ($\alpha$) molded into a desired shape in advance is typically irradiated with ionizing radiation. Any known method can be used for molding, and extrusion, injection molding, or press molding are preferred. The molded article to be irradiated with ionizing radiation may be a molded article containing the polymer ($\alpha$) only, or a molded article containing the polymer ($\alpha$) and a polymer different from the polymer ($\alpha$). Examples of the polymer different from the polymer ($\alpha$) include a polymer (2) described later. In the case that the molded article contains the polymer ($\alpha$) and the polymer (2), it is preferable that the content of the polymer ($\alpha$) be 1 wt% or more and 99 wt% or less, with respect to 100 wt% of the total amount of the polymer ($\alpha$) and the polymer (2) .

Examples of ionizing radiation include $\alpha$-rays, $\beta$-rays, $\gamma$-rays, electron beams, neutron beams, and X-rays, and $\gamma$-rays from cobalt-60 and electron beams are preferred. In the case that the molded article containing the polymer is in

the form of a sheet, at least one surface of the molded article in the form of a sheet can be suitably irradiated with ionizing radiation.

Irradiation with ionizing radiation is performed by using a known ionizing radiation irradiator. The dose is typically 5 to 300 kGy, and preferably 10 to 150 kGy. The polymer according to the present invention can attain a higher degree of crosslinking with a low dose.

In obtaining the polymer (1) crosslinked through irradiation with ionizing radiation, a higher degree of crosslinking is achieved for the polymer (1) if the molded article to be irradiated with ionizing radiation contains a crosslinking aid. The crosslinking aid is for the purpose of increasing the degree of crosslinking of the polymer (1) to improve the mechanical properties, and a compound including a plurality of double bonds in the molecule is preferably used. Examples of the crosslinking aid include N,N'-m-phenylene bismaleimide, toluylene bismaleimide, triallyl isocyanurate, triallyl cyanurate, p-quinone dioxime, nitrobenzene, diphenylguanidine, divinylbenzene, ethylene glycol dimethacrylate, polyethylene glycol dimethacrylate, trimethylolpropane trimethacrylate, trimethylolpropane triacrylate, and allyl methacrylate. More than one of these crosslinking aids may be used solely or in combination.

It is preferable that the loading of the crosslinking aid be 0.01 to 4.0 parts by weight with respect to 100 parts by weight of the total weight of the polymer ($\alpha$) and the polymer different from the polymer ($\alpha$) contained in the molded article to be irradiated with ionizing radiation, and it is more preferable that the loading of the crosslinking aid be 0.05 to 2.0 parts by weight.

Examples of the method of crosslinking with an organic peroxide include a method of crosslinking of the polymer ($\alpha$) by subjecting a composition containing the polymer ($\alpha$) and an organic peroxide to a known molding method involving heating. Examples of the known molding method involving heating include extrusion, injection molding, and press molding. The composition containing the polymer ($\alpha$) and an organic peroxide may contain the polymer according to the present invention as the only polymer component, or contain the polymer according to the present invention and a polymer different from the polymer.

In the case that the composition containing the polymer ($\alpha$) and an organic peroxide contains a polymer different from the polymer ($\alpha$), examples of the polymer different from the polymer ($\alpha$) include a polymer (2) described later, and it is preferable that the content of the polymer ($\alpha$) be 1 wt% or more and 99 wt% or less with respect to 100 wt% of the total amount of the polymer ($\alpha$) and the polymer (2).

In crosslinking the polymer ($\alpha$) with an organic peroxide, an organic peroxide having a decomposition temperature equal to or higher than the fluidizing temperature of the polymer component contained in the composition containing the polymer ($\alpha$) and an organic peroxide is preferable. Preferred examples of the organic peroxide include dicumyl peroxide, 2,5-dimethyl-2,5-di-tert-butylperoxyhexane, 2,5-dimethyl-2,5-di-tert-butylperoxyhexyne, $\alpha$,$\alpha$-di-tert-butylperoxyisopropylbenzene, and tert-butylperoxy-2-ethylhexyl carbonate.

The crosslinked polymer (1) may contain a known additive, as necessary. Examples of the additive include flame retardants, antioxidants, weatherproofing agents, lubricants, anti-blocking agents, antistatics, anti-fogging agents, anti-drip agents, pigments, and fillers. These additives can be added through kneading with the polymer ($\alpha$) before crosslinking the polymer ($\alpha$).

The gel fraction of the crosslinked polymer (1) is preferably 20 wt% or more, more preferably 40 wt% or more, even more preferably 60 wt% or more, and the most preferably 70 wt% or more. The gel fraction is indicative of the degree of crosslinking of a crosslinked polymer, and a situation that the gel fraction of a polymer is high indicates that the polymer has a higher degree of crosslinked structure and a more robust network structure is formed. If the gel fraction of a polymer is high, the polymer has a high shape retaining property, and is less likely to deform.

The gel fraction is determined in the following manner.

Approximately 500 mg of a polymer and an empty mesh basket fabricated from a metal mesh (mesh size: 400 mesh) are weighed. The mesh basket encapsulating the polymer and 50 mL of xylene (Grade of Guaranteed reagent produced by KANTO CHEMICAL CO., INC., or an equivalent product; mixture of o-xylenes, m-xylenes, and p-xylenes and ethylbenzene, total weight of o-xylenes, m-xylenes, and p-xylenes: 85 wt% or more) are introduced into a 100 mL test tube, and subjected to heating extraction at 110°C for 6 hours. After the extraction, the mesh basket with an extraction residue is removed from the test tube, and dried under reduced pressure by using a vacuum dryer at 80°C for 8 hours, and the mesh basket with an extraction residue after drying is weighed. The gel weight is calculated from the difference in weight between the mesh basket with an extraction residue after drying and the mesh basket when being empty. The gel fraction (wt%) is calculated by the following formula.

$$\text{Gel fraction} = (\text{Gel weight}/\text{Weight of measurement sample}) \times 100$$

<Resin composition>

The resin composition according to the present invention includes: the polymer (1); and
a polymer (2) which is a polymer whose melting peak temperature or glass transition temperature observed by differential scanning calorimetry is not less than 50°C but not higher than 180°C, wherein an excluding polymer described above is excluded from the polymer (2), and
in the resin composition (hereinafter, may be referred to as "the resin composition (1)"), where the total amount of the polymer (1) and the polymer (2) is 100 wt%, a content of the polymer (1) is not less than 1 wt% but not more than 99 wt% and a content of the polymer (2) is not less than 1 wt% but not more than 99 wt%,
a content of the polymer (1) is preferably not less than 1 wt% but not more than 50 wt% and a content of the polymer (2) is not less than 50 wt% but not more than 99 wt%,
a content of the polymer (1) is more preferably not less than 1 wt% but not more than 30 wt% and a content of the polymer (2) is not less than 70 wt% but not more than 99 wt%, and
a content of the polymer (1) is further preferably not less than 1 wt% but not more than 10 wt% and a content of the polymer (2) is not less than 90 wt% but not more than 99 wt%.
The resin composition (1) according to the present invention may be configured to contain two or more kinds of the polymers (1), and may be configured to contain two or more kinds of the polymers (2).
A melting peak temperature or glass transition temperature of the polymer (2) observed by differential scanning calorimetry (DSC) measurement is not less than 50°C but not more than 180°C.
The melting peak temperature of the polymer (2) is a temperature at an extremum of a melting peak obtained by analyzing, according to a method based on JIS K7121-1987, a melting curve measured by differential scanning calorimetry measurement as below, and is a temperature at which melting heat absorption amount is maximum.
The glass transition temperature of the polymer (2) is an intermediate glass transition temperature determined through analysis of a melting curve acquired in differential scanning calorimetry measurement described later by using a method in accordance with JIS K7121-1987.

[Differential Scanning Calorimetry Measurement Method]

Using a differential scanning calorimeter under nitrogen atmosphere, an aluminum pan encapsulating approximately 5 mg of a sample therein is Step (1) retained at 200°C for 5 minutes, and then Step (2) cooled from 200°C to -80°C at a rate of 5°C/min, and then Step (3) retained at -80°C for 5 minutes, and then Step (4) warmed from -80°C to 200°C at a rate of 5°C/min. A differential scanning calorimetry curve acquired in the calorimetry of the process Step (4) is defined as a melting curve.
Examples of the polymer (2) having a melting peak temperature in the range of 50°C or higher and 180°C or lower include high-density polyethylene (HDPE), high-pressure low-density polyethylene (LDPE), ethylene-α-olefin copolymer, ethylene-vinyl acetate copolymer (EVA), and polypropylene (PP).
Examples of the polymer (2) having a glass transition temperature in the range of 50°C or higher and 180°C or lower include cyclic olefin polymer (COP), cyclic olefin copolymer (COC), polystyrene (PS), polyvinyl chloride (PVC), acrylonitrile-styrene copolymer (AS), acrylonitrile-butadiene-styrene copolymer (ABS), polymethyl methacrylate (PMMA), polyvinyl alcohol (PVA), polyethylene terephthalate (PET), polyacrylonitrile (PAN), polyamide 6 (PA6), polyamide 66 (PA66), polycarbonate (PC), polyphenylene sulfide (PPS), and polyether ether ketone (PEEK).
The ethylene-α-olefin copolymer as the polymer (2) is a copolymer including a structural unit derived from ethylene and a structural unit derived from α-olefin. Examples of the α-olefin include propylene, 1-butene, 1-pentene, 1-hexene, 1-heptene, 1-octene, 4-methyl-1-pentene, and 4-methyl-1-hexene, and the α-olefin may be one of these, or two or more thereof. The α-olefin is preferably a $C_4$ to $C_8$ α-olefin, and more preferably 1-butene, 1-hexene, or 1-octene.
The density of the high-density polyethylene as the polymer (2), high-pressure low-density polyethylene, or ethylene-α-olefin copolymer is generally 860 kg/$m^3$ or higher and 960 kg/$m^3$ or lower.
Examples of the polypropylene as the polymer (2) include propylene homopolymer, propylene random copolymer described later, and propylene polymer material described later. The content of the structural unit derived from propylene in the polypropylene is generally more than 50 wt% and 100 wt% or less (assuming the total amount of the structural units constituting the polypropylene as 100 wt%).
The polypropylene as the polymer (2) has preferably the melting peak temperature of 100°C or higher.
The polypropylene as the polymer (2) is preferably propylene homopolymer.

The propylene random copolymer:

A random copolymer including a structural unit derived from propylene and at least one structural unit selected from the group consisting of a structural unit derived from ethylene and a structural unit derived from α-olefin. Examples

of the propylene random copolymer include propylene-ethylene random copolymer, propylene-ethylene-α-olefin random copolymer, and propylene-α-olefin random copolymer. It is preferable that the α-olefin be a $C_4$ to $C_{10}$ α-olefin. Examples of such α-olefin include linear α-olefin such as 1-butene, 1-pentene, 1-hexene, 1-octene, and 1-decene, and branched α-olefin such as 3-methyl-1-butene and 3-methyl-1-pentene. The structural unit derived from the α-olefin contained in the propylene random copolymer may be one α-olefin or two or more α-olefins.

Examples of methods for producing the propylene homopolymer and propylene random copolymer include polymerization methods including a slurry polymerization method, solution polymerization method, bulk polymerization method, and gas phase polymerization method with a Ziegler-Natta catalyst or a complex catalyst such as a metallocene catalyst and a non-metallocene catalyst.

The propylene polymer material:

A polymer material consisting of a propylene homopolymer component (I) and an ethylene copolymer component (II), in which the ethylene copolymer component (II) includes: at least one structural unit selected from the group consisting of a structural unit derived from propylene and a structural unit derived from $C_4$ or more α-olefin; and a structural unit derived from ethylene.

Examples of the $C_4$ or more α-olefin in the ethylene copolymer component (II) include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4-methyl-1-pentene, 2-ethyl-1-hexene, and 2,2,4-trimethyl-1-pentene. It is preferable that the $C_4$ or more α-olefin be a $C_4$ to $C_{20}$ α-olefin, it is more preferable that the $C_4$ or more α-olefin be a $C_4$ to $C_{10}$ α-olefin, and it is even more preferable that the $C_4$ or more α-olefin be 1-butene, 1-hexene, or 1-octene.

The structural unit derived from the $C_4$ or more α-olefin contained in the ethylene copolymer component (II) may be one α-olefin or two or more α-olefins.

Examples of the ethylene copolymer component (II) include propylene-ethylene copolymer, ethylene-1-butene copolymer, ethylene-1-hexene copolymer, ethylene-1-octene copolymer, propylene-ethylene-1-butene copolymer, propylene-ethylene-1-hexene copolymer, and propylene-ethylene-1-octene copolymer.

The ethylene copolymer component (II) may be a random copolymer or a block copolymer.

The propylene polymer material can be produced through multistage polymerization with a polymerization catalyst. For example, the propylene polymer material can be produced in such a manner that the propylene homopolymer component (I) is produced in the former polymerization step, and the ethylene copolymer component (II) is produced in the latter polymerization step.

Examples of the polymerization catalyst for production of the propylene polymer material include the catalysts for production of the propylene homopolymer and the propylene random copolymer.

Examples of polymerization methods in the polymerization steps in the case of producing the propylene polymer material include a bulk polymerization method, solution polymerization method, slurry polymerization method, and gas phase polymerization method. Examples of inert hydrocarbon solvent for a solution polymerization method and slurry polymerization method include propane, butane, isobutane, pentane, hexane, heptane, and octane. Two or more of these polymerization methods may be combined, and these polymerization methods may be in a batch mode or a continuous mode. It is preferable that the polymerization method in the case of producing the propylene polymer material be continuous gas phase polymerization or bulk-gas phase polymerization in which bulk polymerization and gas phase polymerization are sequentially performed.

In subjecting the resin composition according to the present invention to extrusion, injection molding, vacuum molding, blow molding, or rolling, it is preferable for moldability that the melt flow rate (MFR) of the resin composition as measured in accordance with JIS K7210 at a temperature of 230°C with a load of 2.16 kgf be 0.1 g/10 min or higher and 100 g/10 min or lower.

In forming a fiber from the resin composition according to the present invention through spinning as described later, it is preferable that the melt flow rate (MFR) of the resin composition as measured in accordance with JIS K7210 at a temperature of 230°C with a load of 2.16 kgf be 1 g/10 min or higher and 1000 g/10 min or lower.

<Composition>

The composition according to the present invention includes the polymer according to the present invention and an additive(s) selected from inorganic fillers, organic fillers, anti-oxidants, weathering agents, ultraviolet absorbing agents, heat stabilizing agents, light stabilizers, anti-static agents, crystal nucleating agents, pigments, adsorbents, metal chlorides, hydrotalcite, aluminates, lubricants, silicone compounds, and the like. The composition according to the present invention may be a resin composition according to the present invention.

The composition according to the present invention may be prepared in such a way that the additive(s) is/are

added, in advance, in the raw material for use in producing the polymer according to the present invention, or may be prepared in such a way that, after the polymer according to the present invention is produced, the additive(s) is/are added therein. In case where the additive(s) is/are added in the polymer according to the present invention after the polymer is produced, the additive(s) may be added therein while melting and mixing of the polymer according to the present invention is being carried out.

An amount of the additive(s) added as a whole
is preferably not less than 0.001 parts by weight but not more than 10 parts by weight, more preferably not less than 0.005 parts by weight but not more than 5 parts by weight, or further preferably not less than 0.01 parts by weight but not more than 1 part by weight,
with respect to 100 parts by weight of the polymer according to the present invention or to 100 parts by weight of the sum of the polymer (1) and the polymer (2) described above.

Examples of inorganic fillers include talc, calcium carbonate, and calcined kaolin.

Examples of organic fillers include fibers, wood flours, and cellulose powders.

Examples of antioxidants include phenol-based antioxidants, sulfur-containing antioxidants, phosphorus-containing antioxidants, lactone antioxidants, and vitamin antioxidants.

Examples of UV absorbers include benzotriazole-based UV absorbers, tridiamine-based UV absorbers, anilide UV absorbers, and benzophenone-based UV absorbers.

Examples of light stabilizers include hindered amine light stabilizers and benzoate light stabilizers.

Examples of pigments include titanium dioxide and carbon black.

Examples of adsorbents include metal oxides such as zinc oxide and magnesium oxide.

Examples of metal chlorides include iron chloride and calcium chloride.

Examples of lubricants include fatty acids, higher alcohols, aliphatic amides, and aliphatic esters.

The polymer and composition and molded articles of these according to the present invention may be applicable as sliding materials, flame retardants, mold-releasing agents, and anti-fouling materials.

The polymer and composition and molded articles of these according to the present invention are so excellent in moldability that they have any shape, which may be, for example, a spherical shape, a cornered shape (cubic shape), a prayer-beads shape (beads shape), a cylindrical shape (pellet shape), a powder shape, a bar shape (stick shape), a needle-like shape, a fibrous shape (fiber shape), a strand shape, a thread-like shape, a string-like shape, a rope-like shape, a thick-rope-like shape, a board-like shape, a sheet-like shape, a film-like shape (film shape), a fabric shape, a non-woven-fabric shape, a box-like shape (capsule shape), a foamed shape, and any arbitrary three-dimensional shapes, so that the shape may be selected as appropriate according to intended use.

The molded articles having a spherical shape, a cornered shape (cubic shape), a prayer-beads shape (beads shape), a cylindrical shape (pellet shape), or a powder shape may have such a core-shell structure that the polymer according to the present invention is covered with a material other than the polymer according to the present invention, or may have such a core-shell structure that a material other than the polymer according to the present invention is covered with the polymer according to the present invention. The material other than the polymer according to the present invention may be a polymer other than the polymer according to the present invention, a metal, and a non-metallic inorganic material, for example.

The molded articles having a bar shape (stick shape), a needle-like shape, a fibrous shape (fiber shape), a strand shape, a thread-like shape, a string-like shape, a rope-like shape, or a thick-rope-like shape may have such a core-sheath structure in which the polymer according to the present invention is covered with a material other than the polymer according to the present invention, or may have such a core-sheath structure in which a material other than the polymer according to the present invention is covered with the polymer according to the present invention.

The molded articles having a board-like shape, a sheet-like shape, a film-like shape (film shape), a fabric shape, a non-woven-fabric shape, a box-like shape, or a capsule shape may have such a lamination structure that a polymer according to the present invention is covered with a material or materials other than the polymer according to the present invention on one side or both sides, or may have such a lamination structure that a material other than the polymer according to the present invention is covered with a polymer(s) according to the present invention on one side or both sides.

The molded article having a foamed shape may form,
with the molded article having a shape other than the foamed shape or a material other than the polymer according to the present invention,
a core-shell structure, a core-sheath structure, or a lamination structure.

The molded article can have any three-dimensional shape by molding, such as extrusion molding, injection molding, vacuum molding, blow molding, or roll molding, and in any of these cases, the molded article may be molded to have a multi-layered structure with a material other than the polymer according to the present invention.

<Fiber including the polymer>

The fiber including the polymer according to the present invention can be obtained by spinning a resin composition comprising the polymer (1) (hereinafter, this resin composition may be referred to as "resin composition (A)").

The resin composition (A) may contain the polymer (1) as the only polymer component, or contain the polymer (1) and a polymer different from the polymer (1). In the case that the resin composition (A) contains a polymer different from the polymer (1), examples of the polymer include the polymer (2). In the case that the resin composition (A) contains the polymer (1) and the polymer (2), it is preferable that the content of the polymer (1) be 1 wt% or more and 99 wt% or less and the content of the polymer (2) be 1 wt% or more and 99 wt%/o or less, with respect to 100 wt% of the total amount of the polymer (1) and the polymer (2) .

In the case that the resin composition (A) contains the polymer (1) and a polymer different from the polymer (1) and the polymer different from the polymer (1) is incompatible with the polymer (1), the phase consisting of the polymer (1) and the phase consisting of the polymer different from the polymer (1) generally form morphology of sea-island structure, cylinder structure, lamellar structure, co-continuous structure, etc.

The cross-sectional shape of the fiber containing the resin composition (A) may be a circular cross-section, an irregular cross-section such as a polygon or multilobal shape, or a hollow cross-section.

It is preferable for ease in fiber formation that the single yarn fineness of the fiber containing the resin composition (A) be 1 dtex or higher, and it is preferable for the flexibility of the fiber that the single yarn fineness of the fiber containing the resin composition (A) be 20 dtex or lower, though the single yarn fineness is not limited thereto.

Examples of methods for producing the fiber containing the resin composition (A) include dry spinning, wet spinning, and melt spinning, and melt spinning is preferred. Common spinning uses chips containing a resin composition as a raw material, and consists of two steps, namely, a step of spinning and a step of drawing. On the other hand, examples of spinning methods suitable for the production method for the fiber containing the resin composition (A) include: continuous polymerization/spinning, in which a resin composition is spun continuously after a step of producing a resin composition without forming chips from the resin composition, direct spinning/drawing (spin-drawing), in which a step of spinning and a step of drawing are performed in one step; high-speed spinning, in which a step of drawing is not needed; a POY-DTY method, in which partially-oriented yarn (POY) is obtained and draw textured yarn (DTY) is then obtained in a step of false-twisting; and spun-bonding. These methods are more rationalized methods than the common spinning.

The fiber containing the resin composition (A) can be a composite fiber. Composite fibers are fibers in which two or more fibers consisting of different components are bonded together in single yarn. Examples of the composite fiber include a core-sheath type composite fiber, an adhered-type composite fiber, a divided type composite fiber, and an islands-in-sea type composite fiber.

It is preferable for ease in fiber formation that the single yarn fineness of the composite fiber containing the resin composition (A) be 1 dtex or higher, and it is preferable for the flexibility of the fiber that the single yarn fineness of the composite fiber containing the resin composition (A) be 20 dtex or lower, though the single yarn fineness is not limited thereto.

Examples of a structure of the core-sheath type composite fiber include a core-sheath structure in which a material other than the resin composition (A) is covered with the resin composition (A), and a core-sheath structure in which the resin composition (A) is covered with a material other than the resin composition (A). It is preferable that the core-sheath type composite fiber has a core-sheath structure in which a material other than the resin composition (A) is covered with the resin composition (A). It is preferable that the material other than the resin composition (A) be the polymer (2), and it is more preferable that the material other than the resin composition (A) be polypropylene (PP), polyethylene terephthalate (PET), polytrimethylene terephthalate (PTT), polybutylene terephthalate (PBT), polyamide 6 (PA6), or polyamide 66 (PA66).

A preferable core-sheath type composite fiber having a core-sheath structure in which a material other than the resin composition (A) is covered with the resin composition (A) is a core-sheath type composite fiber in which an area percentage of a sheath portion in a cross section along a fiber diameter direction is in a range of 10% to 90%.

An adhered-type composite fiber crimps due to a shrinkage rate difference between strings of the fiber, one of which is a fiber including the resin composition (A) or the other reason. In case where the conjugate fiber crimps helically, the resin composition (A) may be an outer fiber in the helix or a material other than the resin composition (A) may be the outer fiber in the helix. It is preferable that the adhered-type composite fiber is such that the resin composition (A) is an outer fiber in the helix. It is preferable that the material other than the resin composition (A) be the polymer (2), and it is more preferable that the material other than the resin composition (A) be polypropylene (PP), polyethylene terephthalate (PET), polytrimethylene terephthalate (PTT), polybutylene terephthalate (PBT), polyamide 6 (PA6), or polyamide 66 (PA66).

A divided type composite fiber is such that ultra-fine fibers are obtained by dividing and opening the fiber including the resin composition (A) by chemically treating the fiber including the resin composition (A). In case where

the divided type composite fiber includes a radially-spiny fiber as a core and a plurality of wedged fibers as surrounding fibers, the resin composition (A) may be the plurality of wedged fibers as the surrounding fibers, or the material other than the resin composition (A) may be the plurality of wedged fibers as the surrounding fibers. Preferably, the divided type composite fiber is such that the resin composition (A) is the plurality of wedged fibers as the surrounding fibers. It is preferable that the material other than the resin composition (A) be the polymer (2), and it is more preferable that the material other than the resin composition (A) be polypropylene (PP), polyethylene terephthalate (PET), polytrimethylene terephthalate (PTT), polybutylene terephthalate (PBT), polyamide 6 (PA6), or polyamide 66 (PA66).

An islands-in-sea type composite fiber is such that chemical treatment of the fiber including the resin composition (A) removes sea-part fibers from the fiber including the resin composition (A), thereby obtaining ultra-fine fibers having a plurality of island-part fibers. The resin composition (A) may be the island-part fibers, or the material other than the resin composition (A) may be the island-part fiber. Preferably, the islands-in-sea type composite fiber is such that resin composition (A) be the island-part fibers. It is preferable that the material other than the resin composition (A) be the polymer (2), and it is more preferable that the material other than the resin composition (A) be polypropylene (PP), polyethylene terephthalate (PET), polytrimethylene terephthalate (PTT), polybutylene terephthalate (PBT), polyamide 6 (PA6), or polyamide 66 (PA66).

Examples of forms of the fiber including the resin composition (A) include long fibers (multi filaments and mono filaments) and shot fibers (staples). The long fibers (multi filaments and mono filaments) may be usable as such, may be processed into false-twist textured yarn by false-twist texturing process, or may be processed into mixed filament yarn by air jet spinning for mixed filament yarn, or the like. The short fibers (staples) may be usable as such, may be processed into spun yarn by spinning, or may be processed into mixed spun yarn by mixed spinning. The form of the fiber including the resin composition (A) may be a core spun yarn in which a long fiber and a short fiber are conjugated, or the fiber including the resin composition (A) may be processed into folded yarn, twisted union yarn, or covering yarn by twisting process.

The fiber including the resin composition (A) may contain an additive(s) such as an anti-oxidant, a pigment, a dye, an anti-bacterial agent, a deodorant, an anti-static agent, a flame retardant, inert fine particles, a light-absorbing heat-generating material, a moisture-absorbing heat-generating material, or a far-infrared light heat-generating material. The additive(s) may be added therein when or after spinning the resin composition (A).

A light-absorbing heat-generating fiber including the resin composition (A) and the light-absorbing heat-generating material is such a fiber that the light-absorbing heat-generating material such as zirconium carbide, which absorbs particular wavelengths of sun light and converts the particular wavelengths of sun light into heat energy at a high efficiency, is fixedly held inside and on a surface of the fiber. A cloth made from such a light-absorbing heat-generating fiber is capable of increasing temperature on a surface of the cloth on which the sun light is applied, compared with a cloth made from a fiber not including the light-absorbing heat-generating material.

A moisture-absorbing heat-generating fiber including the resin composition (A) and the moisture-absorbing heat-generating fiber is such a fiber that generates adsorption heat when absorbing moisture and releases moisture in a low-humidity environment, thereby having such an effect that the fiber controls temperature and humidity inside clothes.

A far-infrared-emitting fiber containing the resin composition (A) and a far-infrared-emitting material is a fiber in which ceramic or the like having high far-infrared emissivity is fixed in the inside or surface of the fiber, exerting an effect to keep warm by virtue of far-infrared radiation.

The fabric or cloth consisting of the fiber containing the resin composition (A) may be any of woven fabrics, knitted fabrics, and nonwoven fabrics. Examples of the fabric construction include a plane weave, a twill weave, a sateen weave, and their variations, a dobby weave, and a Jacquard weave. Examples of the knitting construction include a weft knitted fabric, a warp knitted fabric, and their variations.

The weight, gauge, and so forth of the fabric or cloth consisting of the fiber containing the resin composition (A) are not limited.

The fabric or cloth consisting of the fiber containing the resin composition (A) may consist only of the fiber containing the resin composition (A), or be mix-woven or mix-knitted with an additional fiber for use. Examples of the additional fiber include: inorganic fibers such as carbon fibers, inorganic fibers, and metal fibers; purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, Cannabis (flax, ramie, hemp, jute) and animal fibers such as wool, animal hair (e.g., Anogora, cashmere, mohair, alpaca, camel), and silk; and bird feathers such as down and feathers. It is preferable that the ratio of the fiber containing the resin composition (A) to be used be 20 wt% to 100 wt%, though the ratio is not limited thereto.

The nonwoven fabric consisting of the fiber containing the resin composition (A) may contain a heat-fusion binder fiber. It is preferable that the heat-fusion binder fiber be, for example, a core-sheath or laminated composite fiber consisting of the resin composition (A) and a material having a melting point different from that of the resin composition

(A). The material having a melting point different from that of the resin composition (A) is preferably the polymer (2), and more preferably polypropylene (PP), polyethylene terephthalate (PET), polytrimethylene terephthalate (PTT), polybutylene terephthalate (PBT), polyamide 6 (PA6), or polyamide 66 (PA66).

In case where a non-woven cloth made from a fiber including the resin composition (A) includes a heat-fusion binder fiber, it is preferable that a content of the heat-fusion binder fiber is in a range of 5 to 20 wt% in the whole fibers of the non-woven cloth.

For the sake of lightness, soft texture, fashionability of cloths, etc., it is preferable that the non-woven cloth made from a fiber including the resin composition (A) have a weight of 100 $g/m^2$ or less and a thickness of 5 mm or less, and it is more preferable that the non-woven cloth made from a fiber including the resin composition (A) have a weight of 60 $g/m^2$ or less and a thickness of 5 mm or less.

A production method for such non-woven cloth made from the fiber including the resin composition (A) usually includes forming webs and binding webs. Examples of the forming of the webs include a dry method, a wet method, a spun-bond method, a melt-blown method, and an air-laid method. Examples of the binding the webs include a chemical bond method, a thermal bond method, a needle punch method, and a spun lace method.

<Molded Article>

A molded article according to the present invention is a molded article obtainable by molding the polymer or composition according to the present invention (
hereinafter, may be referred to as a "molded article (A)"), or a molded article described below (hereinafter, may be referred to as a "molded article (B)"). The molded article (B) can be shaped as appropriate from the polymer or composition according to the present invention.

Molded article (B):

A molded article comprising an olefin polymer having a fluorine atom and a thermoplastic resin having no fluorine atom,
in which 10 or more dispersed phases of the olefin polymer having a fluorine atom are present on a cross-section of the molded article per 1000 $\mu m^2$, and
equivalent circle diameters of the dispersed phases meet Equation (11) below,

$$Ra^1 > Ra^2 > Ra^3 \qquad (11),$$

where $Ra^1$ is a ratio of dispersed phases with equivalent circle diameters not less than 0.5 $\mu m$ but less than 2.0 $\mu m$, $Ra^2$ is a ratio of dispersed phases with equivalent circle diameters not less than 2.0 $\mu m$ but less than 3.0 $\mu m$, and $Ra^3$ is a ratio of dispersed phases with equivalent circle diameters not less than 3.0 $\mu m$.

Examples of the olefin polymer having a fluorine atom include the polymer (1) according to the present invention, and it is preferable that the olefin polymer having a fluorine atom be the polymer (1) according to the present invention.

An equivalent circle diameter of a dispersed phase made from the olefin polymer having a fluorine atom and observed on a cross-section of a molded article can be worked out by capturing a backscattered electron image by using a scanning electron microscope, and performing, with image analysis software, particle analysis on the backscattered electron image thus captured.

It is preferable that the molded article (B) further includes a thermoplastic resin having no fluorine atom.

Examples of the thermoplastic resin having no fluorine atom
include:

polyolefins such as polypropylene and polyethylene;
acrylic and methacrylic resins such as methyl (meth)acrylate polymer, ethyl(meth)acrylate polymer, octadecyl (meth)acrylate polymer, hexadecyl (meth)acrylate polymer, tetradecyl (meth)acrylate polymer, polymethylmethacrylate, and polymethyl acrylate;
styrene resins such as polystyrene, acrylonitrile-butadiene-styrene resin, acrylonitrile-acrylic rubber-styrene resin, acrylonitrile-ethylene rubber-styrene resin, (meth)acrylic ester-styrene resin, styrene-butadienestyrene resin, and styrene-butadiene copolymer;
polyamides such as nylon;
polycarbonates;
saturated polyesters;

polyphenylene oxides;
polyacetals;
chlorine-containing resins such as polyvinyl chloride, and polyvinylidene chloride;
vinyl acetate resins such as polyvinyl acetate, and ethylene-vinyl acetate resin;
resins of ethylene-(meth)acrylic ester copolymers and ionomers thereof such as ethylene-methyl(meth)acrylic acid copolymer, ethylene-ethyl(meth)acrylic acid copolymer, ethylene-octadecyl(meth)acrylate copolymer, ethylene-hexadecyl(meth)acrylate copolymer, ethylene-tetradecyl(meth)acrylate copolymer, and ethylene-octadecyl(meth)acrylate-methyl(meth)acrylate copolymer;
resins of ethylene-(meth)acrylic acid and ionomers thereof;
vinyl alcohol resins such as resins of polyvinyl alcohol and ethylene-vinyl alcohol;
cellulose resins;
thermoplastic elastomers such as vinyl chloride elastomers, urethane elastomers, polyolefin elastomers, and polyester elastomers;
engineering plastics such as polyphenylene sulfide, polyamide imide, polyether ether ketone, polyphenylene ether, and modified polyphenylene ether;
polyether-polypropylene block copolymers;
polyether ester amides; and
the polymer (2).

A dispersion force component $\gamma^d$ of a surface free energy of the molded article (B) is preferably 25 mN/m or less, more preferably 20 mN/m or less, or further preferably 16 mN/m or less. Moreover, the dispersion force component $\gamma^d$ of the surface free energy of the molded article (B) is generally 0 mN/m or more.
A surface free energy of a molded article is divided into a dispersion item ($\gamma^d$), a hydrogen bonding item ($\gamma^h$), and a dipole item ($\gamma^p$).
The surface free energy of a molded article is worked out by using the method proposed by Kitabata and Hata.
In the method proposed by Kitabata and Hata, it is assumed that the surface free energy $\gamma$ consists of a dispersion force component ($\gamma^d$), a dipole force component $\gamma^p$, and a hydrogen bonding component $\gamma^h$, and the surface free energy $\gamma$ is represented by the following equation:

$$\gamma = \gamma^d + \gamma^p + \gamma^h \qquad (1).$$

In this case, relationship between a surface energy $\gamma_l$ of a liquid, a surface energy $\gamma_s$ of a solid, and a contact angle $\theta$ is represented by the following relationship:

$$\gamma_L(1+\cos\theta) = 2\sqrt{\gamma_S^d\gamma_L^d} + 2\sqrt{\gamma_S^p\gamma_L^p} + 2\sqrt{\gamma_S^h\gamma_L^h} \qquad (2)$$

The contact angle $\theta$ is measured with a liquid, whose components of $\gamma_l$ are known, and a simultaneous equation regarding $\gamma_S^d$, $\gamma_S^p$, and $\gamma_S^h$ is solved, thereby working out the components of the surface free energy of the molded article.
The molded article according to the present invention has an excellent water-repellent property and oil-repellent property, and is excellent in anti-fouling property, slidability, heat resistance, chemical resistance, solvent resistance, low chemical permeability, flame retardancy, electric properties, and durability. Therefore, the molded article according to the present invention is applicable to various usage where these properties are required.
The molded article according to the present invention is excellent in anti-fouling property, and therefore can be suitably applicable, for example, to textile products, kitchen goods and materials and parts thereof, bathroom goods and materials and parts thereof, toiletries and parts thereof, toilet utensils and parts thereof, parts of water storage facilities, household home appliances and parts thereof, medical supplies and parts thereof, agricultural materials and equipment and parts thereof, fishery equipment and parts thereof, civil engineering materials and equipment and parts thereof, parts of road and traffic facilities and equipment, parts of power generation facilities, parts of port and coastal facilities.
Examples of the textile products include general clothing, work uniforms, bedding goods, medical clothing's, fibers and textiles for interiors, and fibers and textiles for industrial materials and equipment.
Examples of kitchen goods and materials and parts include tableware, cooking goods and materials, water purification systems, sinks, drains, triangular sink tidies, range hoods, and ventilating facilities.

Examples of bathroom goods and materials and parts thereof, toiletries and parts thereof, and toilet utensils and parts thereof include bathtubs, bathtub covers, bathroom floors, bathroom walls, bathroom ceilings, bathroom chairs, washstands, washbowls, drain stoppers, hair catchers, drain traps, water-proof pans for washing machines, toilet flooring materials, toilet seats, toilet lids, piping, and packings.

Examples of home appliances and parts thereof include heat exchangers for air conditioning facilities, filters, drain pans, hoses, humidifying devices, drying devices, refrigerators, dish washers, dish dryers, washing machines, vacuum cleaners, drink servers, coffee server, microwave ovens, irons, steamers, aroma diffusers, home cleaning devices, high-pressure washers, hot water dispensers, wearable devices, television devices, smart phones, tablet personal computer, personal computers, and touch-screen display.

Examples of the parts of the water storage facilities include water storage tanks, solar water heaters, water tanks, and pools.

Examples of medical supplies and parts thereof include endotracheal tubes, nasogastric tubes, wound contact layers, catheters, tube stents, pacemaker shells, cardiac valves, orthopedic implants, periodontal implants, orthodontic devices, orthodontic tools other than the orthodontic devices, artificial teeth, tooth crowns, face masks, contact lens, intraocular lens, soft tissue implants, surgical tools, suture threads, cochlear implants, tympanic cavity forming tubes, shunts, postoperative drainage tubes, drainage devices, adhesive plasters, wound dressings, implantable devices other than the above, detention devices other than the above, artificial skins, and artificial muscles.

Examples of agricultural materials and equipment include plant pods, soils, watering tubes, piping, and greenhouses.

Examples of fishery equipment and parts thereof include ships, ropes, fishing nets, fishing tools, floats, and buoys.

Examples of civil engineering materials and equipment and parts thereof include sludge diffusion preventing sheets for various marine civil engineering for canals, waterways, or the like.

Examples of parts of road and traffic facilities and equipment include traffic signs, traffic mirrors, display devices, guard rails, sound barrier walls, signboards, advertisement pillars, bridges, and tunnels.

Examples of parts of power generation facilities, parts of port and coastal facilities include in-water structures of water supply inlets and water drainage outlets at thermal power plants and nuclear power plants, sea water utilizing equipment such as sea water pumps, megafloats, coastal roads, and undersea tunnels.

The molded articles according to the present invention is excellent in slidability, and therefore is suitably applicable to, for example, sealing materials, gears, actuators, pistons, bearings, bearing retainers, bushes, switches, belts, bearings, cams, rollers, and sockets.

## EXAMPLES

Hereinafter, the present invention will be described in more detail with reference to Examples and Comparative Examples.

[I] Proportions of the number of structural unit (A) derived from ethylene, structural unit (B) represented by formula (1), and structural unit (C) represented by formula (2) contained in polymer (1) (unit: %)

Nuclear magnetic resonance spectra (hereinafter, abbreviated as "NMR spectra") of the polymer were determined by using a nuclear magnetic resonance spectrometer (NMR) under the following measurement conditions.

<Carbon Nuclear Magnetic Resonance ($^{13}$C-NMR) Measurement Conditions>

Apparatus: AVANCE III 600HD produced by Bruker BioSpin GmbH
Measurement probe: 10 mm CryoProbe
Measurement solvent: mixed solvent of 1,2-dichlorobenzene/1,1,2,2-tetrachloroethane-$d_2$ = 85/15 (volume ratio)
Sample concentration: 100 mg/mL
Measurement temperature: 135°C
Measurement method: proton decoupling method
Number of scans: 256
Pulse width: 45 degrees
Pulse repetition time: 4 seconds
Measurement reference: tetramethylsilane

<Proportions of the Number of Structural unit ($A_1$) Derived from Ethylene and Structural unit ($C_1$) Derived from Methyl Acrylate Contained in Ethylene-Methyl Acrylate Copolymer> (Unit: %)

Integrated values in the following ranges of $a_1$, $b_1$, $c_1$, $d_1$, and $e_1$ were determined from the $^{13}$C-NMR spectrum acquired for ethylene-methyl acrylate copolymer under the $^{13}$C-NMR measurement conditions, and the contents (proportions of the number) of three dyads (EE, EA, AA) were determined by using the following formulas, and the proportions of the number of the structural unit ($A_1$) derived from ethylene and the structural unit ($C_1$) derived from methyl acrylate were calculated from the contents. EE represents an ethylene-ethylene dyad, EA represents an ethylene-methyl acrylate dyad, and AA represents a methyl acrylate-methyl acrylate dyad.

$a_1$: 28.1-30.5 ppm
$b_1$: 31.9-32.6 ppm
$c_1$: 41.7 ppm
$d_1$: 43.1-44.2 ppm
$e_1$: 45.0-46.5 ppm

$$EE = a_1/4 + b_1/2$$

$EA = e_1$

$$AA = c_1 + d_1$$

Proportion of the number of structural unit ($A_1$)=100-proportion of the number of structural unit ($C_1$)

$$\text{Proportion of the number of structural unit } (C_1) = 100 \times (EA/2 + AA)/(EE + EA + AA)$$

<Conversion Rate ($X_1$) of Structural unit ($C_1$) Derived from Methyl Acrylate into Structural unit ($B_2$) Represented by Formula (1)> (Unit: %)

In Examples in each of which ethylene-methyl acrylate copolymer, and B1 or B2 described below were reacted together to obtain a polymer consisting of the structural unit ($A_2$) derived from ethylene, the structural unit ($B_2$) represented by the formula (1), and the structural unit ($C_2$) derived from methyl acrylate, a $^{13}$C-NMR spectrum was determined for the polymer under the $^{13}$C-NMR measurement conditions and integrated values in the following ranges of $f_1$ and $g_1$ were determined therefrom. Subsequently, the conversion rate ($X_1$) of the structural unit ($C_1$) derived from methyl acrylate contained in the ethylene-methyl acrylate copolymer into the structural unit ($B_2$) of the polymer (1) represented by formula (1) was calculated.

$f_1$: 50.4-51.2 ppm
$g_1$: 55.6-56.8 ppm

$$\text{Conversion rate}(X_1) = 100 \times g_1/(f_1 + g_1)$$

<Proportions of the Number of Structural Unit ($A_2$) Derived from Ethylene, Structural Unit ($B_2$) Represented by Formula (1), and Structural Unit ($C_2$) Derived from Methyl Acrylate Contained in Polymer (1)> (Unit: %)

The proportions of the number of the structural unit ($A_2$) derived from ethylene, the structural unit ($B_2$) represented by the formula (1), and the structural unit ($C_2$) derived from methyl acrylate contained in the polymer (1) were calculated by using the following formulas.

Proportion of the number of structural unit ($A_2$) contained in polymer (1) = proportion of the number of structural unit ($A_1$) contained in ethylene-methyl acrylate copolymer

$$\text{Proportion of the number of structural unit } (B_2) \text{ contained in polymer (1)} = (\text{proportion of the number of structural unit } (C_1) \text{ contained in ethylene-methyl acrylate copolymer}) \times \text{conversion rate } (X_1)/100$$

Proportion of the number of structural unit ($C_2$) contained in polymer (1) = (proportion of the number of structural unit ($C_1$) contained in ethylene-methyl acrylate copolymer) - (proportion of the number of structural unit ($B_2$) contained in polymer (1))

The thus-determined proportion of the number of the structural unit ($A_2$), proportion of the number of the structural unit ($B_2$), and proportion of the number of the structural unit ($C_2$) respectively correspond to the proportion of the number of the structural unit (A) derived from ethylene, proportion of the number of the structural unit (B) represented by the above formula (1), and proportion of the number of the structural unit (C) represented by the above formula (2) contained in a polymer (unit: %).

[II] Proportions of the number of structural unit (A) derived from ethylene, wt% of structural unit (B) represented by formula (1), and wt% of structural unit (C) represented by formula (2) contained in polymer (1) (unit: wt%)

Proportions of the number of structural unit (A) derived from ethylene, wt% of structural unit (B) represented by formula (1), and wt% of structural unit (C) represented by formula (2) contained in polymer (1) were calculated by using the following formulas.

$$\text{wt\% of the structural unit (A)} = (\text{the number of the structural unit (A)} \times \text{the molecular weight of the structural unit (A)})/(\text{the number of the structural unit (A)} \times \text{the molecular weight of the structural unit (A)} + \text{the number of the structural unit (B)} \times \text{the molecular weight of the structural unit (B)} + \text{the number of the structural unit (C)} \times \text{the molecular weight of the structural unit (C)})$$

$$\text{wt\% of the structural unit (B)} = (\text{the number of the structural unit (B)} \times \text{the molecular weight of the structural unit (B)})/(\text{the number of the structural unit (A)} \times \text{the molecular weight of the structural unit (A)} + \text{the number of the structural unit (B)} \times \text{the molecular weight of the structural unit (B)} + \text{the number of the structural unit (C)} \times \text{the molecular weight of the structural unit (C)})$$

wt% of the structural unit (C) = (the number of the structural unit (C) × the molecular weight of the structural unit (C))/(the number of the structural unit (A) × the molecular weight of the structural unit (A) + the number of the structural unit (B) × the molecular weight of the structural unit (B) + the number of the structural unit (C) × the molecular weight of the structural unit (C))

[III] Polystyrene-based average molecular weight of the polymer (1) (PS-based numerical average molecular weight Mn, PS-based weight molecular weight Mw, and PS-based z average molecular weight Mz) (unit: g/mol)

The polystyrene-based average molecular weights of the polymers were measured under the following measuring conditions by using a gel permeation chromatography (GPC) device and software.

<GPC device and Software>

Device: HLC-8121GPC/HT (TOSOH)
GPC column: TOSOH TSKgelGMH6-HT 7.8 mm I.D. × 300 mm (TOSOH)...... × 3
Differential Refractive Index Detector (RI): equipped to the GPC device
Software: GPC-8020 model II (TOSOH)

<GPC Measurement Conditions>

Mobile Phase: O-dichlorobenzene (Wako Pure Chemical, special grade) with 0.1 w/v of BHT added therein.
Flow rate: 1 mL/min
Column Oven Temperature: 140°C
Sample Injector Temperature: 140°C
Detector Temperature: 140°C
Injected Sample Solution Amount: 0.3 mL

<Control Solution Preparation Conditions>

Control Materials: twelve kinds of polystyrene control samples described in Controls 1 to 4 below (TOSOH)
Solvent: o-dichlorobenzene (Wako pure chemicals, special grade) with 0.1 w/v of BHT added therein
Control Solution Concentrations: Three kinds of predetermined weights were added to 5 mL of the solvent for each of Controls 1 to 4, as described below.
Dissolving Condition: Room Temperature
Control 1: F700 (0.4 mg), F20 (0.9 mg), A5000 (1.2 mg)
Control 2: F288 (0.4 mg), F10 (1.0 mg), A2500 (1.2 mg)
Control 3: F80 (0.7 mg), F4(1.1 mg), A1000 (1.3 mg)
Control 4: F40 (0.8 mg), F2(1.1 mg), A500 (1.3 mg)

<Sample Solution Preparation Conditions>

Solvent: o-dichlorobenzene (Wako pure chemicals, special grade) with 0.1 w/v of BHT added therein
Sample Solution Concentration: 1 mg/mL
Dissolving Conditions: 140°C, 2 hours

[IV] Ratio A defined by Equation (I) (unit: none)

<Measurements of Absolute Molecular Weight and Intrinsic Viscosity of Polymer (1)>

By gel permeation chromatography (GPC) using a device equipped with a light scattering photometer and a viscosity detector, the absolute molecular weight and intrinsic viscosity of each of the polymer (1) and the polyethylene control material 1475a (made by National Institute of Standards and Technology in USA) were measured.

<Device and Software>

GPC Device: HLC-8121GPC/HT (TOSOH)
GPC Column: GMHHR-H(S)HT × 3 columns (TOSOH)
Differential Refractive Index Detector (RI): equipped to the GPC device
Light Scattering Photometer (LS): PD2040 (Precision Detectors) Differential Pressure Viscometer (VISC): H502

(Viscotek)

Software OmniSEC (version 4.7) (Malvern)

The LS and VISC were placed inside the column oven of the GPC device, and connected in such a way that the LS, RI, VISC were connected in this order.
The determination of the absolute molecular weights and the intrinsic viscosities was carried out according to a literature "Size Exclusion Chromatography, Springer (1999)."

<GPC Measurement Conditions>

Mobile Phase: O-dichlorobenzene (Wako Pure Chemical, special grade) with 0.5 mg/mL of BHT added therein.
Flow rate: 1 mL/min
Column Oven Temperature: 155°C
Sample Injector Temperature: 155°C
Each Detector Temperature: 155°C
Injected Sample Solution Amount: 0.3 mL
Refractive Index Increment (dn/dc): dn/dc values of the polymer (1) and the polyethylene control material 1475a were assumed as -0.078 mL/g, and a dn/dc value of the polystyrene control material was assumed as 0.079 mL/g.
Scattering Angle: 90°

For calibration for the LS and VISC and for correction of capacity lag between the detectors, Polycal TDS-PS-N (with weight average molecular weight Mw of 104,349 and polydispersity of 1.04), which is a polystyrene control material of Malvern, was used at a solution concentration of 1 mg/mL.

<Sample Solution Preparation Conditions>

Solvent: O-dichlorobenzene (Wako Pure Chemical, special grade) with 0.1w/v of BHT added therein.
Sample Solution Concentration: 2 mg/mL

Dissolving Conditions: 145°C, 2 hours

<Calculation of Ratio A defined by Equation (I)>

$\alpha_1$ and $\alpha_0$ were worked out by the following method and substituted into the following Equation (I), thereby working out A.

$$A = \alpha_1/\alpha_0 \quad (I)$$

$\alpha_1$ is a value obtained by working out a straight-line gradient $\alpha_1$ approximated to Equation (I-I) by least squares method and represented by Equation (I-I) within a range in which a logarithm of an absolute molecular weight and a logarithm of an intrinsic viscosity are equal to or greater than the weight average molecular weight of the polymer (1) and equal to or less than a logarithm of z average molecular weight in terms of the horizontal axis, where measured data is plotted against the logarithm of the absolute molecular weight of the polymer (1) as the horizontal axis and the logarithm of the intrinsic viscosity of the polymer (1) as the vertical axis.

$$\log[\eta_1] = \alpha_1 \log M_1 + \log K_1 \quad (I\text{-}I)$$

(where $[\eta_1]$ is the intrinsic viscosity of the polymer (unit: dl/g), $M_1$ is the absolute molecular weight of the polymer, and $K_1$ is a constant)

$\alpha_0$ is a value obtained by working out a straight-line gradient $\alpha_0$ approximated to Equation (I-II) by least squares method and represented by Equation (I-II) within a range in which a logarithm of absolute molecular weight and a logarithm of an intrinsic viscosity are equal to or greater than the weight average molecular weight of polyethylene control material 1475a and equal to or less than a logarithm of z average molecular weight in terms of the horizontal axis, where measured data is plotted against the logarithm of the absolute molecular weight of the polyethylene control material 1475a as the horizontal axis and the logarithm of the intrinsic viscosity of the polyethylene control material 1475a as the vertical axis.

$$\log[\eta_0] = \alpha_0 \log M_0 + \log K_0 \quad (I\text{-}II)$$

(where $[\eta_0]$ is the intrinsic viscosity of the polyethylene control material 1475a (unit: dl/g), Mo is the absolute molecular weight of the polyethylene control material 1475a, and $K_0$ is a constant)

[V] Contact Angle of Molded Article (Unit:°)

By using an automatic contact angle meter DM-501 (made by Kyowa Interface Science, Inc.), contact angles of a molded article (sheet) were measured. As test liquid, pure water or hexadecane (made by Tokyo Chemical Industry Co., Ltd.) was used, and a dropping amount was 2 $\mu$L and a measurement method was a $\theta$/2 method. A greater contact angle of pure water means a greater water-repellent property and a greater contact angle of hexadecane means a greater oil-repellent property.

[VI] Calculation of Surface Free Energy

A surface free energy of the molded article (sheet) can be worked out by measuring a contact angle of a liquid with a known surface free energy with respect to a surface of the molded article.

The liquid used for the measurement of the contact angle with respect to the surface of the molded article was hexadecane. From the contact angle of hexadecane with respect to the molded article (sheet), the surface free energy of the molded article (sheet) was worked out according to the method of Kitazaki and Hata mentioned above.

[VII] Measurement of Equivalent Circle Diameter of Dispersed Phase

From the molded article with a size of 50 mm (height) × 50 mm (width) × 2 mm (Thickness), a piece of 10 mm (height) × 0.5 mm (width) × 2 mm (Thickness) was prepared, which was then cross-sectioned (approximately 200 $\mu$m × 400 $\mu$m) by using a cryomicrotome, thereby preparing a measurement sample. After the measurement sample was

adhered onto a sample stage of a scanning electron microscope (SU8020, made by Hitachi High-Tech Corporation) in such a way that a cross-section of the measurement sample faced upward, the measurement sample was subjected to Pt-Pd vapor deposition for preventing electrification. By using the scanning electron microscope, a reflective electronic image (YAG-BSE) of the measurement sample thus vapor-deposited was observed under magnification of 2000 times with an acceleration voltage of 10 kV. The reflective electronic image thus obtained was subjected particle analysis using image analysis software (A-zokun, made by Asahi Kasei Engineering Corporation), thereby working out an equivalent circle diameter of a dispersed phase on the cross section of the molded article.

[VIII] Raw Materials

<Precursor Polymer (1) Including Structural Unit (A) and Structural Unit (C)>

A-1: Ethylene-Methyl Acrylate Copolymer

Ethylene-methyl acrylate copolymer A-1 was produced as follows.

In an autoclave reactor, ethylene and methyl acrylate were copolymerized with tert-butyl peroxypivalate as a radical polymerization initiator at a reaction temperature of 195°C under a reaction pressure of 160 MPa to afford ethylene-methyl acrylate copolymer A-1. The composition and MFR of the copolymer A-1 obtained were as follows.

Proportion of the number of structural unit derived from ethylene: 87.0% (68.6 wt%),
proportion of the number of structural unit derived from methyl acrylate: 13.0% (31.4 wt%),
MFR (measured at 190°C, 21 N): 40.5 g/10 min.

A-2: Ethylene-Methyl Acrylate Copolymer

Ethylene-methyl acrylate copolymer A-2 was produced as follows.

In an autoclave reactor, ethylene and methyl acrylate were copolymerized with tert-butyl peroxypivalate as a radical polymerization initiator at a reaction temperature of 195°C under a reaction pressure of 160 MPa to afford ethylene-methyl acrylate copolymer A-2. The composition and MFR of the copolymer A-2 obtained were as follows.

Proportion of the number of structural unit derived from ethylene: 85.3% (65.4 wt%),
proportion of the number of structural unit derived from methyl acrylate: 14.7% (34.6 wt%),
MFR (measured at 190°C, 21 N): 41 g/10 min

<Compound ($\alpha$)>

B-1: 1H,1H,2H,2H-heptadecafluoro-1-decanol (made by Tokyo Chemical Industry Co., Ltd.)
B-2: 1H,1H,2H,2H-tridecafluoro-1-octanol (made by Tokyo Chemical Industry Co., Ltd.)

<Catalyst>

C-1: Tetra(isopropyl) orthotitanate [produced by Nippon Soda Co., Ltd.]

<Polymer (2)>

D-1: ESPOLEX TPE 4272 (Melting peak temperature: 161.6°C [made by Sumitomo Chemical Co., Ltd.]

<Fluorine-based resin other than Polymer (1) according to the present invention>

E-1: Vinylidene fluoride-hexafluoropropene copolymer (Viton Free Flow 10) [made by DuPont de Nemours, Inc.]

[Example 1]

(1) Preparation of Polymer including Structural unit (A), Structural unit (B), and Structural unit (C) (ethylene-1H,1H,2H,2H-heptadecafluoro-1-decylacrylate-methylacrylate copolymer)

After an inside of a separable flask equipped with a stirrer and a finger baffle and having an internal capacity of 0.3 L was purged with nitrogen gas, A-1 (40.00 g) and B-1 (50.44 g) were added therein and stirred for 3 hours under heating in an oil bath set to a temperature of 130°C and reduced pressure of 10kPa. After that, in a nitrogen gas atmosphere, C-1 (0.41 g) was added therein and a mixture thus obtained was stirred for 42 hours under heating in an oil bath set to a temperature of 140°C and reduced pressure of 10 to 1 kPa, thereby obtaining a polymer (ex 1-1)(ethylene-1H,1H,2H,2H-heptadecafluoro-1-decylacrylate-methylacrylate copolymer). Evaluation results of the polymer (ex 1-1) are shown on Table 1.

(2) Preparation of Molded Article (Sheet) from Polymer (1)

The polymer (ex 1-1) thus obtained in Example 1(1) was molded with a mold having a thickness of 2 mm by compression molding for 5 min at 100°C, and then cooled for 5 min at 20°C under compression, thereby preparing a molded article (ex 1-2) having a size of 50 mm × 50 mm × 2 mm.

(3) Evaluation of Water-Repellent and Oil Repellent Properties and Surface Free Energy of Molded Article (Sheet)

The molded article (ex 1-2) thus obtained in Example 1(2) was evaluated in terms of the contact angles of pure water and hexadecane and the surface free energy. Evaluation results of the molded article (ex 1-2) are shown on Table 1.

[Example 2]

(1) Preparation of Polymer including Structural unit (A), Structural unit (B), and Structural unit (C) (ethylene-1H,1H,2H,2H-heptadecafluoro-1-decylacrylate-methylacrylate copolymer)

A polymer (ex 2-1)(ethylene-1H,1H,2H,2H-heptadecafluoro-1-decylacrylate-methylacrylate copolymer) was prepared as in Example 1(1), except that the amount of B-1 added was changed to 33.63 g. Evaluation results of the polymer (ex 2-1) are shown on Table 1.

(2) Preparation of Molded Article (Sheet) from Polymer (1)

A molded article (ex 2-2) having a size of 50 mm × 50 mm × 2 mm was prepared as in Example 1(2), except that the polymer (ex 1-1) was replaced with the polymer (ex 2-1) thus obtained in Example 2(1).

(3) Evaluation of Water-Repellent and Oil Repellent Properties and Surface Free Energy of Molded Article (Sheet)

The molded article (ex 2-2) thus obtained in Example 2(2) was evaluated in terms of the contact angles of pure water and hexadecane and the surface free energy. Evaluation results of the molded article (ex 2-2) are shown on Table 1.

[Example 3]

(1) Preparation of Polymer including Structural unit (A), Structural unit (B), and Structural unit (C) (ethylene-1H,1H,2H,2H-heptadecafluoro-1-decylacrylate-methylacrylate copolymer)

A polymer (ex 3-1)(ethylene-1H,1H,2H,2H-heptadecafluoro-1-decylacrylate-methylacrylate copolymer) was prepared as in Example 1(1), except that the amount of B-1 added was changed to 16.81 g. Evaluation results of the polymer (ex 3-1) are shown on Table 1.

(2) Preparation of Molded Article (Sheet) from Polymer (1)

A molded article (ex 3-2) having a size of 50 mm × 50 mm × 2 mm was prepared as in Example 1(2), except that the polymer (ex 1-1) was replaced with the polymer (ex 3-1) thus obtained in Example 3(1).

(3) Evaluation of Water-Repellent and Oil Repellent Properties and Surface Free Energy of Molded Article (Sheet)

The molded article (ex 3-2) thus obtained in Example 3(2) was evaluated in terms of the contact angles of pure water and hexadecane and the surface free energy. Evaluation results of the molded article (ex 3-2) are shown on Table 1.

[Example 4]

(1) Preparation of Polymer including Structural unit (A), Structural unit (B), and Structural unit (C) (ethylene-1H,1H,2H,2H-heptadecafluoro-1-decylacrylate-methylacrylate copolymer)

A polymer (ex 4-1)(ethylene-1H,1H,2H,2H-heptadecafluoro-1-decylacrylate-methylacrylate copolymer) was prepared as in Example 1(1), except that the amount of B-1 added was changed to 13.45 g. Evaluation results of the polymer (ex 4-1) are shown on Table 1.

(2) Preparation of Molded Article (Sheet) from Polymer (1)

A molded article (ex 4-2) having a size of 50 mm × 50 mm × 2 mm was prepared as in Example 1(2), except that the polymer (ex 1-1) was replaced with the polymer (ex 4-1) thus obtained in Example 4(1).

(3) Evaluation of Water-Repellent and Oil Repellent Properties and Surface Free Energy of Molded Article (Sheet)

The molded article (ex 4-2) thus obtained in Example 4(2) was evaluated in terms of the contact angles of pure water and hexadecane and the surface free energy. Evaluation results of the molded article (ex 4-2) are shown on Table 1.

[Example 5]

(1) Preparation of Polymer including Structural unit (A), Structural unit (B), and Structural unit (C) (ethylene-1H,1H,2H,2H-heptadecafluoro-1-decylacrylate-methylacrylate copolymer)

A polymer (ex 5-1)(ethylene-1H,1H,2H,2H-heptadecafluoro-1-decylacrylate-methylacrylate copolymer) was prepared as in Example 1(1), except that the amount of B-1 added was changed to 6.73 g. Evaluation results of the polymer (ex 5-1) are shown on Table 1.

(2) Preparation of Molded Article (Sheet) from Polymer (1)

A molded article (ex 5-2) having a size of 50 mm × 50 mm × 2 mm was prepared as in Example 1(2), except that the polymer (ex 1-1) was replaced with the polymer (ex 5-1) thus obtained in Example 5(1).

(3) Evaluation of Water-Repellent and Oil Repellent Properties and Surface Free Energy of Molded Article (Sheet)

The molded article (ex 5-2) thus obtained in Example 5(2) was evaluated in terms of the contact angles of pure water and hexadecane and the surface free energy. Evaluation results of the molded article (ex 5-2) are shown on Table 1.

[Example 6]

(1) Preparation of Polymer including Structural unit (A), Structural unit (B), and Structural unit (C) (ethylene-1H,1H,2H,2H-tridecafluoro-1-octylacrylate-methylacrylate copolymer)

A polymer (ex6-1) (ethylene-1H,1H,2H,2H-tridecafluoro-1-octylacrylate-methylacrylate copolymer) was prepared as in Example 1(1), except that the precursor polymer (1) was changed from A-1 to A-2 (40.00 g), and the compound ($\alpha$) was changed from B-1 to B-2 (43.32 g), and the amount of C-1 added was changed to 0.45 g. The evaluation results of the polymer (ex6-1) are shown on Table 1.

(2) Preparation of Molded Article (Sheet) from Polymer (1)

A molded article (ex 6-2) having a size of 50 mm × 50 mm × 2 mm was prepared as in Example 1(2), except that the polymer (ex 1-1) was replaced with the polymer (ex 6-1) thus obtained in Example 6(1).

(3) Evaluation of Water-Repellent and Oil Repellent Properties and Surface Free Energy of Molded Article (Sheet)

The molded article (ex 6-2) thus obtained in Example 6(2) was evaluated in terms of the contact angles of pure water and hexadecane and the surface free energy. Evaluation results of the molded article (ex 6-2) are shown on Table 1.

[Comparative Example 1]

(2) Preparation of Molded Article (Sheet) from Precursor Polymer (1)

A molded article (ref 1-2) having a size of 50 mm × 50 mm × 2 mm was prepared as in Example 1(2), except that the polymer (ex 1-1) was replaced with A-1, which is the precursor polymer (1).

(3) Evaluation of Water-Repellent and Oil Repellent Properties and Surface Free Energy of Molded Article (Sheet)

The molded article (ref 1-2) thus obtained in Comparative Example 1(2) was evaluated in terms of the contact angles of pure water and hexadecane and the surface free energy. Evaluation results of the molded article (ref 1-2) are shown on Table 1.

[Comparative Example 2]

(2) Preparation of Molded Article (sheet) from Fluorine-based Resin Other Than Polymer (1) according to the Present Invention

A molded article (ref 2-2) having a size of 50 mm × 50 mm × 2 mm was prepared as in Example 1(2), except that the polymer (ex 1-1) was replaced with E-1, which is a fluorine-based resin other than the polymer (1) according to the present invention.

(3) Evaluation of Water-Repellent and Oil Repellent Properties and Surface Free Energy of Molded Article (Sheet)

The molded article (ref 2-2) thus obtained in Comparative Example 2(2) was evaluated in terms of the contact angles of pure water and hexadecane and the surface free energy. The molded article (ref 2-2) was such that the contact angle (pure water) thereof was 91° and the contact angle (hexadecane) thereof was 45°, and a dispersion force component $\gamma^d$ of the surface free energy of the molded article (ref 2-2) was 20.1 mN/m.

[Example 7]

(1) Preparation of Resin Composition (Resin composition including ethylene-1H,1H,2H,2H-heptadecafluoro-1-decylacrylate-methylacrylate copolymer)

By using Labo Plastomill (made by Toyo Seiki Seisakusho, Ltd., model: 65C150), 100 parts by weight of D-1, which is a resin including the polymer (2) and 10 parts by weight of the polymer (ex 1-1) thus obtained in Example 1(1) were mixed and kneaded with a number of revolution of 80 rpm for 5 min at a chamber temperature of 200°C in a nitrogen gas atmosphere, thereby preparing a resin composition (ex 7-1). Evaluation results of the resin composition (ex 7-1) are shown on Table 2.

(2) Preparation of Molded Article (sheet) from Resin Composition

The resin composition (ex 7-1) thus obtained in Example 7(1) was molded with a mold having a thickness of 2 mm by compression molding for 5 min at 200°C, and then cooled for 5 min at 20°C under compression, thereby preparing a molded article (ex 7-2) having a size of 50 mm × 50 mm × 2 mm.

(3) Evaluation of Water-Repellent and Oil Repellent Properties and Surface Free Energy of Molded Article (Sheet)

The molded article (ex 7-2) thus obtained in Example 7(2) was evaluated in terms of the contact angles of pure water and hexadecane and the surface free energy. Evaluation results of the molded article (ex 7-2) are shown on Table 2.

(4) Calculation of Equivalent Circle Diameter of Dispersed Phase on Cross-Section of Molded Article (sheet)

A reflective electronic image of the cross-section of the molded article (ex 7-2) thus obtained in Example 7(2) was observed with the scanning electron microscope to find 22 dispersed phases per 1000 $\mu m^2$. The equivalent circle diameters of the dispersed phases were worked out to find that $Ra^1$ was 0.85, $Ra^2$ was 0.13, and $Ra^3$ was 0.02, where $Ra^1$ is a ratio of dispersed phases with equivalent circle diameters not less than 0.5 $\mu m$ but less than 2.0 $\mu m$, $Ra^2$ is a ratio of dispersed phases with equivalent circle diameters not less than 2.0 $\mu m$ but less than 3.0 $\mu m$, and $Ra^3$ is a ratio of dispersed phases with equivalent circle diameters not less than 3.0 $\mu m$.

[Example 8]

(1) Preparation of Resin Composition (Resin composition including ethylene-1H,1H,2H,2H-heptadecafluoro-1-decylacrylate-methylacrylate copolymer)

A resin composition (ex 8-1) was prepared as in Example 7(1), except that the amount of the polymer (ex 1-1) added was changed to 7.1 parts by weight. Evaluation results of the resin composition (ex 8-1) are shown on Table 2.

(2) Preparation of Molded Article (sheet) from Resin Composition

A molded article (ex 8-2) having a size of 50 mm × 50 mm × 2 mm was prepared as in Example 7(2), except that the resin composition (ex 7-1) was replaced with the resin composition (ex 8-1) thus obtained in Example 8(1).

(3) Evaluation of Water-Repellent and Oil Repellent Properties and Surface Free Energy of Molded Article (Sheet)

The molded article (ex 8-2) thus obtained in Example 8(2) was evaluated in terms of the contact angles of pure water and hexadecane and the surface free energy. Evaluation results of the molded article (ex 8-2) are shown on Table 2.

[Example 9]

(1) Preparation of Resin Composition (Resin composition including ethylene-1H,1H,2H,2H-heptadecafluoro-1-decylacrylate-methylacrylate copolymer)

A resin composition (ex 9-1) was prepared as in Example 7(1), except that the amount of the polymer (ex 1-1) added was changed to 3.6 parts by weight. Evaluation results of the resin composition (ex 9-1) are shown on Table 2.

(2) Preparation of Molded Article (sheet) from Resin Composition

A molded article (ex 8-2) having a size of 50 mm × 50 mm × 2 mm was prepared as in Example 7(2), except that the resin composition (ex 7-1) was replaced with the resin composition (ex 9-1) thus obtained in Example 9(1).

(3) Evaluation of Water-Repellent and Oil Repellent Properties and Surface Free Energy of Molded Article (Sheet)

The molded article (ex 9-2) thus obtained in Example 9(2) was evaluated in terms of the contact angles of pure water and hexadecane and the surface free energy. Evaluation results of the molded article (ex 9-2) are shown on Table 2.

[Example 10]

(1) Preparation of Resin Composition (Resin composition including ethylene-1H,1H,2H,2H-heptadecafluoro-1-decylacrylate-methylacrylate copolymer)

A resin composition (ex 10-1) was prepared as in Example 7(1), except that the polymer (ex 1-1) was replaced with the polymer (ex 2-1) thus obtained in Example 2(1). Evaluation results of the resin composition (ex 10-1) are shown on Table 2.

(2) Preparation of Molded Article (sheet) from Resin Composition

A molded article (ex 10-2) having a size of 50 mm × 50 mm × 2 mm was prepared as in Example 7(2), except that the resin composition (ex 7-1) was replaced with the resin composition (ex 10-1) thus obtained in Example 10(1).

(3) Evaluation of Water-Repellent and Oil Repellent Properties and Surface Free Energy of Molded Article (Sheet)

The molded article (ex 10-2) thus obtained in Example 10(2) was evaluated in terms of the contact angles of pure water and hexadecane and the surface free energy. Evaluation results of the molded article (ex 10-2) are shown on Table 2.

[Example 11]

(1) Preparation of Resin Composition (Resin composition including ethylene-1H,1H,2H,2H-heptadecafluoro-1-decylacrylate-methylacrylate copolymer)

A resin composition (ex 11-1) was prepared as in Example 7(1), except that the polymer (ex 1-1) was replaced with the polymer (ex 3-1) thus obtained in Example 3(1). Evaluation results of the resin composition (ex 11-1) are shown on Table 2.

(2) Preparation of Molded Article (sheet) from Resin Composition

A molded article (ex 11-2) having a size of 50 mm × 50 mm × 2 mm was prepared as in Example 7(2), except that the resin composition (ex 7-1) was replaced with the resin composition (ex 11-1) thus obtained in Example 11(1).

(3) Evaluation of Water-Repellent and Oil Repellent Properties and Surface Free Energy of Molded Article (Sheet)

The molded article (ex 11-2) thus obtained in Example 11(2) was evaluated in terms of the contact angles of pure water and hexadecane and the surface free energy. Evaluation results of the molded article (ex 11-2) are shown on Table 2.

[Example 12]

(1) Preparation of Resin Composition (Resin composition including ethylene-1H,1H,2H,2H-heptadecafluoro-1-decylacrylate-methylacrylate copolymer)

A resin composition (ex 12-1) was prepared as in Example 7(1), except that the polymer (ex 1-1) was replaced with the polymer (ex 4-1) thus obtained in Example 4(1). Evaluation results of the resin composition (ex 12-1) are shown on Table 2.

(2) Preparation of Molded Article (sheet) from Resin Composition

A molded article (ex 12-2) having a size of 50 mm × 50 mm × 2 mm was prepared as in Example 7(2), except that the resin composition (ex 7-1) was replaced with the resin composition (ex 12-1) thus obtained in Example 12(1).

(3) Evaluation of Water-Repellent and Oil Repellent Properties and Surface Free Energy of Molded Article (Sheet)

The molded article (ex 12-2) thus obtained in Example 12(2) was evaluated in terms of the contact angles of pure water and hexadecane and the surface free energy. Evaluation results of the molded article (ex 12-2) are shown on Table 2.

[Example 13]

(1) Preparation of Resin Composition (Resin composition including ethylene-1H,1H,2H,2H-heptadecafluoro-1-decylacrylate-methylacrylate copolymer)

A resin composition (ex 13-1) was prepared as in Example 7(1), except that the polymer (ex 1-1) was replaced with the polymer (ex 5-1) thus obtained in Example 5(1). Evaluation results of the resin composition (ex 13-1) are shown on Table 2.

(2) Preparation of Molded Article (sheet) from Resin Composition

A molded article (ex 13-2) having a size of 50 mm × 50 mm × 2 mm was prepared as in Example 7(2), except

that the resin composition (ex 7-1) was replaced with the resin composition (ex 13-1) thus obtained in Example 13(1).

(3) Evaluation of Water-Repellent and Oil Repellent Properties and Surface Free Energy of Molded Article (Sheet)

The molded article (ex 13-2) thus obtained in Example 13(2) was evaluated in terms of the contact angles of pure water and hexadecane and the surface free energy. Evaluation results of the molded article (ex 13-2) are shown on Table 2.

[Example 14]

(1) Preparation of Resin Composition (resin composition including ethylene-1H,1H,2H,2H-tridecafluoro-1-octylacrylate-methylacrylate copolymer)

A resin composition (ex 14-1) was prepared as in Example 7(1), except that the polymer (ex 1-1) was replaced with 3.1 parts by weight of the polymer (ex6-1) thus obtained in Example 6(1). Evaluation results of the resin composition (ex 14-1) are shown on Table 2.

(2) Preparation of Molded Article (sheet) from Resin Composition

A molded article (ex 14-2) having a size of 50 mm × 50 mm × 2 mm was prepared as in Example 7(2), except that the resin composition (ex 7-1) was replaced with the resin composition (ex 14-1) thus obtained in Example 14(1).

(3) Evaluation of Water-Repellent and Oil Repellent Properties and Surface Free Energy of Molded Article (Sheet)

The molded article (ex 14-2) thus obtained in Example 14(2) was evaluated in terms of the contact angles of pure water and hexadecane and the surface free energy. Evaluation results of the molded article (ex 14-2) are shown on Table 2.

[Comparative Example 3]

(1) Preparation of Resin Composition (resin composition including ethylene-methylacrylate copolymer)

A resin composition (ref 3-1) was prepared as in Example 7(1), except that the polymer (ex 1-1) was replaced with A-1, which is the precursor polymer (1). Evaluation results of the resin composition (ref 3-1) are shown on Table 2.

(2) Preparation of Molded Article (sheet) from Resin Composition

A molded article (ref 3-2) having a size of 50 mm × 50 mm × 2 mm was prepared as in Example 7(2), except that the polymer (ex 7-1) was replaced with the resin composition (ref 3-1) thus obtained in Comparative Example 3(1).

(3) Evaluation of Water-Repellent and Oil Repellent Properties and Surface Free Energy of Molded Article (Sheet)

The molded article (ref 3-2) thus obtained in Comparative Example 3(2) was evaluated in terms of the contact angles of pure water and hexadecane and the surface free energy. Evaluation results of the molded article (ref 3-2) are shown on Table 2.

[Comparative Example 4]

(1) Preparation of Resin Composition (resin composition including vinylidene fluoride-hexafluoropropene copolymer)

A resin composition (ref 4-1) was prepared as in Example 7(1), except that the polymer (ex 1-1) was replaced with E-1, which is a fluorine-based resin other than the polymer (1) according to the present invention. Evaluation results of the resin composition (ref 4-1) are shown on Table 2.

(2) Preparation of Molded Article (sheet) from Resin Composition

A molded article (ref 4-2) having a size of 50 mm × 50 mm × 2 mm was prepared as in Example 7(2), except that the polymer (ex 7-1) was replaced with the resin composition (ref 4-1) thus obtained in Comparative Example 4(1).

(3) Evaluation of Water-Repellent and Oil Repellent Properties and Surface Free Energy of Molded Article (Sheet)

The molded article (ref 4-2) thus obtained in Comparative Example 4(2) was evaluated in terms of the contact angles of pure water and hexadecane and the surface free energy. Evaluation results of the molded article (ref 4-2) are shown on Table 2.

(4) Calculation of Equivalent Circle Diameter of Dispersed Phase on Cross-Section of Molded Article (sheet)

A reflective electronic image of the cross-section of the molded article (ex 4-2) thus obtained in Comparative Example 4(2) was observed with the scanning electron microscope to find one dispersed phase per 1000 $\mu m^2$. The equivalent circle diameters of the dispersed phases were worked out to find that $Ra^1$ was 0, $Ra^2$ was 0, and $Ra^3$ was 1, where $Ra^1$ is a ratio of dispersed phases with equivalent circle diameters not less than 0.5 $\mu$m but less than 2.0 $\mu$m, $Ra^2$ is a ratio of dispersed phases with equivalent circle diameters not less than 2.0 $\mu$m but less than 3.0 $\mu$m, and $Ra^3$ is a ratio of dispersed phases with equivalent circle diameters not less than 3.0 $\mu$m.

[Comparative Example 5]

(2) Preparation of Molded Article (sheet) from Resin Composition

A molded article (ref 5-2) having a size of 50 mm $\times$ 50 mm $\times$ 2 mm was prepared as in Example 7(2), except that the resin composition (ex 7-1) was replaced with D-1, which is the polymer (2).

(3) Evaluation of Water-Repellent and Oil Repellent Properties and Surface Free Energy of Molded Article (Sheet)

The molded article (ref 5-2) thus obtained in Comparative Example 5(2) was evaluated in terms of the contact angles of pure water and hexadecane and the surface free energy. Evaluation results of the molded article (ref 5-2) are shown on Table 2.

[Table 1]

| Polymer | | Example 1 | Example 2 | Example 3 | Example 4 | Example 5 | Example 6 | Comparative Example 1 |
|---|---|---|---|---|---|---|---|---|
| Structural unit (A) | % | 87.0 | 87.0 | 87.0 | 87.0 | 87.0 | 85.3 | 87.0 |
| Structural unit (B) | % | 9.1 | 6.7 | 3.3 | 2.2 | 1.2 | 10.4 | 0.0 |
| Structural unit (C) | % | 3.9 | 6.3 | 9.7 | 10.8 | 11.8 | 4.2 | 13.0 |
| Structural unit (A) | wt% | 32.5 | 37.8 | 49.1 | 54.1 | 59.6 | 33.6 | 68.6 |
| Structural unit (B) | wt% | 63.0 | 53.7 | 34.0 | 25.3 | 15.6 | 61.3 | 0.0 |
| Structural unit (C) | wt% | 4.5 | 8.4 | 16.9 | 20.6 | 24.8 | 5.1 | 31.4 |
| PS-based numerical average molecular weight Mn | g/mol | 43,000 | 41,000 | 40,000 | 36,000 | 38,000 | 44,000 | 39,000 |
| PS-based weight molecular weight Mw | g/mol | 137,000 | 148,000 | 146,000 | 131,000 | 131,000 | 188,000 | 117,000 |
| PS-based z average molecular weight Mz | g/mol | 407,000 | 500,000 | 480,000 | 417,000 | 415,000 | 695,000 | 328,000 |
| Ratio A defined by Equation (1) | | 0.33 | 0.44 | 0.58 | 0.55 | 0.73 | 0.31 | 0.58 |
| Contact Angle (pure water) | ° | 108 | 110 | 108 | 101 | 104 | 113 | 90 |
| Contact Angle (hexadecane) | ° | 75 | 63 | 60 | 39 | 36 | 76 | 24 |
| Dispersion force component of surface free energy | mN/m | 10.9 | 14.6 | 15.5 | 21.8 | 22.6 | 10.6 | 25.3 |

[Table 2]

| Resin composition | | Example 7 | Example 8 | Example 9 | Example 10 | Example 11 | Example 12 | Example 13 | Example 14 | Comparative Example 3 | Comparative Example 4 | Comparative Example 5 |
|---|---|---|---|---|---|---|---|---|---|---|---|---|
| D-1 | Parts by weight | 100 | 100 | 100 | 100 | 100 | 100 | 100 | 100 | 100 | 100 | 100 |
| Polymer (ex1-1) | Parts by weight | 10 | 7.1 | 3.6 | - | - | - | - | - | - | - | - |
| Polymer (ex2-1) | Parts by weight | - | - | - | 10 | - | - | - | - | - | - | - |
| Polymer (ex3-1) | Parts by weight | - | - | - | - | 10 | - | - | - | - | - | - |
| Polymer (ex4-1) | Parts by weight | - | - | - | - | - | 10 | - | - | - | - | - |
| Polymer (ex5-1) | Parts by weight | - | - | - | - | - | - | 10 | - | - | - | - |
| Polymer (ex6-1) | Parts by weight | - | - | - | - | - | - | - | 3.1 | - | - | - |
| A-1 | Parts by weight | - | - | - | - | - | - | - | - | 10 | - | - |
| E-1 | Parts by weight | - | - | - | - | - | - | - | - | - | 10 | - |
| Contact Angle (pure water) | ° | 112 | 112 | 113 | 111 | 113 | 106 | 102 | 119 | 91 | 100 | 100 |
| Contact Angle (hexadecane) | ° | 79 | 76 | 74 | 70 | 54 | 15 | 9 | 59 | 8 | 6 | 5 |
| Dispersion force component of surface free energy | mN/m | 9. 8 | 10.6 | 11.2 | 12.4 | 17.4 | 26.7 | 27.3 | 15.8 | 27.3 | 27.4 | 27.5 |

INDUSTRIAL APPLICABILITY

According to the present invention, it is possible to provide a polymer which is excellent in the water-repellent property and the oil-repellent property and with which a resin composition with excellent water-repellent property and oil-repellent property can be obtained even in case where an amount of the polymer mixed with another resin is not large.

## Claims

**1.** A polymer comprising a structural unit (A) derived from ethylene, a structural unit (B) represented by Formula (1) below, and at least one kind of structural unit (C) selected from the group consisting of structural units represented by Formula (2) below and a structural unit represented by Formula (3) below,
wherein the number of the structural unit (A) is not less than 70% but not more than 99%, and the total number of the structural unit (B) and the structural unit (C) is not less than 1% but not more than 30%, where the total number of the structural unit (A), the structural unit (B), and the structural unit (C) is 100%, and
wherein the number of the structural unit (B) is not less than 1% but not more than 99%, and the number of the structural unit (C) is not less than 1% but not more than 99%, where the total number of the structural unit (B) and the structural unit (C) is 100%,

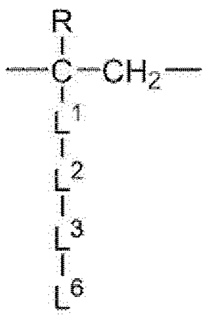

Formula (1)

where R is a hydrogen atom or a methyl group,
$L^1$ is -CO-O-, -O-CO-, or -O-,
$L^2$ is a single bond, $-CH_2-$, $-CH_2-CH_2-$, $-CH_2-CH_2-CH_2-$, - $CH_2-CH(OH)$ $-CH_2-$, or $-CH_2-CH(CH_2OH)-$,
$L^3$ is a single bond, -CO-O-, -O-CO-, -O-, -CO-NH-, - NH-CO-, -CO-NH-CO-, -NH-CO-NH-, -NH-, or $-N(CH_3)-$,
$L^6$ is - $(CH_2)_n-(R^{f2}O)_p-R^{f1}$,
$R^{f1}$ is a $C_1$ to $C_{15}$ alkyl group wherein one or more hydrogen atoms are substituted with one or more fluorine atoms,
$R^{f2}$ is a $C_1$ to $C_{15}$ alkylene group wherein one or more hydrogen atoms are substituted with one or more fluorine atoms,
n is an integer not less than 0 but not more than 10, and p is an integer not less than 0 but not more than 15,
if p is an integer equal to or more than 2, the plurality of $-(R^{f2}O)-$ may be identical with each other or different from each other,
each of the chemical formulae listed in $L^1$, $L^2$, and $L^3$ is such that the left side of the chemical formula corresponds to the upper side of Formula (1) and the right side of the chemical formula corresponds to the lower side of Formula (1),

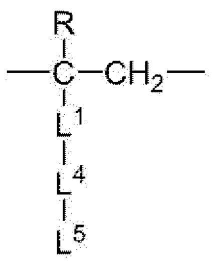

Formula (2)

where R is a hydrogen atom or a methyl group,
$L^1$ is -CO-O-, -O-CO-, or -O-,

$L^4$ is a single bond or a $C_1$ to $C_8$ alkylene group,
$L^5$ is a hydrogen atom, an epoxy group, $-CH(OH)-CH_2OH$, a carboxy group, a hydroxy group, an amino group, or a $C_1$ to $C_4$ alkyl amino group,
each of the chemical formulae listed in $L^1$ is such that the left side of the chemical formula corresponds to the upper side of Formula (2) and the right side of the chemical formula corresponds to the lower side of Formula (2), and

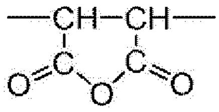

Formula (3).

2. The polymer according to claim 1, wherein a content of the structural unit (B) is 30 wt% or more where the total amount of the structural unit (A), the structural unit (B), and the structural unit (C) is 100 wt%.

3. The polymer according to claim 1 or 2, wherein $R^{f1}$ constituting $L^6$ in structural unit (B) represented by Formula (1) is $CF_3(CF_2)_a$- (where a is an integer not less than 3 but not more than 9).

4. The polymer according to any one of claims 1 to 3, wherein the polymer is cross-linked.

5. The polymer according to any one of claims 1 to 4, wherein the polymer has a gel fraction of 20% or more.

6. The polymer according to any one of claims 1 to 5, wherein the total number of the structural unit (A), the structural unit (B), and the structural unit (C) is 90% or more, where the total number of all structural units contained in the polymer is 100%.

7. A molded article comprising the polymer according to any one of claims 1 to 6.

8. A resin composition comprising:

a polymer (1) which is the polymer according to claim 1; and
a polymer (2) which is a polymer whose melting peak temperature or glass transition temperature observed by differential scanning calorimetry is not less than 50°C but not higher than 180°C, wherein an excluding polymer defined below is excluded from the polymer (2),
wherein a content of the polymer (1) is not less than 1wt% but not more than 99 wt% and a content of the polymer (2) is not less than 1wt% but not more than 99 wt%, where the total amount of the polymer (1) and the polymer (2) is 100 wt%,
the excluding polymer being such a polymer that comprises a structural unit (A) derived from ethylene, a structural unit (B) represented by Formula (1) below, and at least one kind of structural unit (C) selected from the group consisting of structural units represented by Formula (2) below and a structural unit represented by Formula (3) below,
wherein the number of the structural unit (A) is not less than 70% but not more than 99%, and the total number of the structural unit (B) and the structural unit (C) is not less than 1% but not more than 30%, where the total number of the structural unit (A), the structural unit (B), and the structural unit (C) is 100%, and
wherein the number of the structural unit (B) is not less than 1% but not more than 99%, and the number of the structural unit (C) is not less than 1% but not more than 99%, where the total number of the structural unit (B) and the structural unit (C) is 100%,

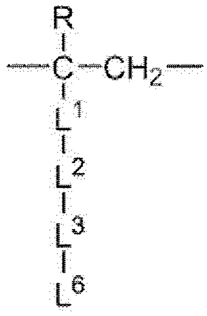

Formula (1)

where R is a hydrogen atom or a methyl group,
$L^1$ is -CO-O-, -O-CO-, or -O-,
$L^2$ is a single bond, $-CH_2-$, $-CH_2-CH_2-$, $-CH_2-CH_2-CH_2-$,$-CH_2-CH(OH)-CH_2-$, or $-CH_2-CH(CH_2OH)-$,
$L^3$ is a single bond, -CO-O-, -O-CO-, -O-, -CO-NH-, - NH-CO-, -CO-NH-CO-, -NH-CO-NH-, -NH-, or $-N(CH_3)-$,
$L^6$ is - $(CH_2)_n-(R^{f2}O)_p-R^{f1}$,
$R^{f1}$ is a $C_1$ to $C_{15}$ alkyl group wherein one or more hydrogen atoms are substituted with one or more fluorine atoms,
$R^{f2}$ is a $C_1$ to $C_{15}$ alkylene group wherein one or more hydrogen atoms are substituted with one or more fluorine atoms,
n is an integer not less than 0 but not more than 10, and p is an integer not less than 0 but not more than 15,
if p is an integer equal to or more than 2, the plurality of $-(R^{f2}O)-$ may be identical with each other or different from each other,
each of the chemical formulae listed in $L^1$, $L^2$, and $L^3$ is such that the left side of the chemical formula corresponds to the upper side of Formula (1) and the right side of the chemical formula corresponds to the lower side of Formula (1),

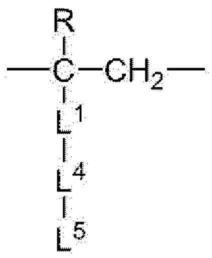

Formula (2)

where R is a hydrogen atom or a methyl group,
$L^1$ is -CO-O-, -O-CO-, or -O-,
$L^4$ is a single bond or a $C_1$ to $C_8$ alkylene group,
$L^5$ is a hydrogen atom, an epoxy group, $-CH(OH)-CH_2OH$, a carboxy group, a hydroxy group, an amino group, or a $C_1$ to $C_4$ alkyl amino group,
each of the chemical formulae listed in $L^1$ is such that the left side of the chemical formula corresponds to the upper side of Formula (2) and the right side of the chemical formula corresponds to the lower side of Formula (2), and

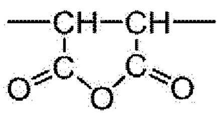

Formula (3).

**9.** A production method for the polymer according to any one of claims 1 to 6, the method comprising:

a step of reacting a polymer with one or more kind of compound ($\alpha$),
the polymer being such a polymer that comprises a structural unit (A) derived from ethylene, and at least one kind of structural unit (C) selected from the group consisting of structural units represented by Formula (2) below and a structural unit represented by Formula (3) below, wherein the number of the structural unit (A) is not less

than 70% but not more than 99%, where the total number of the structural unit (A) and the structural unit (C) is 100%, and

the one or more kind of compound (α) being selected from the group consisting of a compound represented by Formula (11) below, a compound represented by Formula (12) below, a compound represented by Formula (13) below, a compound represented by Formula (14) below, a compound represented by Formula (15) below, a compound represented by Formula (16) below, a compound represented by Formula (17) below, and a compound represented by Formula (18) below,

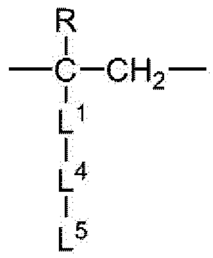

Formula (2)

where R is a hydrogen atom or a methyl group,

$L^1$ is -CO-O-, -O-CO-, or -O-,

$L^4$ is a single bond or a $C_1$ to $C_8$ alkylene group,

$L^5$ is a hydrogen atom, an epoxy group, $-CH(OH)-CH_2OH$, a carboxy group, a hydroxy group, an amino group, or a $C_1$ to $C_4$ alkyl amino group,

each of the chemical formulae listed in $L^1$ is such that the left side of the chemical formula corresponds to the upper side of Formula (2) and the right side of the chemical formula corresponds to the lower side of Formula (2), and

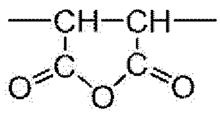

Formula (3)

$R^{f1}-(OR^{f2})_p-(CH_2)_n-OH$ Formula (11),

$R^{f1}-(OR^{f2})_p-(CH_2)_n-NH_3$ Formula (12),

$R^{f1}-(OR^{f2})_p-(CH_2)_n-X$ Formula (13),

$R^{f1}-(OR^{f2})_p-(CH_2)_n-COOH$ Formula (14),

$R^{f1}-(OR^{f2})_p-(CH_2)_n-CONH_2$ Formula (15),

$R^{f1}-(OR^{f2})_p-(CH_2)_n-COX$ Formula (16),

$R^{f1}-(OR^{f2})_p-(CH_2)_n-NHCONH_2$ Formula (17), and

$R^{f1}-(OR^{f2})_p-(CH_2)_n-NCO$ Formula (18),

where $R^{f1}$ is a $C_1$ to $C_{15}$ alkyl group wherein one or more hydrogen atoms are substituted with one or more fluorine atoms,

$R^{f2}$ is a $C_1$ to $C_{15}$ alkylene group wherein one or more hydrogen atoms are substituted with one or more fluorine atoms,

n is an integer not less than 0 but not more than 10, and p is an integer not less than 0 but not more than 15,

X is a halogen atom, and

if p is an integer equal to or more than 2, the plurality of $-(R^{f2}O)-$ may be identical with each other or different from each other.

**10.** A molded article comprising an olefin polymer having a fluorine atom and a thermoplastic resin having no fluorine atom,
wherein 10 or more dispersed phases of the olefin polymer having a fluorine atom are present on a cross-section of the molded article per 1000 $\mu m^2$, and
equivalent circle diameters of the dispersed phases meet Equation (11) below,

$$Ra^1 > Ra^2 > Ra^3 \qquad (11),$$

where $Ra^1$ is a ratio of dispersed phases with equivalent circle diameters not less than 0.5 $\mu$m but less than 2.0 $\mu$m, $Ra^2$ is a ratio of dispersed phases with equivalent circle diameters not less than 2.0 $\mu$m but less than 3.0 $\mu$m, and $Ra^3$ is a ratio of dispersed phases with equivalent circle diameters not less than 3.0 $\mu$m.

**11.** The molded article according to claim 10, wherein a dispersion force component $\gamma^d$ of a surface free energy of the molded article is 25 mN/m or less.

[Fig. 1]

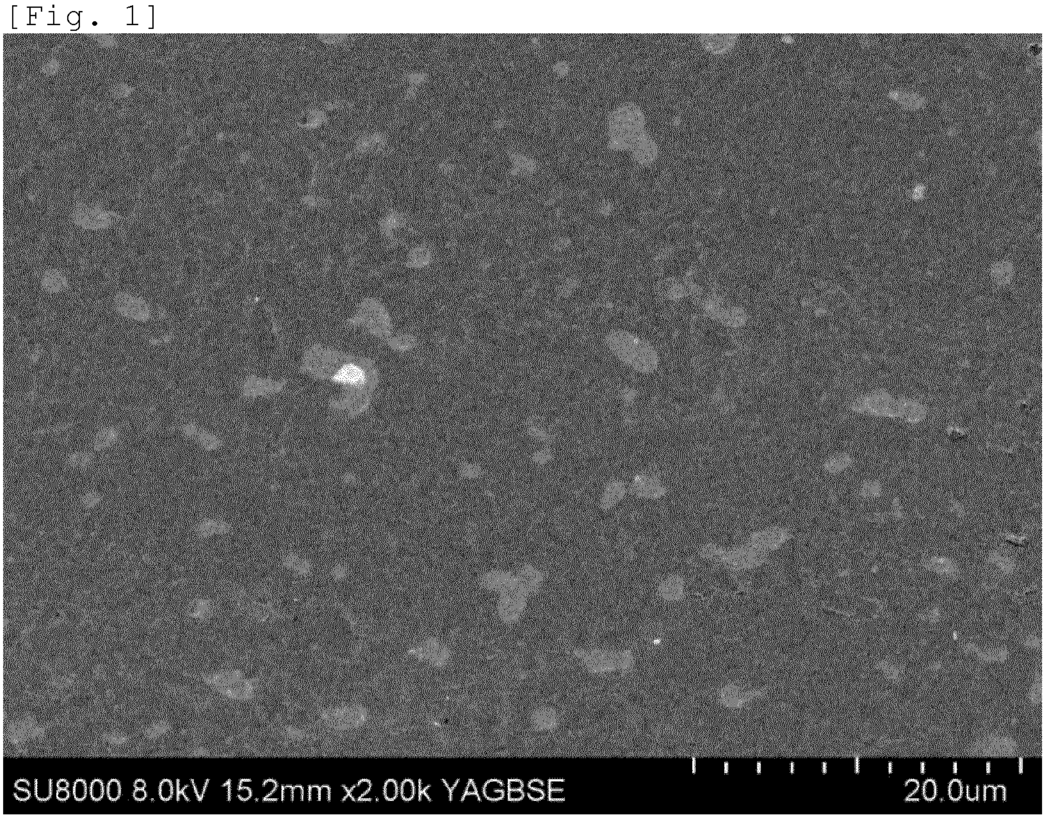
SU8000 8.0kV 15.2mm x2.00k YAGBSE
20.0um

[Fig. 2]

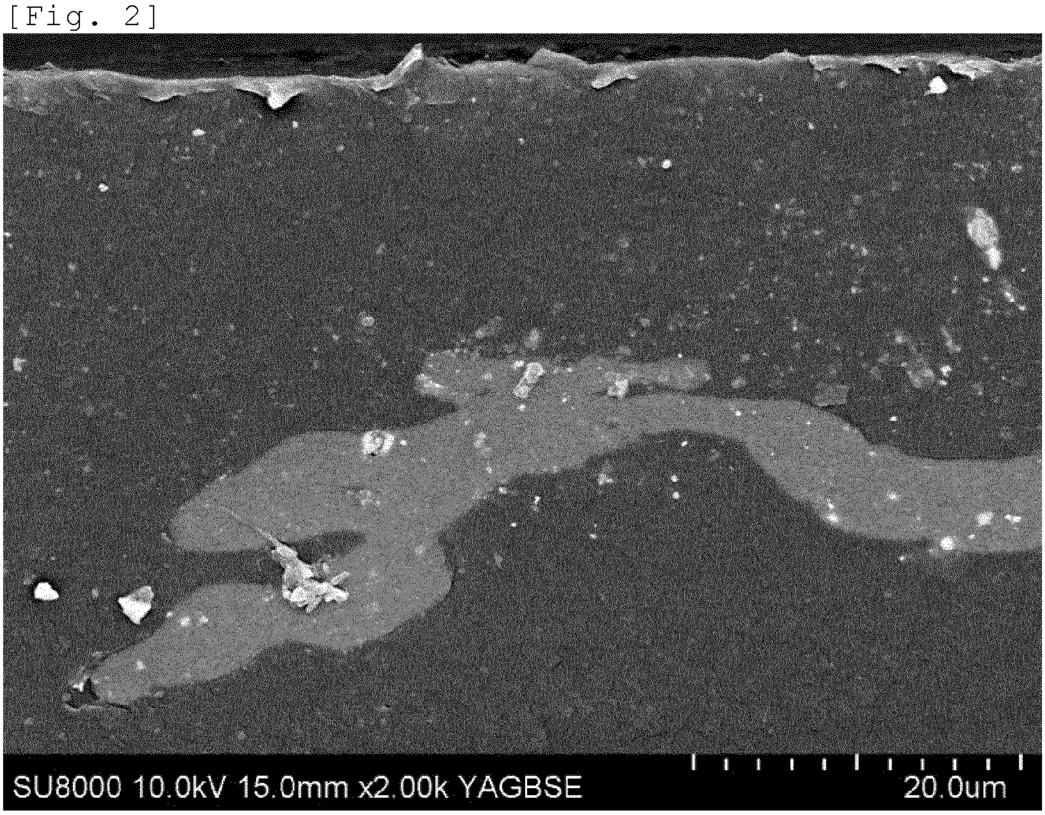
SU8000 10.0kV 15.0mm x2.00k YAGBSE
20.0um

## INTERNATIONAL SEARCH REPORT

International application No.
PCT/JP2019/004784

A. CLASSIFICATION OF SUBJECT MATTER
Int.Cl. C08F210/02(2006.01)i, C08F8/24(2006.01)i, C08L23/08(2006.01)i, C08L23/28(2006.01)i

According to International Patent Classification (IPC) or to both national classification and IPC

B. FIELDS SEARCHED

Minimum documentation searched (classification system followed by classification symbols)
Int.Cl. C08F210/02, C08F8/24, C08L23/08, C08L23/28

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 2005-519174 A (E.I. DU PONT DE NEMOURS AND COMPANY) 30 June 2005, claims, paragraphs [0022], [0025], [0026], [0030]-[0032], [0044]-[0062] & US 2005/0090633 A1, claims, paragraphs [0024], [0026]-[0029], [0044]-[0046], [0061]-[0079] & WO 2003/076483 A2 & EP 1481015 A2 & CA 2477873 A | 1-3, 6-8, 10, 11<br>4, 5, 9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 May 2019 (13.05.2019) | 21 May 2019 (21.05.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/004784

C (Continuation). DOCUMENTS CONSIDERED TO BE RELEVANT

| Category* | Citation of document, with indication, where appropriate, of the relevant passages | Relevant to claim No. |
|---|---|---|
| X<br>A | Thomas Runzi, Stefan Mecking, "Saturated Polar-Substituted Polyethylene Elastomers From Insertion Polymerization", ADVANCED FUNCTIONAL MATERIALS, 2014, vol. 24, 387–395 | 1-8, 10, 11<br>9 |
| A | JP 2016-222911 A (JAPAN POLYETHYLENE CORP.) 28 December 2016, entire text (Family: none) | 1-11 |
| A | WO 2015/182702 A1 (ASAHI GLASS CO., LTD.) 03 December 2015, entire text & US 2017/0058065 A1, full text & EP 3150645 A1 & CN 106459291 A | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6025609 A


### Non-patent literature cited in the description


- **KAKUGO, M. ; NAITO, Y ; MIZUNUMA, K. ; MIYATAKE, T.** *Macromolecules,* 1982, vol. 15, 1150
- Size Exclusion Chromatography. Springer, 1999